# EUROPÄISCHE PATENTANMELDUNG

(11) **EP 2 085 442 A1**
(43) Veröffentlichungstag der Anmeldung: **05.08.2009**
(21) Anmeldenummer: 08101211.4
(22) Anmeldetag: 01.02.2008
(51) Int. Cl.: C09D 183/04, C09D 183/08, B05D 5/08, C09D 4/00

(54) **Fluorhaltige Zusammensetzungen mit verbesserten Oberflächeneigenschaften**

(71) Anmelder: Evonik Degussa GmbH, 45128 Essen (DE)
(72) Erfinder: Weinelt, Frank, Dr., 48727 Billerbeck (DE); Maier, Alois, Dr., 84549 Engelsberg (DE); Steidl, Norbert, Dr., 83361 Kienberg (DE); Schroers, Michael, Dr., 65063 Ludwigshafen am Rhein (DE)

(57) **Zusammenfassung**

Es werden neuartige fluorhaltige Zusammensetzungen mit verbesserten Oberflächeneigenschaften zur permanten öl- und wasserabweisenden Oberflächenbehandlung bzw. -modifizierung von mineralischen und nichtmineralischen Untergründen für verschiedene Anwendungsbereich beansprucht, die in zweikomponentiger Form vorliegen. Bei einem gleichzeitig erniedrigten Fluorgehalt weisen diese Zusammensetzungen deutlich verbesserte anwendungstechnische Eigenschaften auf und sie können in Kombination mit geeigneten Stabilisierungskomponenten und hydrophilen Silankomponenten zusätzlich hinsichtlich ihrer hydrophoben, oleophoben und schmutzabweisenden Eigenschaften optimiert werden, wobei sie insgesamt eine ausgezeichnete Lagerstabilität aufweisen.

Übersicht Komponenten DCO Y

(A)(i)
Fluorsilan-Komponente
(A)(ii)
vorgefertigte Fluorsilan-Komponente
(B)(i)
(Per)fluoralkylalkohol-Komponente
(B)(ii)
(Per)fluoralkylalkylenamin-Komponente
(B)(iii)
fluormodifizierte Makromonomere oder Telechele
(B)(iv)
(Per)fluoralkylalkylenisocyanat-Komponente
(B)(v)
(Per)fluoralkylcarbonsäurederivat-Komponente
(C) (i)
Isocyanatoalkylalkoxysilan-Komponente
(C)(ii)
andere Isocyanatosilan-Komponente
(D)(i)
Polyisocyanat-Komponente
(D)(ii)
Polyisocyanat-Komponente
(E)(i)
Aminoalkylalkoxysilan-Komponente
(E)(ii)
andere Aminosilan-Komponente
(E)(iii)
nichtionische Silan-Komponente
(E)(iv)
Aminosilikonöl-Komponente
(E)(v)
niedermolekulare Silan-Komponente
(E)(vi)
hydrophilierte wässrige Silan-Komponente
(F)(i)
monofunktionelle Hexafluorpropenoxid-Komponente
(F)(ii)
difunktionelle Hexafluorpropenoxid-Komponente
(G)(i)
monofunktionelle Polyalkylenglykol-Komponente
(G)(ii)
monofunktionelle Polyoxyalkylenamin-Komponente
(G)(iii)
polyfunktionelle Polyalkylenglykol-Komponente
(G)(iv)
polyfunktionelle Polyoxyalkylenamin-Komponente
(H)
Triazin-Komponente
(I)
Hydroxycarbonsäure-Komponente
(J)
NCN-Komponente
(K)
Carbonyl-Komponente
(L)(i)
Mercaptoalkylalkoxysilan-Komponente
(L)(ii)
andere Mercaptosilan-Komponente
(M)
(Per)fluoralkylalkylenoxid-Komponente
(N)(i)
Epoxyalkylolalkoxysilan-Komponente
(N)(ii)
andere Epoxysilan-Komponente
(O)
Polyamin-Komponente
(P)(i)
epoxyfunktionelle polyhedrale oligomere Polysilasesquioxan-Komponente
(P)(ii)
aminofunktionelle polyhedrale oligomere Polysilasesquioxan-Komponente
(P)(iii)
(meth)acryloylfunktionelle polyhedrale oligomere Polysilasesquioxan-Komponente
(Q)(i)
Aminoalkohol-Komponente
(Q)(ii)
andere Aminoalkohol-Komponente
(R)
Katalysator-Komponente
(S)(i)
Lösemittel-Komponente
(S)(ii)
Lösemittel-Komponente
(T)
Stabilisierungs-Komponente
(U)(i)
Säure-Komponente
(U)(ii)
Säure-Komponente
(U)(iii)
Säure-Komponente
(U)(iv)
Säure-Komponente
(V)
hydrophile Silan-Komponente
(W)
Neutralisations-Komponente
(Y)(i)
Formulierungs-Komponente
(Y)(ii)
(reaktive) Nanopartikel-Komponente
(Z)
Funktionalisierungs-Komponente

## Beschreibung

Fluorhaltige Organosilane und deren Co- bzw. Polykondensate, die zur gleichzeitigen Hydrophobierung und Oleophobierung mineralischer und nichtmineralischer Substrate eingesetzt werden können, sind beispielsweise aus EP 0 846 715 A1, EP 846 716 A1, EP 846 717 A1 und EP 0 960 921 A1, DE-OS 199 55 047, DE-PS 83 40 02, US 3 013 066, GB 935 380, DE-OS 31 00 655, EP 0 382 557 A1, EP 0 493 747 B1, EP 0 587 667 B1 und DE-OS 195 44 763 hinreichend bekannt.

In den genannten Schriften EP 0 846 715 A1, EP 846 716 A1, EP 846 717 A1, EP 0 960 921 und DE-OS 199 55 047 werden (per)fluoralkylfunktionelle Organopolysiloxane auf Wasser- und/oder Alkoholbasis beschrieben, die auf (per)fluoralkylfunktionellen Organosilanen basieren. Die beschriebenen (per)fluoralkylfunktionellen Organosilane wie z. B. Tridecafluor-1,1,2,2-tetrahydrooctyl-trimethoxysilan und Tridecafluor-1,1,2,2-tetrahydrooctyl-triethoxysilan sind nur über technisch aufwendige Hydrosilylierungsreaktionen von Trialkoxysilanen an ungesättigte Verbindungen, beispielsweise an (Per)fluoralkylalkene zugänglich.

Da die technische Verfügbarkeit der (Per)fluoralkylalkene und damit der (per)fluoralkylfunktionellen Organosilane begrenzt ist, bestand der Bedarf nach alternativen fluorhaltigen Zusammensetzungen, die hinsichtlich der (Per)fluoralkyl-Komponente eine größere synthetische Bandbreite ermöglichen und zugleich kostengünstiger als die bekannten Systeme hergestellt werden können. Gerade in der Bauchemie besteht ein Bedarf nach kostengünstigen, leistungsfähigen und breit einsetzbaren Hydrophobierungs- und Oleophobierungsmitteln für den Bautenschutz.

Üblicherweise werden (per)fluoralkylfunktionelle Organosilane nicht in konzentrierter Form verwendet, da es sich hierbei um ausgesprochen hochpreisige Produkte handelt. Ferner sind (per)fluoralkylfunktionelle Organosilane in Wasser nicht löslich.

Um hinreichend stabile Lösungen bzw. Zubereitungen (per)fluoralkylfunktioneller Organosilane und deren Co- bzw. Polykondensate zu erhalten, wurden organische Lösemittel oder auch Emulgatoren eingesetzt (beispielsweise DE-OS 34 47 636, DE-PS 36 13 384, WO 95/23830 A1, WO 95/2 3804 A1, WO 96/06895 A1, WO 97/23432 A1, EP 0 846 716 A1).

Ein Nachteil lösemittel- bzw. emulgatorhaltiger Zubereitungen von (per)fluoralkylfunktionellen Organosilanen sowie von (per)fluoralkylfunktionellen Organopolysiloxanen mit einem hohen Alkoxygruppenanteil besteht darin, dass solche Systeme aus Gründen der Arbeitssicherheit und unter ökologischen Gesichtspunkten unerwünscht sind. Man ist deshalb zunehmend bestrebt, wasserbasierende Systeme mit einem möglichst geringen Anteil an flüchtigen, organischen Verbindungen (VOC, Volatile Organic Compounds) bereitzustellen. Vorteilhaft an weiterentwickelten 2-komponentigen Systemen kann natürlich auch eine verbesserte Wirkung sein.

Stickstoffhaltige bzw. aminoalkyl- und (per)fluoralkylfunktionelle und im Wesentlichen alkoxygruppenfreie Organopolysiloxane sind als wasserlösliche Bestandteile in ansonsten emulgator- bzw. tensidfreien Mitteln zur öl-, wasser- und schmutzabweisenden Ausrüstung von Oberflächen bekannt (beispielsweise DE-OS 15 18551, EP 0 738 771 A1, EP 0 846 717 A1).

Bei den genannten wasserbasierenden Systemen muss stets ein relativ hoher Anteil an Amino-Gruppen bzw. protonierten Amino-Gruppen verwirklicht sein, um eine gute Wasserlöslichkeit zu gewährleisten, dies erweist sich jedoch in der Praxis als kontraproduktiv:
Bedingt durch die Hydrophilie der Amino-Gruppen bzw. protonierten Amino-Gruppen wird nämlich dem Bestreben entgegengewirkt, ein System bereitzustellen, das möglichst hydrophobe Eigenschaften aufweist.
Außerdem wird durch die Oxidationsempfindlichkeit (Aminoxid-Bildung) der Amino-Gruppen bzw. protonierten Amino-Gruppen eine Anfeuerung der ausgerüsteten Oberflächen hervorgerufen, was zu einer ästhetischen Beeinträchtigung führt.

Der vorliegenden Erfindung lag daher die Aufgabe zugrunde, neuartige fluorhaltige Zusammensetzungen mit verbesserten Oberflächeneigenschaften zur permanenten öl- und wasserabweisenden Oberflächenbehandlung bzw. -modifizierung von mineralischen und nichtmineralischen Untergründen für verschiedene Anwendungsbereiche zu entwickeln, welche die genannten Nachteile des Standes der Technik nicht aufweisen, sondern sehr gute anwendungstechnische Eigenschaften besitzen und gleichzeitig unter Berücksichtigung ökologischer, ökonomischer und physiologischer Aspekte hergestellt werden können.

Diese Aufgabe wurde erfindungsgemäß durch die Bereitstellung von flüssigen fluorhaltigen und zweikomponentigen Zusammensetzungen mit einem auf das Festharz bezogenen Fluorgehalt von 5 bis 75 Gew.-% für die permanente Oberflächenbehandlung poröser und nicht poröser Substrate gelöst, dadurch erhältlich, dass man zunächst
a) eine Fluorsilan-Komponente (A)(i) mit einem polymer gebundenen Fluorgehalt von 5 bis 95 Gew.-% und einem polymer gebundenen Siliziumgehalt von 95 bis 5 Gew.-%, dadurch herstellt, in dem man
   a₁) 5 bis 95 Gew.-% einer (Per)fluoralkylalkohol-Komponente (B)(i) und/oder einer (Per)fluoralkylalkylenamin-Komponente (B)(ii), bestehend aus Perfluoralkylalkoholen mit terminalen Methylen-Gruppen (Kohlenwasserstoff-Spacern) der allgemeinen Formel

      CF₃-(CF₂)ₓ-(CH₂)_{y}-O-A_{z}-H

      oder

      CR₃-(CR₂)ₓ-(CH₂)_{y}-O-A_{z}-H

      mit x = 3 - 20, y = 1 - 6, z = 0 - 100, R = unabhängig voneinander H, F, CF₃, A = CRⁱRⁱⁱ-CRⁱⁱⁱ-R^{iv}-O oder (CRⁱRⁱⁱ)ₐ-O oder CO-(CRⁱRⁱⁱ)_{b}-O mit Rⁱ, Rⁱⁱ, Rⁱⁱⁱ, R^{iv} = unabhängig voneinander H, Alkyl, Cycloalkyl, Aryl oder beliebiger organischer Rest mit jeweils1 - 25 C-Atomen, a, b = 3 - 5, wobei es sich bei der Polyalkylenoxid-Struktureinheit A_{z} um Homopolymere, Copolymere oder Blockcopolymere aus beliebigen Alkylenoxiden oder um Polyoxyalkylenglykole oder um Polylactone handelt,
      und/oder
      einem Hexafluorpropenoxid (HFPO)-Oligomer-Alkohol der allgemeinen Formel

      CF₃-CF₂-CF₂-[O-CF(CF₃)-CF₂]ₓ-O-CF(CF₃)-(CH₂)_{y}-O-A_{z}-H

      und/oder
      fluormodifizierte Makromonomere oder Telechelen (B)(iii), [bspw. hydroxyfunktionelle Umsetzungsprodukte der Komponenten (F)(i) und (F)(ii) mit den Komponenten (Q)(i) und (Q)(ii)] mit einem polymer gebundenem Fluorgehalt von 1 bis 99 Gew.-%, einer Molekularmasse von 100 bis 10 000 Dalton und jeweils einer oder mehreren reaktiven (cyclo)aliphatischen und/oder aromatischen Hydroxyl-Gruppe(n) und/oder primären und/oder sekundären Amino-Gruppe(n) und/oder Mercapto-Gruppe(n), enthaltend die in der Hauptkette und/oder Seitenkette intrachenal und/oder lateral und/oder terminal angeordneten Strukturelemente

      -(CF₂-CF₂)ₓ-

      und/oder

      -(CR₂-CR₂)ₓ-

      und/oder

      -[CF₂-CF(CF₃)-O]ₓ-

      und/oder

      -(CR₂-CR₂-O)ₓ-

      mit 95 bis 5 Gew.-% einer Isocyanatoalkylalkoxysilan-Komponente (C)(i), bestehend aus einem 3-Isocyanatopropyltrialkoxysilan und/oder einem 3-Isocyanatopropylalkoxyalkylsilan und/oder Isocyanatoalkylalkoxysilanen der allgemeinen Formel

      OCN-(CR²₂)_{y'}-Si(OR¹)_{3-x'}R²_{x'}

      mit x' = 0 - 2, y' = 1 - 3 und R¹, R² = unabhängig voneinander Alkyl, Cycloalkyl, Aryl, beliebiger organischer Rest jeweils mit 1 - 25 C-Atomen
      und/oder einer anderen Isocyanatosilan-Komponente (C)(ii) mit einer Molekularmasse von 200 bis 2 000 Dalton und jeweils einer oder mehreren (cyclo-)aliphatischen und/oder aromatischen Isocyanato-Gruppe(n) und einer oder mehreren Alkoxysilan-Gruppe(n), wobei die Umsetzung vorzugsweise im Molverhältnis 1 : 1 in beliebiger Weise durchgeführt wird,
      und/oder
   a_{2.1}) 5 bis 95 Gew.-% einer (Per)fluoralkylalkohol-Komponente (B)(i) und/oder einer (Per)fluoralkylalkylenamin-Komponente (B)(ii) und/oder fluormodifizierte Makromonomere oder Telechelen (B)(iii) mit 75 bis 5 Gew.-% einer Polyisocyanat-Komponente (D)(i), bestehend aus mindestens einem Diisocyanat, Polyisocyanat, Polyisocyanat-Derivat oder Polyisocyanat-Homologen mit zwei oder mehreren (cyclo-)aliphatischen und/oder aromatischen Isocyanat-Gruppen gleicher oder unterschiedlicher Reaktivität umsetzt, wobei die Reaktionsbedingungen und die Selektivitäten der Komponenten (B) und (D) so gewählt werden, dass nur eine Isocyanat-Gruppe der Komponente (D)(i) mit der Komponente (B) reagiert,
   a_{2.2}) anschließend das Preaddukt aus Stufe a_{2.1}) mit 75 bis 5 Gew.-% einer Aminoalkylalkoxysilan-Komponente (E)(i), bestehend aus einem 3-Aminopropyltrialkoxysilan und/oder einem (substituierten) 3-Aminopropylalkoxyalkylsilan der allgemeinen Formel

      R³₂N-(CR³₂)_{y'}-Si(OR¹)_{3-x'}H²_{x'}

      mit x' = 0 - 2, y' = 1 - 6 und R¹, R² = unabhängig voneinander Alkyl, Cycloalkyl, Aryl, beliebiger organischer Rest mit jeweils 1 - 25 C-Atomen, R³ = unabhängig voneinander Alkyl, Cycloalkyl, Aryl, beliebiger organischer Rest mit 1 - 25 C-Atomen, (R¹O)_{3-x'}R²_{x'}Si(CR)³_{y'}, R^{3'}₂N-(CR^{3'}₂)_{y'}-[NH-(CR^{3'}₂)_{y'}]_{n'} mit n' = 0 - 10, wobei R^{3'} = unabhängig voneinander Alkyl, Cycloalkyl, Aryl, beliebiger organischer Rest mit jeweils 1 - 25 C-Atomen
      und/oder einer von (E) (i) verschiedenen Aminosilan-Komponente (E)(ii) mit einer Molekularmasse von 200 bis 2 000 Dalton und jeweils einer oder mehreren primären und/oder sekundären und/oder tertiären Amino-Gruppe(n) und einer oder mehreren Alkoxysilan-Gruppe(n), weiter umsetzt, wobei die Umsetzung vorzugsweise im Molverhältnis 1 : 1 : 1 in beliebiger Weise durchgeführt wird,
      und/oder
   a₃) 5 bis 95 Gew.-% einer (Per)fluoralkylalkylenisocyanat-Komponente (B)(iv) der allgemeinen Formel

      CF₃-(CF₂)ₓ-(CH₂)_{y}-NCO

      oder

      CR₃-(CR₂)ₓ-(CH₂)_{y}-NCO

      mit einer Molekularmasse von 200 bis 2 000 Dalton und einer oder mehreren (cyclo)aliphatischen und/oder aromatischen Isocyanato-Gruppe(n) mit 95 bis 5 Gew.-% einer Aminosilan-Komponente (E)(i) und/oder (E)(ii) umsetzt, wobei ein Addukt der allgemeinen Formel

      (B)(iv)-(E)

      mit (B)(iv) = protonierte Komponente (B)(iv) und (E) = deprotonierte Komponenten (E)(i) und/oder (E)(i)
      erhalten wird, wobei die Umsetzung vorzugsweise im Molverhältnis 1 : 1 in beliebiger Weise durchgeführt wird,
      und/oder
   a₄) Umsetzungsprodukte mit zwei oder mehreren Hydroxyl-Gruppen aus 5 bis 95 Gew.-% einer (Per)fluoralkylalkancarbonsäure(derivat)-Komponente (B)(v) der allgemeinen Formel

      CF₃-(CF₂)ₓ-(CH₂)_{y}-COR⁴

      oder

      CR₃-(CR₂)ₓ-(CH₂)_{y}-COR⁴

      worin R⁴ = F, Cl, Br, I, OH, OMe, OEt
      mit einer Molekularmasse von 200 bis 2 000 Dalton und einer oder mehreren Carbonsäure(derivat)-Gruppe(n) mit 95 bis 5 Gew.-% einer Aminosilan-Komponente (E)(i) und/oder (E)(ii), wobei unter Abspaltung von HR⁴ ein Addukt der allgemeinen Formel

      (B)(V)-(E)

      (idealisiert)
      mit (B)(v) = Carbonylrest der Komponente (B)(v) und (E) = deprotonierte Komponenten (E)(i) und/oder (E)(i)
      erhalten wird und die Umsetzung vorzugsweise im Molverhältnis 1 : 1 in beliebiger Weise durchgeführt wird,
      und/oder
   a₅) 5 bis 95 Gew.-% einer Hexafluorpropenoxid-Komponente (F)(i), bestehend aus monofunktionellen Hexafluorpropenoxid-Oligomeren der allgemeinen Formel

      CF₃-CF₂-CF₂-O-(CF(CF₃)-CF₂-O)ₙ-CF(CF₃)-COR⁴

      mit m = 1 - 20
      mit 95 bis 5 Gew.-% einer Aminosilan-Komponente (E)(i) und/oder (E)(ii) umsetzt, wobei unter Abspaltung von HR⁴ Addukte der allgemeinen Formel

      (F)(i)-(E)

      worin (F)(i) = Carbonylrest der Komponente (F)(i)) und (E) = deprotonierte Komponenten (E)(i) und/oder (E)(ii)
      erhalten werden und die Umsetzung vorzugsweise im Molverhältnis 1 : 1 in beliebiger Weise durchgeführt wird,
      und/oder
   a₆) 5 bis 95 Gew.-% einer Hexafluorpropenoxid-Komponente (F)(ii), bestehend aus difunktionellen Hexafluorpropenoxid-Oligomeren der allgemeinen Formel

      R⁴OC-CF(CF₃)-(O-CF₂-CF(CF₃))ₙ-O-(CF₂)ₒ-O-

      (CF(CF₃)-CF₂-O)ₙ-CF(CF₃)-COR⁴

      mit n = 1 - 10, o = 2 - 6
      mit 95 bis 5 Gew.-% einer Aminoalkylalkoxysilan-Komponente (E)(i) und/oder einer (E)(ii) umsetzt, wobei unter Abspaltung von HR⁴ Addukte der allgemeinen Formel

      (E)-(F)(ii)-(E)

      mit (F)(ii) = Carbonylrest der Komponente (F)(i)) und (E) = deprotonierte Komponenten (E)(i) und/oder (E)(ii)
      erhalten werden und die Umsetzung vorzugsweise im Molverhältnis 1 : 1 in beliebiger Weise durchgeführt wird,
      und/oder
   a₇) 5 bis 95 Gew.-% einer (Per)fluoralkylalkohol-Komponente (B)(i) und/oder einer (Per)fluoralkylalkylenamin-Komponente (B)(ii) und/oder eines fluormodifizierten Makromonomeren oder Telechelen (B)(iii) mit 75 bis 5 Gew.-% einer Aminoalkylalkoxysilan-Komponente (E)(i) und/oder (E)(ii) und 75 bis 5 Gew.-% einer Polyisocyanat-Komponente (D)(ii), bestehend aus einem Triisocyanat, Polyisocyanat, Polyisocyanat-Derivat oder Polyisocyanat-Homologen mit mindestens drei (cyclo-)aliphatischen und/oder aromatischen Isocyanat-Gruppen gleicher oder unterschiedlicher Reaktivität, umsetzt, wobei die Umsetzung im Falle trifunktioneller Isocyanate vorzugsweise im Molverhältnis 2 : 1 : 1 oder 1 : 2 : 1 in beliebiger Weise durchgeführt wird,
      und/oder
   a₈) 5 bis 75 Gew.-% einer (Per)fluoralkylalkohol-Komponente (B)(i) und/oder einer (Per)fluoralkylalkylenamin-Komponente (B)(ii) und/oder eines fluormodifizierten Makromonomeren oder Telechelen (B)(iii) mit 50 bis 5 Gew.-% einer Aminoalkylalkoxysilan-Komponente (E)(i) und/oder (E)(ii), 50 bis 5 Gew.-% einer monofunktionellen Polyalkylenglykol-Komponente (G)(i) und/oder einer monofunktionellen Polyoxyalkylenamin-Komponente (G)(ii), bestehend aus monohydroxyfunktionellen Alkyl/Cycloalkyl/Aryl-polyethylenglykolen und/oder Alkyl/Cycloalkyl/Aryl-poly-(ethylenoxid-*block*-alkylenoxid) und/oder Alkyl/Cycloalkyl/Aryl-poly-(ethylenoxid-*co*-alkylenoxid) und/oder Alkyl/Cycloalkyl/Aryl-poly-(ethylenoxid-*ran*-alkylenoxid) mit 25 bis 99,9 Gew.-% Ethylenoxid und 0 bis 75 Gew.-% eines weiteren Alkylenoxides mit 3 bis 20C-Atomen, bestehend aus Propylenoxid, Butylenoxid, Dodecyloxid, Isoamyloxid, Oxetan, substituierten Oxetanen, α-Pinenoxid, Styroloxid, Tetrahydrofuran oder weiteren aliphatischen oder aromatischen Alkylenoxiden mit 4 bis 20 C-Atomen pro Alkylenoxid oder Gemischen daraus, der allgemeinen Formel

      R⁵-O-A_{z'}-H

      mit z' = 5 - 150, R⁵ = Alkyl, Cycloalkyl, Aryl, beliebiger organischer Rest mit 1 - 25C-Atomen
      und/oder
      monoaminofunktionellen Alkyl/Cycloalkyl/Aryl-polyethylenglykolen und/oder Alkyl/Cycloalkyl/Aryl-poly-(ethylenoxyid-*block*-alkylenoxid) und/oder Alkyl/Cycloalkyl/Aryl-poly-(ethylenoxid-*co*-alkylenoxid) und/oder Alkyl/Cycloalkyl/Aryl-poly-(ethylenoxid-*ran*-alkylenoxid) mit 25 bis 99,9 Gew.-% Ethylenoxid und 0 bis 75 Gew.-% eines weiteren Alkylenoxides mit 3 bis 20C-Atomen, bestehend aus Propylenoxid, Butylenoxid, Dodecyloxid, Isoamyloxid, Oxetan, substituierten Oxetanen, α-Pinenoxid, Styroloxid, Tetrahydrofuran oder weiteren aliphatischen oder aromatischen Alkylenoxiden mit 4 bis 20C-Atomen pro Alkylenoxid oder Gemischen daraus, der allgemeinen Formel

      R⁵-O-(CRⁱRⁱⁱ-CRⁱⁱⁱR^{iv}-O)_{z'-1}-CRⁱRⁱⁱ-CRⁱⁱⁱR^{iv}-NH₂

      und 50 bis 5 Gew.-% einer Polyisocyanat-Komponente (D)(ii), umsetzt, wobei die Umsetzung im Falle trifunktioneller Isocyanate vorzugsweise im Molverhältnis 1 : 1 : 1 : 1 in beliebiger Weise durchgeführt wird,
      und/oder
   a₉) 5 bis 95 Gew.-% einer (Per)fluoralkylalkohol-Komponente (B)(i) und/oder einer (Per)fluoralkylalkylenamin-Komponente (B)(ii) und/oder eines fluormodifizierten Makromonomeren oder Telechelen (B)(iii) mit 75 bis 5 Gew.-% einer Aminoalkylalkoxysilan-Komponente (E)(i) und/oder einer (E)(ii) und 75 bis 5 Gew.-% einer Triazin-Komponente (H), bestehend aus Cyanurchlorid bzw. 2,4,6-Trichlor-1,3,5-triazin, umsetzt, wobei die Umsetzung vorzugsweise im Molverhältnis 2 : 1 : 1 oder 1 : 2 : 1 in beliebiger Weise durchgeführt wird,
      und/oder
   a₁₀) 5 bis 75 Gew.-% einer (Per)fluoralkylalkohol-Komponente (B)(i) und/oder einer (Per)fluoralkylalkylenamin-Komponente (B)(ii) und/oder eines fluormodifizierten Makromonomeren oder Telechelen (B)(iii) mit 50 bis 5 Gew.-% einer Aminoalkylalkoxysilan-Komponente (E)(i) und/oder (E)(ii), 50 bis 5 Gew.-% einer monofunktionellen Polyalkylenglykol-Komponente (G)(i) und/oder einer monofunktionellen Polyoxyalkylenamin-Komponente (G)(ii) und 50 bis 5 Gew.-% einer Triazin-Komponente (H), bestehend aus Cyanurchlorid bzw. 2,4,6-Trichlor-1,3,5-triazin, umsetzt, wobei die Umsetzung vorzugsweise im Molverhältnis 1 : 1 : 1 : 1 in beliebiger Weise durchgeführt wird,
      und/oder
   a₁₁) 5 bis 75 Gew.-% einer (Per)fluoralkylalkohol-Komponente (B)(i) und/oder einer (Per)fluoralkylalkylenamin-Komponente (B)(ii) und/oder eines fluormodifizierten Makromonomeren oder Telechelen (B)(iii) mit 50 bis 5 Gew.-% einer Aminoalkylalkoxysilan-Komponente (E)(i) und/oder (E)(ii), 50 bis 5 Gew.-% einer polyfunktionellen Polyalkylenglykol-Komponente (G)(iii) und/oder einer polyfunktionellen Polyoxyalkylenamin-Komponente (G)(iv), bestehend aus polyhydroxyfunktionellen Polyethylenglykolen und/oder Poly-(ethylenglykol-*block*-polyalkylenglykol) und/oder Poly-(ethylenglykol-*co-*polyalkylenglykol)) und/oder Poly-(ethylenglykol-*ran*-polyalkylenglykol) mit 25 bis 99,9 Gew.-% Ethylenoxid und 0 bis 75 Gew.-% eines weiteren Alkylenoxides mit 3 bis 20C-Atomen, bestehend aus Propylenoxid, Butylenoxid, Dodecyloxid, Isoamyloxid, Oxetan, substituierten Oxetanen, α-Pinenoxid, Styroloxid, Tetrahydrofuran oder weiteren aliphatischen oder aromatischen Alkylenoxiden mit 4 bis 20C-Atomen pro Alkylenoxid oder Gemischen daraus, der allgemeinen Formel

      R⁶(-O-A_{z'}-H)_{z"}

      mit z" = 2 - 6, R⁶ = Alkyl, Cycloalkyl, Aryl, beliebiger organischer Rest mit 1 - 25C-Atomen
      und/oder
      polyaminofunktionellen Polyethylenglykolen und/oder Poly-(ethylenglykol-*block*-polyalkylenglykol) und/oder Poly-(ethylenglykol-*co-*polyalkylenglykol)) und/oder Poly-(ethylenglykol-*ran*-polyalkylenglykol) mit 25 bis 99,9 Gew.-% Ethylenoxid und 0 bis 75 Gew.-% eines weiteren Alkylenoxides mit 3 bis 20C-Atomen, bestehend aus Propylenoxid, Butylenoxid, Dodecyloxid, Isoamyloxid, Oxetan, substituierten Oxetanen, α-Pinenoxid, Styroloxid, Tetrahydrofuran oder weiteren aliphatischen oder aromatischen Alkylenoxiden mit 4 bis 20C-Atomen pro Alkylenoxid oder Gemischen daraus, der allgemeinen Formel

      R⁶(-O-A_{z'-1}-CRⁱRⁱⁱ-CRⁱⁱⁱR^{iv}-NH₂)_{z"}

      und 50 bis 5 Gew.-% einer Polyisocyanat-Komponente (D)(i), wobei die Umsetzung im Falle dihydroxyfunktioneller Glykole vorzugsweise im Molverhältnis 1 : 1 : 1 : 2 in beliebiger Weise durchgeführt wird,
      und/oder
   a₁₂) 5 bis 75 Gew.-% einer (Per)fluoralkylalkohol-Komponente (B)(i) und/oder einer (Per)fluoralkylalkylenamin-Komponente (B)(ii) und/oder eines fluormodifizierten Makromonomeren oder Telechelen (B)(iii) mit 50 bis 5 Gew.-% einer Aminoalkylalkoxysilan-Komponente (E)(i) und/oder (E)(ii), 50 bis 5 Gew.-% einer Hydroxycarbonsäure-Komponente (I), bestehend aus einer Monohydroxycarbonsäure und/oder einer Dihydroxycarbonsäure mit einer und/oder zwei gegenüber Polyisocyanaten reaktiven Hydroxyl-Gruppe(n) und einer gegenüber Polyisocyanaten inerten Carboxyl-Gruppe, und 50 bis 5 Gew.-% einer Polyisocyanat-Komponente (D)(ii), bestehend aus mindestens einem Triisocyanat, Polyisocyanat, Polyisocyanat-Derivat oder Polyisocyanat-Homologen mit mindestens drei (cyclo)aliphatischen und/oder aromatischen Isocyanat-Gruppen gleicher oder unterschiedlicher Reaktivität, umsetzt, wobei die Umsetzung im Falle trifunktioneller Isocyanate vorzugsweise im Molverhältnis 1 : 1 : 1 : 1 in beliebiger Weise durchgeführt wird,
      und/oder
   a₁₃) 5 bis 75 Gew.-% einer (Per)fluoralkylalkohol-Komponente (B)(i) und/oder einer (Per)fluoralkylalkylenamin-Komponente (B)(ii) und/oder eines fluormodifizierten Makromonomeren oder Telechelen (B)(iii) mit 50 bis 5 Gew.-% einer Aminoalkylalkoxysilan-Komponente (E)(i) und/oder (E)(ii), 50 bis 5 Gew.-% einer NCN-Komponente (J), bestehend aus Cyanamid mit einer gegenüber Polyisocyanaten reaktiven und NH-aciden Amino-Gruppe, und 50 bis 5 Gew.-% einer Polyisocyanat-Komponente (D)(ii), bestehend aus mindestens einem Triisocyanat, Polyisocyanat, Polyisocyanat-Derivat oder Polyisocyanat-Homologen mit mindestens drei (cyclo)aliphatischen und/oder aromatischen Isocyanat-Gruppen gleicher oder unterschiedlicher Reaktivität, umsetzt, wobei die Umsetzung im Falle trifunktioneller Isocyanate vorzugsweise im Molverhältnis 1 : 1 : 1 : 1 in beliebiger Weise durchgeführt wird,
      und/oder
   a₁₄) 5 bis 95 Gew.-% einer (Per)fluoralkylalkohol-Komponente (B)(i) und/oder einer (Per)fluoralkylalkylenamin-Komponente (B)(ii) und/oder einer fluormodifizierten Makromonomeren- oder Telechelen-Komponente (B)(iii), 75 bis 5 Gew.-% einer Carbonyl-Komponente (K) der allgemeinen Formel

      X-CO-Y

      mit X, Y = unabhängig voneinander F, Cl, Br, I, CCl₃, R⁷, OR⁷ mit R⁷ = Alkyl, Cycloalkyl, Aryl, beliebiger organischer Rest mit 1 - 25 C-Atomen,
      0 - 10 N-Atomen und 0 - 10 O-Atomen
      mit 75 bis 5 Gew.-% einer Aminoalkylalkoxysilan-Komponente (E)(i) und/oder (E)(ii) umsetzt, wobei in der ersten Stufe unter Abspaltung von HX und/oder HY ein Addukt der allgemeinen Formel

      (B)-CO-Y und/oder X-CO-(B)

      oder

      (E)-CO-Y und/oder X-CO-(E)

      mit (B) = deprotonierte Komponenten (B)(i) und/oder (B)(ii) und/oder (B)(iii), (E) = deprotonierte Komponenten (E)(i) und/oder (E)(ii)
      und in der zweiten Stufe unter Abspaltung von HX und/oder HY ein Addukt der allgemeinen Formel

      (B)-CO-(E)

      erhalten wird und die Umsetzung vorzugsweise im Molverhältnis 1 : 1 : 1 in beliebiger Weise durchgeführt wird,
      oder
      5 bis 95 Gew.-% eines vorgefertigten Addukts der allgemeinen Formel

      (B)-CO-Y und/oder X-CO-(B)

      mit 95 bis 5 Gew.-% einer Aminoalkylalkoxysilan-Komponente (E)(i) und/oder (E)(ii) umsetzt, wobei wobei unter Abspaltung von HX und/oder HY ein Addukt der allgemeinen Formel

      (B)-CO-(E)

      erhalten wird und die Umsetzung vorzugsweise im Molverhältnis 1 : 1 in beliebiger Weise durchgeführt wird,
      oder
      5 bis 95 Gew.-% eines vorgefertigten Addukts der allgemeinen Formel

      (E)-CO-Y und/oder X-CO-(E)

      mit 95 bis 5 Gew.-% (Per)fluoralkylalkohol-Komponente (B)(i) und/oder einer (Per)fluoralkylalkylenamin-Komponente (B)(ii) und/oder einer fluormodifizierten Makromonomeren- oder Telechelen-Komponente (B)(iii) umsetzt, wobei unter Abspaltung von HX und/oder HY ein Addukt der allgemeinen Formel

      (B)-CO-(E)

      erhalten wird und die Umsetzung vorzugsweise im Molverhältnis 1 : 1 in beliebiger Weise durchgeführt wird,
      und/oder
   a₁₅) bei den Umsetzungsprodukten gemäß a₂) bis a₁₄) die Aminoalkylalkoxysilan-Komponente (E)(i) und/oder die Aminosilan-Komponente (E)(ii) durch eine Mercaptoalkylalkoxysilan-Komponente (L)(i) bestehend aus einem 3-Mercaptopropyltrialkoxysilan der allgemeinen Formel

      HS-(CR³₂)_{y'}-Si(OR¹)_{3-x'}R²_{x'}

      und/oder durch eine andere Mercaptosilan-Komponente (L)(ii) einer Molekularmasse von 200 bis 2 000 Dalton mit einer oder mehreren Mercapto-Gruppe(n) und einer oder mehreren Alkoxysilan-Gruppe(n) ersetzt
      und/oder
   a₁₆) 5 bis 95 Gew.-% einer (Per)fluoralkylalkylenoxid-Komponente (M) der allgemeinen Formel

      CF₃-(CF₂)ₓ-(CH₂)_{y}-CHOCH₂

      oder

      CR₃-(CR₂)ₓ-(CH₂)_{y}-CHOCH₂

      oder

      CR₃-(CR₂)ₓ-(CH₂)_{y}-O-CH₂-CHOCH₂

      einer Molekularmasse von 200 bis 2 000 Dalton und einer oder mehreren Epoxy-Gruppe(n) mit 95 bis 5 Gew.-% einer Aminosilan-Komponente (E)(i) und/oder (E)(ii) umsetzt, wobei die Umsetzung vorzugsweise im Molverhältnis 1 : 1 oder 1 : 2 in beliebiger Weise durchgeführt wird,
      und/oder
   a₁₇) 5 bis 95 Gew.-% einer (Per)fluoralkylalkylenoxid-Komponente (M), 75 bis 5 Gew.-% einer Epoxyalkylolalkoxysilan-Komponente (N)(i) und/oder einer von (N) (i) verschiedenen Komponente (N)(ii), bestehend aus einem (substituiertem) 3-Glycidyloxypropyltrialkoxysilan der allgemeinen Formel

      CH₂-OCH-CH₂-O-(CR³₂)_{y'}-Si(OR¹)_{3-x'}R²_{x'}

      mit einer Molekularmasse von 200 bis 2 000 Dalton und einer oder mehreren Epoxy-Gruppe(n) mit 75 bis 5 Gew.-% einer Polyamin-Komponente (O) mit einer Molekularmasse von 60 bis 5000 Dalton und einer oder mehreren gegenüber Epoxid-Gruppen reaktiven (cyclo)aliphatischen und/oder aromatischen primären und/oder sekundären Amino-Gruppe(n) und ggf. einer oder mehreren HydroxylGruppe(n) umsetzt, wobei die Umsetzung vorzugsweise im Molverhältnis 1 : 1 : 1 oder 2 : 2 : 1 in beliebiger Weise durchgeführt wird,
      und/oder
   a₁₈) 5 bis 95 Gew.-% einer epoxyfunktionellen polyhedralen oligomeren Polysilasesquioxan-Komponente (POSS) (P)(i) mit einer oder mehreren Epoxy-Gruppen und einer oder mehreren Perfluoralkyl-Gruppen der allgemeinen Formel

      (R⁸ᵤR⁹ᵥR¹⁰_{w}SiO_{1.5})ₚ

      mit 0 < u < 1,0 < v < 1, 0 < w < 1, u + v + w = 1,
      p = 4, 6, 8, 10, 12 und R⁸, R⁹, R¹⁰ = unabhängig voneinander beliebiger anorganischer und/oder organischer und ggf. polymerer Rest mit 1 bis 250C-Atomen und 0 bis 50 N- und/oder 1 bis 50 O- und/oder 3 bis 100 F- und/oder 0 bis 50 Si- und/oder 0 bis 50 S-Atomen
      mit 95 bis 5 Gew.-% einer Aminosilan-Komponente (E)(i) und/oder (E)(ii) umsetzt, wobei die Umsetzung vorzugsweise im Molverhältnis 1 : (>) 1 in beliebiger Weise durchgeführt wird,
      und/oder
   a₁₉) 5 bis 95 Gew.-% einer aminofunktionellen polyhedralen oligomeren Polysilasesquioxan-Komponente (POSS) (P)(ii) mit einer oder mehreren Amino-Gruppen und einer oder mehreren Perfluoralkyl-Gruppen der allgemeinen Formel

      R⁸ᵤR⁹ᵥR¹⁰_{w}SiO_{1.5})ₚ

      mit 95 bis 5 Gew.-% einer Isocyanatoalkylalkoxysilan-Komponente (C)(i) und/oder einer von (C) (i) verschiedenen Komponente (C)(ii) umsetzt, wobei die Umsetzung vorzugsweise im Molverhältnis 1 : (>) 1 in beliebiger Weise durchgeführt wird,
      und/oder
   a₂₀) 5 bis 95 Gew.-% einer (meth)acryloylfunktionellen polyhedralen oligomeren Polysilasesquioxan-Komponente (POSS) (P)(iii) mit einer oder mehreren (Meth)acryloyl-Gruppen und einer oder mehreren Perfluoralkyl-Gruppen der allgemeinen Formel

      (R⁸ᵤR⁹ᵥR¹⁰_{w}SiO_{1.5})ₚ

      mit 95 bis 5 Gew.-% einer Aminoalkohol-Komponente (Q)(i) mit einer oder mehreren gegenüber Epoxid-Gruppen reaktiven (cyclo-)aliphatischen und/oder aromatischen primären und/oder sekundären Amino-Gruppe(n) und einer oder mehreren HydroxylGruppe(n) mit einer Molekularmasse von 60 bis 5000 Dalton und/oder einer anderen Aminoalkohol-Komponente (Q)(ii) umsetzt, wobei die Umsetzung vorzugsweise im Molverhältnis 1 : (>) 1 in beliebiger Weise durchgeführt wird,
      oder vorgefertigte Fluorsilane (A)(ii) wie
   a₂₁) (Per)fluoralkylalkoxysilane der allgemeinen Formel

      CF₃-(CF₂)ₓ-(CH₂)_{y}-Si(OR¹)_{3-x'}R²_{x'}

      oder

      CR₃-(CR₂)ₓ-(CH₂)_{y}-Si(OR¹)_{3-x'}R²_{x'}

      und/oder
   a₂₂) andere Umsetzungsprodukte, enthaltend die Strukturelemente

      -(CF₂-CF₂)ₓ-

      und/oder

      -(CR₂-CR₂)ₓ-

      und/oder

      -[CF₂CF(CF₃)-O]ₓ-

      und/oder

      -(CR₂-CR₂-O)ₓ-

      sowie

      -Si(OR¹)_{3-x'}R²_{x'}

      einsetzt,
   c_{1.2}) 5 bis 75 Gew.-% einer Aminoalkohol-Komponente (Q)(i) und/oder einer anderen Aminoalkohol-Komponente (Q)(ii), 75 bis 5 Gew.-% einer Aminosilan-Komponente (E)(i) und/oder (E)(ii) und 75 bis 5 Gew.-% einer Polyisocyanat-Komponente (D)(i) umsetzt, wobei die Umsetzung vorzugsweise im Molverhältnis 1 : 1 : 1 in beliebiger Weise durchgeführt wird,
      und/oder
   c_{1.3}) 5 bis 95 Gew.-% einer Hydroxycarbonsäure-Komponente (I) und 95 bis 5 Gew.-% einer Isocyanatosilan-Komponente (C)(i) und/oder (C)(ii) umsetzt, wobei die Umsetzung vorzugsweise im Molverhältnis 1 : 1 in beliebiger Weise durchgeführt wird,
      und/oder
   c_{1.4}) aus 5 bis 75 Gew.-% einer Hydroxycarbonsäure-Komponente (I), 75 bis 5 Gew.-% einer Aminosilan-Komponente (E)(i) und/oder (E)(ii) und 75 bis 5 Gew.-% einer Polyisocyanat-Komponente (D)(i) umsetzt, wobei die Umsetzung vorzugsweise im Molverhältnis 1 : 1 : 1 in beliebiger Weise durchgeführt wird,
      und/oder
   c_{1.5}) 5 bis 95 Gew.-% einer NCN-Komponente (J) und 95 bis 5 Gew.-% einer Isocyanatosilan-Komponente (C)(i) und/oder (C)(ii) umsetzt, wobei die Umsetzung vorzugsweise im Molverhältnis 1 : 1 in beliebiger Weise durchgeführt wird,
      und/oder
   c_{1.6}) 5 bis 75 Gew.-% einer NCN-Komponente (J), 75 bis 5 Gew.-% einer Aminosilan-Komponente (E)(i) und/oder (E)(ii) und 75 bis 5 Gew.-% einer Polyisocyanat-Komponente (D)(i) umsetzt, wobei die Umsetzung vorzugsweise im Molverhältnis 1 : 1 : 1 in beliebiger Weise durchgeführt wird,
      und/der
   c_{1.7}) 5 bis 95 Gew.-% einer Aminosilan-Komponente (E)(i) und/oder (E)(ii) und 95 bis 5 Gew.-% einer Säure-Komponente (U)(i), bestehend aus ungesättigten Carbonsäuren, umsetzt, wobei die Umsetzung vorzugsweise im Molverhältnis 1 : >1 in beliebiger Weise durchgeführt wird,
      und/oder
   c_{1.8}) 5 bis 95 Gew.-% einer Aminosilan-Komponente (E)(i) und/oder (E)(ii) und 95 bis 5 Gew.-% einer Säure-Kompoente (U)(ii), bestehend aus ungesättigten Carbonsäureanhydriden, umsetzt wobei die Umsetzung vorzugsweise im Molverhältnis 1 : >1 in beliebiger Weise durchgeführt wird,
      und/oder
   c_{1.9}) 5 bis 95 Gew.-% einer Aminosilan-Komponente (E)(i) und/oder (E)(ii) und 95 bis 5 Gew.-% einer Säure-Komponente (U)(iii), bestehend aus γ- und/oder δ-Lactonen von Onsäuren bzw. Zuckersäuren bzw. Polyhydroxy(di)carbonsäuren bzw. Polyhydroxycarbonsäurealdehyden, umsetzt, wobei die Umsetzung im Falle von Monolactonen vorzugsweise im Molverhältnis 1 : 1 und im Falle von Dilactonen vorzugsweise im Molverhältnis 2 : 1 in beliebiger Weise durchgeführt wird und hydrophile Silane der allgemeinen Formel

      (E)-CO-[CH(OH)₄]-CH₂OH

      und/oder

      (E)-CO-[CH(OH)₄]-CHO

      und/oder

      (E)-CO-[CH(OH)₄]-CO-(E)

      erhalten werden,
      wobei die Umsetzungsprodukte gemäß c_{1.1}) bis c_{1.9}) 0 bis 10 Gewichtsteile einer Katalysator-Komponente (R), 0 bis 250 Gewichtsteile einer Lösemittel-Komponente (S)(i) und 0 bis 250 Gewichtsteile einer Lösemittel-Komponente (S)(ii) enthalten,
      und eine hydrophile Silan-Komponente (V), dadurch hergestellt,dass man
      c_{1.10}) eine nichtionische Silan-Komponente (E)(iii) der allgemeinen Formel

      R¹¹-O-A_{z'}-(CH₂)_{y'}-Si(OR¹)_{3-x'}R²_{x'}

      und/oder

      HO-A_{z'}-(CH₂)_{y'}-Si(OR¹)_{3-x'}R²_{x'}

      worin R¹¹ = Alkyl, Cycloalkyl, Aryl, beliebiger organischer Rest mit jeweils 1 - 25C-Atomen
      einsetzt
      und/oder
   c_{1.11}) 5 bis 95 Gew.-% einer monofunktionellen Polyalkylenglykol-Komponente (G)(i) und/oder einer monofunktionellen Polyoxyalkylenamin-Komponente (G)(ii) und/oder einer polyfunktionellen Polyalkylenglykol-Komponente (G)(iii) und/oder einer polyfunktionellen Polyoxyalkylenamin-Komponente (G)(iv) und 95 bis 5 Gew.-% einer Isocyanatosilan-Komponente (C)(i) und/oder (C)(ii) umsetzt, wobei die Umsetzung im Falle monohydroxy- oder monoaminofunktioneller Glykole vorzugsweise im Molverhältnis 1 : 1 in beliebiger Weise durchgeführt wird,
      und/oder
   c_{1.12}) 5 bis 75 Gew.-% einer monofunktionellen Polyalkylenglykol-Komponente (G)(i) und/oder einer monofunktionellen Polyoxyalkylenamin-Komponente (G)(ii) und/oder einer polyfunktionellen Polyalkylenglykol-Komponente (G)(iii) und/oder einer polyfunktionellen Polyoxyalkylenamin-Komponente (G)(iv), 75 bis 5 Gew.-% einer Aminosilan-Komponente (E)(i) und/oder (E)(ii) und 75 bis 5 Gew.-% einer Polyisocyanat-Komponente (D)(i) umsetzt, wobei die Umsetzung im Falle monohydroxy- oder monoaminofunktioneller Glykole vorzugsweise im Molverhältnis 1 : 1 : 1 in beliebiger Weise durchgeführt wird,
      und/oder
   c_{1.13}) 5 bis 95 Gew.-% einer Polyoxyalkylenamin-Komponente (G)(ii) und/oder einer polyfunktionellen Polyoxyalkylenamin-Komponente (G)(iv) und 95 bis 5 Gew.-% einer Epoxyalkylolalkoxysilan-Komponente (N)(i) und/oder einer von (N) (i) verschiedenen Epoxysilan-Komponente (N)(ii) umsetzt, wobei die Umsetzung im Falle monoaminofunktioneller Glykole vorzugsweise im Molverhältnis 1 : 1 oder 1 : 2 in beliebiger Weise durchgeführt wird,
      und/oder
   c_{1.14}) 5 bis 75 Gew.-% einer monofunktionellen Polyalkylenglykol-Komponente (G)(i) und/oder einer monofunktionellen Polyoxyalkylenamin-Komponente (G)(ii), 50 bis 5 Gew.-% einer Aminosilan-Komponente (E)(i) und/oder (E)(ii) und 50 bis 5 Gew.-% einer Polyisocyanat-Komponente (D)(ii) umsetzt, wobei die Umsetzung im Falle trifunktioneller Isocyanate vorzugsweise im Molverhältnis 1 : 2 : 1 oder 2 : 1 : 1 in beliebiger Weise durchgeführt wird,
      und/oder
   c_{1.15}) 5 bis 75 Gew.-% einer monofunktionellen Polyalkylenglykol-Komponente (G)(i) und/oder einer monofunktionellen Polyoxyalkylenamin-Komponente (G)(ii), 50 bis 5 Gew.-% einer Aminosilan-Komponente (E)(i) und/oder (E)(ii) und 50 bis 5 Gew.-% einer Triazin-Komponente (H), bestehend aus Cyanurchlorid bzw. 2,4,6-Trichlor-1,3,5-triazin, umsetzt, wobei die Umsetzung vorzugsweise im Molverhältnis 1 : 2 : 1 oder 2 : 1 : 1 in beliebiger Weise durchgeführt wird,
      wobei die Umsetzungsprodukte gemäß c_{1.10}) bis c_{1.15}) 0 bis 10 Gewichtsteile einer Katalysator-Komponente (R), 0 bis 250 Gewichtsteile einer Lösemittel-Komponente (S)(i) und 0 bis 250 Gewichtsteile einer Lösemittel-Komponente (S)(ii) enthalten,
d) die Fluorsilan-Komponente (A) aus den Stufen a) oder b), 0,004 bis 120 Gewichtsteile der Stabilisierungs-Komponente (T) aus der Stufe c), 0,004 bis 120 Gewichtsteile der hydrophilen Silan-Komponente (V) aus Stufe c), wobei die Lösemittel-Komponenten (S)(i) und/oder (S)(i) vor, während oder nach der Umsetzung bzw. Mischung durch Desillation teilweise oder vollständig entfernt und ggf. die Katalysator-Komponente (R) vor, während oder nach der Umsetzung bzw. Mischung durch geeignete Absorbtionsmaterialien oder andere Maßnahmen teilweise oder vollständig entfernt werden, so dass maximal 0 bis 1,2 Gewichtsteile einer Katalysator-Komponente (R), 0 bis 50 Gewichtsteile einer Lösemittel-Komponente (S)(i) und 999,892 bis 288,8 Gewichtsteile einer Lösemittel-Komponente (S)(ii) anwesend sind, mit 950 bis 50 Gewichtsteilen einer Aktivator-Komponente (X), enthaltend 0,01 bis 10 Gew.-% einer Säure-Komponente (U)(v), 0 bis 99,999 Gew.-% eine Lösemittelkomponente (S)(ii) und/oder 0 bis 99,99 Gew.-% Wasser, umsetzt,
e) wobei ggf. während oder nach den Stufen a) und/oder b) und/oder c) und/oder d) in beliebiger Weise 0 bis 50 Gewichtsteile bzw. 0 bis 60 Gewichtsteile einer Formulierungs-Komponente (Y)(i) zugesetzt und/oder 0 bis 50 Gewichtsteile bzw. 0 bis 60 Gewichtsteile einer Funktionalisierungs-Komponente (Z), bestehend aus
   e₁) einer Aminosilikonöl-Komponente (E)(iv) der allgemeinen Formel

      HO-[Si(CH₃)₂-O]_{c}-Si(CH₃)[(CH₂)₃NH(CH₂)₂NH₂]-

      O-[Si(CH₃)₂-O]_{c}-H

      oder

      R'O-[Si(CH₃)₂-O]_{c}Si(CH₃)[(CH₂)₃NH(CH₂)₂NH₂]-

      O-[Si(CH₃)₂-O]_{c}-R'

      oder

      (H₃CO)₂Si[(CH₂)₃NH(CH₂)₂NH₂]-[Si(CH₃)₂-O]_{c}-

      Si[(CH₂)₃NH(CH₂)₂NH₂](OCH₃)₂

      worin c = 1 - 100 und R' = H, Me, Et
      und/oder
   e₂) einer niedermolekularen Silan-Komponente (E)(v) der allgemeinen Formel

      R¹²-Si(OR¹)_{3-x'}H²_{x'}

      worin R¹² = OR¹, R², unabhängig voneinander Alkyl, Cycloalkyl, Aryl, beliebiger organischer Rest mit 1 - 25C-Atomen
      und/oder
   e₃) einer hydrophilierten wässrige Silan-Komponente (E)(vi) bestehend aus (alkoholfreien) Aminosilan-Hydrolysaten und/oder (di/tri)amino/alkylfunktionellen Siloxan-Co-Oligomeren und/oder amino/vinylfunktionellen Siloxan-Co-Oligomeren und/oder epoxyfunktionellen Siloxan-Co-Oligomeren
      und/oder
   e₄) einer (reaktiven) Nanopartikel-Komponente (Y)(ii), bestehend aus anorganischen und/oder organischen Nanopartikeln oder Nanokompositen in Form von Primärteilchen und/oder Aggregaten und/oder Agglomeraten, wobei die Nanopartikel ggf. hydrophobiert und/oder dotiert und/oder gecoatet und zusätzlich mit reaktiven Amino- und/oder Hydroxyl- und/oder Mercapto- und/oder Isocyanato- und/oder Epoxy- und/oder Methacryloyl- und/oder Silan-Gruppen der allgemeinen Formel -Si(OR¹)_{3-x'}R²_{x'} oberflächenmodifiziert sein können,
      zugesetzt und/oder mit umgesetzt werden.

Überraschenderweise hat sich herausgestellt, dass mit den erfindungsgemäßen flüssigen fluorhaltigen Zusammensetzungen nicht nur wasserdampfdurchlässige Beschichtungs- bzw. Imprägnierungssysteme zur permanenten öl-, wasser- und schmutzabweisenden Oberflächenbehandlung bzw. -modifizierung von mineralischen und nichtmineralischen Untergründen zugänglich sind, sondern dass diese darüber hinaus auch noch im Vergleich zum Stand der Technik deutlich bessere anwendungstechnische Eigenschaften bei gleichem und sogar niedrigerem Fluorgehalt aufweisen. Durch die Verwendung geeigneter Fluorsilan-Komponenten in Kombination mit geeigneten Stabilisierungs-Komponenten und hydrophilen Silan-Komponenten können die kritischen Oberflächenspannungen γ_{c} und die Kontaktwinkel θ der fluorhaltigen Zusammensetzungen gemäß Erfindung so optimiert werden, dass in den jeweiligen Anwendungen die hydrophoben, oleophoben und schmutzabweisenden Eigenschaften bereits bei sehr geringer Wirkstoffdosierung bzw. sehr geringem Fluorgehalt zum Tragen kommen. Zudem war nicht hervorsehbar, dass die erfindungsgemäßen flüssigen fluorhaltigen Zusammensetzungen auch lösemittelfrei oder lösemittelarm hergestellt werden können. Neben (per)fluoralkylfunktionellen Organosilanen sind zweikomponentige (per)fluoralkylfunktionelle Organopolysiloxan-Prekondensate und zweikomponentige (per)fluoralkylfunktionelle Organopolysiloxan-Kondensate für unterschiedliche Anwendungsgebiete zugänglich. Bei Verwendung geeigneter Stabilisierungs-Komponenten sind außerdem (per)fluoralkylfunktionelle Organopolysiloxan-Prekondensate und (per)fluoralkylfunktionelle Organopolysiloxan-Kondensate mit verbesserten anwendungstechnischen Eigenschaften zugänglich. Bei Verwendung geeigneter hydrophiler Silan-Komponenten erhält man außerdem (per)fluoralkylfunktionelle Organopolysiloxan-Prekondensate und (per)fluoralkylfunktionelle Organopolysiloxan-Kondensate mit verbessertem Ablaufverhalten und verbesserter Lagerstabilität.

Als geeignete Fluorsilan-Komponente (A)(i) können beispielsweise (per)fluoralkyl- und/oder polyhexafluorpropenoxidmodifizierte und silanmodifizierte Umsetzungsprodukte eingesetzt werden, die durch (Poly)additionsreaktion und/oder Additions-/Elimierungsreaktionen hergestellt werden.

Als geeignete vorgefertigte Fluorsilan-Komponente (A)(ii) eignen sich beispielsweise die Handelsprodukte DYNASILAN^{®} F8161 (Tridecafluoroctyltrimethoxysilan), DYNASILAN^{®} F8261 (Tridecafluoroctyltriethoxysilan), DYNASILAN^{®} F8263 (Fluoralkylsilan-Formulierung, anwendungsfertig in Isopropanol), DYNASILAN^{®} F8800 (modifiziertes Fluoralkylsiloxan, wasserlöslich), DYNASILAN^{®} F8815 (wässriges, moodifiziertes Fluoralkylsiloxan) der Fa. Degussa GmbH oder geeignete Kombination daraus.

Als geeignete (Per)fluoralkylalkohol-Komponente (B)(i) können beispielsweise 3,3,4,4,5,5,6,6,7,7,8,8,8-Tridecafluoroctan-1-ol, 3,3,4,4,5,5,6,6,7,7,8,8,9,9,10,10,10- heptadecafluordecan-1-ol, 3,3,4,4,5,5,6,6,7,7,8,8,9,9,10,10,11,11,12,12,12- heneicosafluordodecan-1-ol, 3,3,4,4,5,5,6,6,7,7,8,8,9,9,10,10,11,11,12,12,13,13,14,14,14-pentacosafluortetradecan-1-ol, 3,3,4,4,5,5,6,6,7,7,8,8,9,9,10,10,11,11,12,12,13,13,14,14,15,15,16,16,16- nonacosafluorhexadecan-1-ol, 3,3,4,4,5,5,6,6,7,7,8,8-Dodecafluorheptan-1-ol, 3,3,4,4,5,5,6,6,7,7,8,8,9,9,10,10-Hexadecafluornonan-1-ol, 3,3,4,4,5,5,6,6,7,7,8,8,9,9,10,10,11,11,12,12-eicosafluorundecan-1-ol, 3,3,4,4,5,5,6,6,7,7,8,8,9,9,10,10,11,11,12,12,13,13,14,14-tetracosafluortridecan-1-ol, 3,3,4,4,5,5,6,6,7,7,8,8,9,9,10,10,11,11,12,12,13,13,14,14,15,15,16,16- octacosafluorpentadecan-1-ol, die Handelsprodukte Fluowet^{®} EA 600, Fluowet^{®} EA 800, Fluowet^{®} EA 093, Fluowet^{®} EA 612, Fluowet^{®} EA 612 N, Fluowet^{®} EA 812 AC, Fluowet^{®} EA 812 IW, Fluowet^{®} EA 812 EP, Fluowet^{®} EA 6/1020, bestehend aus Perfluoralkylethanol-Gemischen, Fluowet^{®} OTL, Fluowet^{®} OTN, bestehend aus ethoxylierten Perfluoralkylethanol-Gemischen, der Fa. Clariant GmbH, die Handelsprodukte A-1620, A-1630, A-1660, A-1820, A-1830, A-1860, A-2020, A-3620, A-3820, A-5610, A-5810 der Fa. Daikin Industries, Ltd., die Handelsprodukte Zonyl^{®} BA, Zonyl^{®} BA L, Zonyl^{®} BA LD, bestehend aus Perfluoralkylethanol-Gemischen, Zonyl^{®} OTL, Zonyl^{®} OTN, bestehend aus ethoxylierten Perfluoralkylethanol-Gemischen, Zonyl^{®} FSH, Zonyl^{®} FSO, Zonyl^{®} FSN, Zonyl^{®} FS-300, Zonyl^{®} FSN-100, Zonyl^{®} FSO-100 der Fa. Du Pont de Nemours, die Handelsprodukte Krytox^{®} der Fa. Du Pont de Nemours, bestehend aus Hexafluorpropenoxid (HFPO)-Oligomer-Alkohol-Gemischen, oder geeignete Kombinationen daraus eingesetzt werden. Vorzugsweise werden Perfluoralkylethanol-Gemische mit 30 - 49,9 Gew.-% an 3,3,4,4,5,5,6,6,7,7,8,8,8-Tridecafluoroctan-1-ol und 30 - 49,9 Gew.-% an 3,3,4,4,5,5,6,6,7,7,8,8,9,9,10,10,10- heptadecafluordecan-1-ol wie die Handelsprodukte Fluowet^{®} EA 612 und Fluowet^{®} EA 812 eingesetzt.

Geeignete (Per)fluoralkylalkylenamin-Komponente (B)(ii) sind beispielsweise 3,3,4,4,5,5,6,6,7,7,8,8,8-Tridecafluoroctylamin, 3,3,4,4,5,5,6,6,7,7,8,8,9,9,10,10,10- heptadecafluordecylamin, 3,3,4,4,5,5,6,6,7,7,8,8,9,9,10,10,11,11,12,12,12- heneicosafluordodecylamin, 3,3,4,4,5,5,6,6,7,7,8,8,9,9,10,10,11,11,12,12,13,13,14,14,14-pentacosafluortetradecylamin, 3,3,4,4,5,5,6,6,7,7,8,8,9,9,10,10,11,11,12,12,13,13,14,14,15,15,16,16,16- nonacosafluorhexadecylamin, Umsetzungsprodukte aus 1,1,1,2,2,3,3,4,4,5,5,6,6-Tridecafluor-8-iodoctan, 1,1,1-2,2,3,3,4,4,5,5,6,6,7,7,8,8-Heptadecafluor-10-ioddecan, 1,1,1,2,2,3,3,4,4,5,5,6,6,7,7,8,8,9,9,10,10-heneicosafluor-12-ioddodecan, 1,1,1,2,2,3,3,4,4,5,5,6,6,7,7,8,8,9,9,10,10,11,11,12,12-pentacosafluor-14-iodtetradecan, 1,1,1,2,2,3,3,4,4,5,5,6,6,7,7,8,8,9,9,10,10,11,11,12,12,13,13,14,14-nonacosafluor-16- iodhexadecan, den Handelsprodukten Fluowet^{®} I 600, Fluowet^{®} I 800, Fluowet^{®} I 612, Fluowet^{®} I 812, Fluowet^{®} I 6/1020, Fluowet^{®} I 1020, bestehend aus Perfluoralkyliodid-Gemischen, Fluowet^{®} EI 600, Fluowet^{®} EI 800, Fluowet^{®} EI 812, Fluowet^{®} EI 6/1020, bestehend aus Perfluoralkylethyliodid-Gemischen, der Fa. Clariant GmbH und geeigneten Aminierungsreagentien, die Handelsprodukte U-1610, U-1710, U-1810 der Fa. Daikin Industries, Ltd. oder geeignete Kombinationen daraus. Vorzugsweise werden Perfluoralkylethanol-Gemische mit 30 - 49,9 Gew.-% an 3,3,4,4,5,5,6,6,7,7,8,8,8-Tridecafluoroctylamin und 30 - 49,9 Gew.-% an 3,3,4,4,5,5,6,6,7,7,8,8,9,9,10,10,10- heptadecafluordecylamin eingesetzt.

Als geeignete fluormodifizierte Makromonomere oder Telechele (B)(iii) können beispielsweise 4-(3,3,4,4,5,5,6,6,7,7,8,8,8-Tridecafluoroctyl)-benzylalkohol, 4-(3,3,4,4,5,5,6,6,7,7,8,8,9,9,10,10,10-Heptadecafluordecyl)-benzylalkohol, 4-(3,3,4,4,5,5,6,6,7,7,8,8,8-Tridecafluoroctylthio)-phenol, 4-(3,3,4,4,5,5,6,6,7,7,8,8,9,9,10,10,10-Heptadecafluordecylthio)-phenol, 4-(4,4,5,5,6,6,7,7,8,8,9,9,9-Tridecafluornonyloxy)-benzylalkohol, 4-(4,4,5,5,6,6,7,7,8,8,9,9,10,10,11,11,11-Heptadecafluorundecyloxy)-benzylalkohol, 4-(3,3,4,4,5,5,6,6,7,7,8,8,8-Tridecafluoroctyl)-benzylamin, 4-(3,3,4,4, 5, 5,6,6,7,7,8,8,9,9,10,10,10-Heptadecafluordecyl)-benzylamin, 3,3,4,4,5,5,6,6,7,7,8,8,8-Tridecafluoroctan-1-thiol, 3,3,4,4,5,5,6,6,7,7,8,8,9,9,10,10,10- heptadecafluordecan-1-thiol, 3,3,4,4,5,5,6,6,7,7,8,8,9,9,10,10,11,11,12,12,12- heneicosafluordodecan-1-thiol, 3,3,4,4,5,5,6,6,7,7,8,8,9,9,10,10,11,11,12,12,13,13,14,14,14-pentacosafluortetradecan-1-thiol, 3,3,4,4,5,5,6,6,7,7,8,8,9,9,10,10,11,11,12,12,13,13,14,14,15,15,16,16,16-nonacosafluorhexadecan-1-thiol, hydroxyfunktionelle Copolymere auf Basis von Tetrafluorethylen und Hydroxyalkyl(meth)acrylaten wie die Handelsprodukte Zeffle^{®} GK-500, GK-510, GK 550 der Fa. Daikin Industries, Ltd. oder geeignete Kombinationen daraus eingesetzt werden.

3,3,4,4,5,5,6,6,7,7,8,8,8-Tridecafluor-1-isocyanatooctan, 3,3,4,4,5,5,6,6,7,7,8,8,9,9,10,10,10-heptadecafluor-1-isocyanatodecan, 3,3,4,4,5,5,6,6,7,7,8,8,9,9,10,10,11,11,12,12,12-heneicosafluor-1-isocyanato dodecan, 3,3,4,4,5,5,6,6,7,7,8,8,9,9,10,10,11,11,12,12,13,13,14,14,14-pentacosafluor-1-isocyanatotetradecan, 3,3,4,4,5,5,6,6,7,7,8,8,9,9,10,10,11,11,12,12,13,13,14,14,15,15,16,16,16-nonacosafluor-1-isocyanatohexadecan oder geeignete Kombinationen daraus sind typische Vertreter der (Per)fluoralkylalkylenisocyanat-Komponente (B)(iv).

Als (Per)fluoralkylalkancarbonsäurederivat-Komponente (B)(v) eignen sich beispielsweise Tridecafluorheptansäure, Pentadecafluoroctansäure, Heptadecafluornonansäure, Nonadecafluordecansäure, Heneicosafluorundecansäure, die Handelsprodukte C-1600, C-1700, C-1800, C-1900, C-2000, C-5600, C-5800 der Fa. Daikin Industries, Ltd., Tridecafluorheptansäurechlorid, Pentadecafluoroctansäurechlorid, Heptadecafluornonansäurechlorid, Nonadecafluordecansäurechlorid, Heneicosafluorundecansäurechlorid, Tridecafluorheptansäure(m)ethylester, Pentadecafluoroctansäure(m)ethylester, Heptadecafluornonansäure(m)ethylester, Nonadecafluordecansäure(m)ethylester, Heneicosafluorundecansäure(m)ethylester, die Handelsprodukte C-1708, C-5608, C-5808, S-1701, S-1702, S-5602, S-5802 der Fa. Daikin Industries, Ltd. oder geeignete Kombinationen daraus.

Als geeignete Isocyanatoalkylalkoxysilan-Komponente (C)(i) und/oder andere Isocyanatosilan-Komponente (C)(ii) können beispielsweise die Handelsprodukte Silquest^{®} A-1310 Silane, Silquest^{®} A-Link™ 25 Silane (3-Isocyanatopropyltriethoxysilan), Silquest^{®} A-Link™ 35 Silane ((3-Isocyanatopropyl)trimethoxysilan), Silquest^{®} A-Link™ 597 Silane, Silquest^{®} FR-522 Silane und Silquest^{®} Y-5187 Silane der Fa. GE Silicones, die Handelsprodukte GENIOSIL^{®} GF 40 (3-Isocyanatopropyltrimethoxysilan), GENIOSIL^{®} XL 42 (Isocyanatomethylmethyldimethoxysilan) und GENIOSIL^{®} XL 43 (Isocyanatomethyltrimethoxysilan) der Fa. Wacker-Chemie GmbH oder geeignete Kombinationen daraus eingesetzt werden. Als bevorzugt sind im Rahmen der vorliegenden Erfindung 3-Isocyanatopropyltrimethoxysilan und/oder 3-Isocyanatopropyltriethoxysilan anzusehen.

Als Polyisocyanat-Komponente (D)(i) und/oder andere Polyisocyanat-Komponente (D)(ii) sind beispielsweise Polyisocyanate, Polyisocyanat-Derivat oder Polyisocyanat-Homologe mit zwei oder mehreren aliphatischen oder aromatischen Isocyanat-Gruppen gleicher oder unterschiedlicher Reaktivität oder geeignete Kombinationen daraus geeignet, und hier insbesondere auch die in der Polyurethan-Chemie hinreichend bekannten Polyisocyanate oder Kombinationen daraus. Als geeignete aliphatische Polyisocyanate kommen bspw. 1,6-Diisocyanatohexan (HDI), 1-Isocyanato-5-isocyanatomethyl-3,3,5-trimethyl-cyclohexan bzw. Isophorondiisocyanat (IPDI, Handelsprodukt VESTANAT^{®} IPDI der Fa. Degussa GmbH), Bis-(4-isocyanatocyclohexyl)-methan (H₁₂MDI, Handelsprodukt VESTANAT^{®} H12MDI der Fa. Degussa GmbH), 1,3-Bis-(1-isocyanato-1-methyl-ethyl)-benzol (m-TMXDI). 2,2,4-Trimethyl-1,6-diisocyanatohexan bzw. 2,4,4-Trimethyl-1,6-diisocyanatohexan (TMDI, Handelsprodukt VESTANAT^{®} TMDI der Fa. Degussa GmbH), Diisocyanate auf Dimerfettsäure-Basis (Handelsprodukt DDI^{®} 1410 DIISOCYANATE der Fa. Cognis Deutschland GmbH & Co. KG) bzw. technische Isomeren-Gemische der einzelnen aliphatischen Polyisocyanate in Frage. Als geeignete aromatische Polyisocyanate können beispielsweise 2,4-Diisocyanatotoluol bzw. Toluoldiisocyanat (TDI), Bis-(4-isocyanatophenyl)-methan (MDI) und dessen höhere Homologe (Polymeric MDI) bzw. technische Isomeren-Gemische der einzelnen aromatischen Polyisocyanate verwendet werden. Weiterhin sind auch die sogenannten "Lackpolyisocyanate" auf Basis von Bis-(4-isocyanatocyclo-hexyl)-methan (H₁₂MDI), 1,6-Diisocyanatohexan (HDI), 1-Isocyanato-5-isocyanatomethyl-3,3,5-trimethyl-cyclohexan (IPDI) grundsätzlich geeignet. Der Begriff "Lackpolyisocyanate" kennzeichnet Allophanat-, Biuret-, Carbodiimid-, Iminooxadiazindion-, Isocyanurat-, Oxadiazintrion-, Uretdion-, UrethanGruppen aufweisende Derivate dieser Diisocyanate, bei denen der Rest-Gehalt an monomeren Diisocyanaten dem Stand der Technik entsprechend auf ein Minimum reduziert wurde. Daneben können auch noch modifizierte Polyisocyanate eingesetzt werden, die beispielsweise durch eine hydrophile Modifizierung von Bis-(4-isocyanatocyclo-hexyl)-methan (H₁₂MDI), 1,6-Diisocyanatohexan (HDI), 1-Isocyanato-5-isocyanatomethyl-3,3,5-trimethyl-cyclohexan (IPDI) mit monohydroxyfunktionellen Polyethylenglykolen oder Aminosulfonsäure-Natrium-Salzen zugänglich sind. Als geeignete "Lackpolyisocyanate" können beispielsweise die Handelsprodukte VESTANAT^{®} T 1890 E, VESTANAT^{®} T 1890 L, VESTANAT^{®} T 1890 M, VESTANAT^{®} T 1890 SV, VESTANAT^{®} T 1890/100 (Polyisocyanate auf Basis IPDI-Trimer), VESTANAT^{®} HB 2640 MX, VESTANAT^{®} HB 2640/100, VESTANAT^{®} HB 2640/LV (Polyisocyanate auf Basis HDI-Biuret), VESTANAT^{®} HT 2500 L, VESTANAT^{®} HB 2500/100, VESTANAT^{®} HB 2500/LV (Polyisocyanate auf Basis HDI-Isocyanurat) der Fa. Degussa GmbH, das Handelsprodukt Basonat^{®} HW 100 der Fa. BASF AG, die Handelsprodukte Bayhydur^{®} 3100, Bayhydur^{®} VP LS 2150 BA, Bayhydur^{®} VP LS 2306, Bayhydur^{®} VP LS 2319, Bayhydur^{®} VP LS 2336, Bayhydur^{®} XP 2451, Bayhydur^{®} XP 2487, Bayhydur^{®} XP 2487/1, Bayhydur^{®} XP 2547, Bayhydur^{®} XP 2570, Desmodur^{®} XP 2565 der Fa. Bayer AG, aber auch die Handelsprodukte Rhodocoat^{®} X EZ-M 501, Rhodocoat^{®} X EZ-M 502, Rhodocoat^{®} WT 2102 der Fa. Rhodia eingesetzt werden. Erfindungsgemäß werden als Komponente (D)(i) bevorzugt Isophorondiisocyanat und/oder Toluendiisocyanat und als Komponente (D)(ii), vorzugsweise ein (ggf. hydrophil modifiziertes) Trimer von 1,6-Diisocyanatohexan eingesetzt. Bei den Umsetzungsprodukten a₇), a₈), a₁₁), a₁₂), c₁₂) und c_{1.14}) können auch hydrophil modifizierte Polyisocyanate eingesetzt werden, bei Verwendung von mit monohydroxyfunktionellen Polyethylenglykolen modifizierten Polyisocyanaten kann bei den Umsetzungsprodukten a₈) und c_{1.14}) auf die Verwendung der monofunktionellen Polyalkylenglykol-Komponente (G)(i) und/oder der monofunktionellen Polyoxyalkylenamin-Komponente (G)(ii) verzichtet werden.

Als geeignete Aminoalkylalkoxysilan-Komponente (E)(i) und/oder andere Aminosilan-Komponente (E)(ii) sind beispielsweise die Handelsprodukte DYNASILAN^{®} AMMO (3-Aminopropyltrimethoxysilan), DYNASILAN^{®}AMEO (AMEO-P) (3-Aminopropyltriethoxysilan), DYNASILAN^{®} AMEO-T (proprietäre Aminosilan-Kombination), DYNASILAN^{®} DAMO (DAMO-P) (N-(2-Aminoethyl)-3-aminopropyltrimethoxysilan), DYNASILAN^{®} DAMO-T (proprietäre Aminosilan-Kombination), DYNASILAN^{®} TRIAMO (N-[N'-(2-Aminoethyl)-2-aminoethyl]-3-aminopropyltrimethoxysilan), DYNASILAN^{®} 1122 (Bis-(3-triethoxysilylpropyl)-amin), DYNASILAN^{®} 1126 (proprietäre Aminosilan-Kombination), DYNASILAN^{®} 1146 (diamino/alkyl-funktionelles Siloxan-Cooligomer), DYNASILAN^{®} 1189 (N-Butyl-3-aminopropyltrimethoxysilan), DYNASILAN^{®} 1204 (proprietäre Aminosilan-Kombination), DYNASILAN^{®} 1411 (N-(2-Aminoethyl)-3-aminopropylmethyldimethoxysilan), DYNASILAN^{®} 1505 (3-Aminopropylmethyldiethoxysilan), DYNASILAN^{®} 1506 (3-Aminopropylmethyldiethoxysilan-Zubereituing in Lösemittel), DYNASILAN^{®} 2201 (3-Ureidopropyltriethoxysilan, 50 % in Methanol) der Fa. Degussa GmbH, die Handelsprodukte Silquest^{®} A-1100 Silane, Silquest^{®} A-1101 Silane, Silquest^{®} A-1102 Silane, Silquest^{®} A-1106 Silane, Silquest^{®} A-1110 Silane, Silquest^{®} A-1120 Silane, Silquest^{®} A-1130 Silane, Silquest^{®} A-1160 Silane, Silquest^{®} A-1170 Silane, Silquest^{®} A-1637 Silane, Silquest^{®} A-2120 Silane, Silquest^{®} A-2639 Silane, Silquest^{®} A-Link™ 15 Silane, Silquest^{®} Y-9669 Silane der Fa. GE Silicones und die Handelsprodukte GENIOSIL^{®} GF 9 (N-2-Aminoethyl-3-aminopropyltrimethoxysilan), GENIOSIL^{®} GF 91 (N-2-Aminoethyl-3-aminopropyltrimethoxysilan), GENIOSIL^{®} GF 93 (3-Aminopropyltriethoxysilan), GENIOSIL^{®} GF 95 (N-2-Aminoethyl-3-aminopropylmethyldimethoxysilan), GENIOSIL^{®} GF 96 (3-Aminopropyltrimethoxysilan), GENIOSIL^{®} XL 924 (N-Cyclohexylaminomethylmethyldiethoxysilan), GENIOSIL^{®} XL 926 (N-Cyclohexylaminomethyltriethoxysilan), GENIOSIL^{®} XL 972 (N-Phenylaminomethylmethyldimethoxysilan), GENIOSIL^{®} XL 973 (N-Phenylaminomethyltrimethoxysilan) der Fa. Wacker Chemie GmbH oder geeignete Kombinationen daraus anzusehen. Als bevorzugte Komponente (E)(i) sieht die vorliegende Erfindung 3-Aminopropyltrimethoxysilan und/oder 3-Aminopropyltriethoxysilan und/oder N-(2-Aminoethyl)-3-aminopropyltrimethoxysilan und/oder N-(2-Aminoethyl)-3-aminopropyltriethoxysilan und/oderN-[N'-(2-Aminoethyl)-2-aminoethyl]-3-aminopropyltrimethoxysilan vor.

Als geeignete nichtionischen Silan-Komponente (E)(iii) können beispielsweise die Handelsprodukte DYNASILAN^{®} 4140 (4140-A) (Trimethoxysilylpropylmethylpolyethylenglykol), DYNASILAN^{®} 1211 (polyglycolethermodifiziertes Aminosilan) der Fa. Degussa GmbH, das Handelsprodukt Silquest^{®} A-1230 Silane (Trimethoxysilylpropylmethylpolyethylenglykol) der Fa. GE Silicones oder geeignete Kombinationen daraus eingesetzt werden, wobei als Komponente E(iii) Silane der allgemeinen Formel

H₃C-O-(CH₂CH₂-O)_{z},-(CH₂)₃-Si(OR¹)3,

worin z' = 5 - 15 und R¹ = Me, Et besonders geeignet sind.

Als geeignete Aminosilikonöl-Komponente (E)(iv) können beispielsweise die Handelsprodukte AO 201, AO 202, AO 1000, AO 1001, AO 1002, AO 4000, AO 4001, AO 4500, AO 6500, bestehend aus Aminosiliconölen bzw. hydroxy- und/oder alkoxyterminierten Poly[3-((2-aminoethyl)amino)propyl]-methyl(dimethyl)-siloxan, der Fa. Nitrochemie Aschau GmbH oder geeignete Kombinationen daraus eingesetzt werden.

Die Handelsprodukte DYNASILAN^{®} MTMS (Methyltrimethoxysilan), DYNASILAN^{®} MTES (Methyltriethoxysilan), DYNASILAN^{®} PTMO (Propyltrimethoxysilan), DYNASILAN^{®} PTEO (Propyltriethoxysilan), DYNASILAN^{®} IBTMO (Isobutyltrimethoxysilan), DYNASILAN^{®} IBTEO (Isobutyltriethoxysilan), DYNASILAN^{®} OCTMO (Octyltrimethoxysilan), DYNASILAN^{®} OCTEO (Octyltriethoxysilan), DYNASILAN^{®} 9116 (Hexadecyltrimethoxysilan), DYNASILAN^{®} 9165 (Phenyltrimethoxysilan, früher CP 0330), DYNASILAN^{®} 9265 (Phenylltriethoxysilan, früher CP 0320), DYNASILAN^{®} A (Tetraethylorthosilikat) DYNASILAN^{®} A SQ (Tetraethylorthosilikat, hohe Reinheit), DYNASILAN^{®} M (Tetramethylorthosilikat), DYNASILAN^{®} P (Tetra-n-propyl-silkat), DYNASILAN^{®} BG (Tetrabutylglykolsilikat) DYNASILAN^{®} 40 (Ethylpolysilikat) der Fa. Degussa GmbH oder geeignete Kombinationen daraus sind geeignete niedermolekulare Silan-Komponenten (E)(v).

Als hydrophilierte wässrige Silan-Komponente (E)(vi) sind beispielsweise die Handelsprodukte DYNASILAN^{®} 1161 (kationisches, benzylaminofunktionelles Silan, Hydrochlorid, 50 Gew.-% in Methanol), DYNASILAN^{®} 1172 (kationisches, benzylaminofunktionelles Silan, Hydroacetat, 50 Gew.-% in Methanol), DYNASILAN^{®} 1151 (Aminosilan-Hydrolysat, alkoholfrei), DYNASILAN^{®} HS 2627 (HYDROSIL^{®} 2627) (amino/alkyl-funktionelles Siloxancooligomer, alkoholfrei), DYNASILAN^{®} HS 2775 (HYDROSIL^{®} 2775) (triamino/alkyl-funktionelles Siloxancooligomer, alkoholfrei), DYNASILAN^{®} HS 2776 (HYDROSIL^{®} 2776, alkoholfrei) (diamino/alkyl-funktionelles Siloxancooligomer), DYNASILAN^{®} HS 2781 (HYDROSIL^{®} 2781) (amino/vinylfunktionelles Siloxancooligomer, alkoholfrei), DYNASILAN^{®} HS 2907 (HYDROSIL^{®} 2907) (amino/vinyl-funktionelles Siloxancooligomer, alkoholfrei), DYNASILAN^{®} HS 2909 (HYDROSIL^{®} 2909) (amino/alkyl-funktionelles Siloxancooligomer, alkoholfrei), DYNASILAN^{®} HS 2926 (HYDROSIL^{®} 2926) (epoxy-funktionelles Siloxancooligomer, alkoholfrei) der Fa. Degussa GmbH oder geeignete Kombinationen daraus besonders geeignet.

GeeigneteVertreter der monofunktionellen Hexafluorpropenoxid-Komponente (F)(i) sind beispielsweise monofunktionelle Polyhexafluorpropenoxidcarbonsäuren, Polyhexafluorpropenoxidcarbonsäurefluoride, Polyhexafluorpropenoxidcarbonsäuremethylester der Fa. Dyneon GmbH & Co. KG oder geeignete Kombinationen daraus.

Als geeignete difunktionelle Hexafluorpropenoxid-Komponente (F)(ii) können beispielsweise difunktionelle Polyhexafluorpropenoxidcarbonsäuren, Polyhexafluorpropenoxidcarbonsäurefluoride, Polyhexafluorpropenoxidcarbonsäuremethylester der Fa. Dyneon GmbH & Co. KG oder geeignete Kombinationen daraus eingesetzt werden.

Die Handelsprodukte M 250, M 350, M 350 PU, M 500, M 500 PU, M 750, M 1100, M 2000 S, M 2000 FL, M 5000 S, M 5000 FL, bestehend aus monofunktionellem Methylpolyethylenglykol, B11 / 50, B11 / 70, B11 / 100, B11 / 150, B11 / 150 K, B11 / 300, B11 / 700, bestehend aus monofunktionellem Butyl-poly-(ethylenoxid-*ran*-propylenoxid), der Fa. Clariant GmbH sowie das Handelsprodukt LA-B 729, bestehend aus monfunktionellem Methyl-poly-(ethylenoxid-*block*/*co*-propylenoxid) der Fa. Degussa GmbH oder geeignete Kombinationen daraus stellen geeignete monofunktionelle Polyalkylenglykol-Komponenten (G)(i) dar.

Als geeignete monofunktionelle Polyoxyalkylenamin-Komponente (G)(ii)) kommen beispielsweise die Handelsprodukte JEFFAMINE^{®} XTJ-505 (M-600), JEFFAMINE^{®} XTJ-506 (M-1000), JEFFAMINE^{®} XTJ-507 (M-2005), JEFFAMINE^{®} M-2070, bestehend aus monofunktionellem Polyoxyalkylenamin auf Basis Ethylenoxid und Propylenoxid, der Fa. Huntsman Corporation oder geeignete Kombinationen daraus in Frage.

Typische Vertreter der polyfunktionellen Polyalkylenglykol-Komponente (G)(iii) sind beispielsweise die Handelsprodukte 200, 200 G, 300, 300 G, 400, 400 G, 600, 600 A, 600 PU, 900, 1000, 1000 WA, 1500 S, 1500 FL, 1500 PS, 2000 S, 2000 FL, 3000 S, 3000 P, 3000 FL, 3350 S, 3350 P, 3350 FL, 3350 PS, 3350 PT, 4000 S, 4000 P, 4000 FL, 4000 PS, 4000 PF, 5000 FL, 6000 S, 6000 P, 6000 PS, 6000 FL, 6000 PF, 8000 S, 8000 P, 8000 FL, 8000 PF, 10000 S, 10000 P, 12000 S, 12000 P, 20000 S, 20000 P, 20000 SR, 20000 SRU, 35000 S, bestehend aus difunktionellem Polyethylenglykol, PR 300, PR 450, PR 600, PR 1000, PR 1000 PU, VPO 1962, bestehend aus difunktionellem Poly-(ethylenoxid-*block*-propylenoxid-*block*-ethylenoxid), D21 / 150, D21 / 300, D21 / 700, bestehend aus aus difunktionellem Poly-(ethylenoxid-*ran-*propylenoxid) sowie P41 /200 K, P41 / 300, P41 / 3000, P41 / 120000, bestehend aus tetrafunktionellem Poly-(ethylenoxid-*ran*-propylenoxid), der Fa. Clariant oder geeignete Kombinationen daraus.

Als polyfunktionelle Polyoxyalkylenamin-Komponente (G)(iv) können beispielsweise die Handelsprodukte JEFFAMINE^{®} HK-511 (XTJ-511); JEFFAMINE^{®} XTJ-500 (ED-600), JEFFAMINE^{®} XTJ-502 (ED-2003), bestehend aus difunktionellem Polyoxyalkylenamin auf Basis Ethylenoxid und Propylenoxid, der Fa. Huntsman Corporation oder geeignete Kombinationen daraus eingesetzt werden.

Cyanurchlorid bzw. 2,4,6-Trichlor-1,3,5-triazin der Fa. Degussa GmbH sind geeignete Triazin-Komponenten (H).

Als Hydroxycarbonsäure-Komponente (I) sind beispielsweise 2-Hydroxymethyl-3-hydroxypropansäure bzw. Dimethylolessigsäure, 2-Hydroxymethyl-2-methyl-3-hydroxypropansäure bzw. Dimethylolpropionsäure, 2-Hydroxymethyl-2-ethyl-3-hydroxypropansäure bzw. Dimethylolbuttersäure, 2-Hydroxymethyl-2-propyl-3-hydroxypropansäure bzw. Dimethylolvaleriansäure, Hydroxypivalinsäure (HPA), Citronensäure, Weinsäure oder geeignete Kombinationen daraus geeignet. Vorzugsweise werden erfindungsgemäß Citronensäure und/oder Hydroxypivalinsäure und/oder Dimethylolpropionsäure eingesetzt. Im Bedarfsfall können auch amino- und ggf. hydrofunktionelle Carbonsäuren wie 2-Hydroxyethansäure oder amino- und/oder hydrofunktionelle Sulfonsäuren wie 2-Aminoethansäure, Tris-(hydroxymethyl)-methyl]-3-aminopropansulfonsäure eingesetzt werden.

Als NCN-Komponente (J) kann beispielsweise Cyanamid der Fa. Degussa GmbH eingesetzt werden.

Hinsichtlich Carbonyl-Komponente (K) sind beispielsweise Phosgen, Diphosgen, Triphosgen, aliphatische und/oder aromatische Chlorameisensäureester wie Chlorameisensäuremethylester, Chlorameisensäureethylester, Chlorameisensäureisopropylester, Chlorameisensäurephenylester, aliphatische und/oder aromatische Kohlensäureester wie Dimethylcarbonat, Diethylcarbonat, Diisopropylcarbonat, Diphenylcarbonat oder geeignete Kombination daraus als geeignet anzusehen. Vorzugsweise werden im Rahmen dieser Erfindung Phosgen und/oder Chlorameisensäureethylester und/oder Diethylcarbonat eingesetzt. Als geeignete Carbonyl-Komponente (A₈) können weiterhin beispielsweise vorgefertigte Addukte aus der Komponente (K) und den Komponenten (B)(i) und/oder (B)(ii) und/oder (B)(iii) oder vorgefertigte Addukte aus der Komponente (K) und den Komponenten (E)(i) und/oder (E)(ii) wie das Handelsprodukt GENIOSIL^{®} XL 63 (N-(Trimethoxysilylmethyl)-O-methyl-carbamat der Fa. Wacker-Chemie GmbH, N-(Triethoxysilylmethyl)-O-methyl-carbamat, N-(Trimethoxysilylmethyl)-O-ethyl-carbamat, N-(Triethoxysilylmethyl)-O-ethyl-carbamat, N-(Trimethoxysilylpropyl)-O-methyl-carbamat, N-(Triethoxysilylpropyl)-O-methyl-carbamat, N-(Trimethoxysilylpropyl)-O-ethyl-carbamat, N-(Triethoxysilylpropyl)-O-ethyl-carbamat oder geeignete Kombination daraus eingesetzt werden. Vorzugsweise werden Chloroformiate bzw. Phosgen-Derivate der Komponenten (B)(i) und/oder (B)(ii) und/oder (B)(iii) und/oder Carbamate der Komponenten (E)(i) und/oder (E)(ii) eingesetzt.

Geeignete Mercaptoalkylalkoxysilan-Komponenten (L)(i) und/oder andere Mercaptosilan-Komponente (L)(ii) stellen beispielsweise die Handelsprodukte DYNASILAN^{®} MTMO (3-Mercaptopropyltrimethoxysilan), DYNASILAN^{®} MTEO (3-Mercaptopropyltriethoxysilan) der Fa. Degussa GmbH oder geeignete Kombination daraus dar. Vorzugsweise werden 3-Mercaptopropyltrimethoxysilan und/oder 3-Mercaptopropyltriethoxysilan eingesetzt.

Als geeignete (Per)fluoralkylalkylenoxid-Komponente (M) können beispielsweise 4,4,5,5,6,6,7,7,8,8,9,9,9-Tridecafluornonen-1,2-oxid, 4,4,5,5,6,6,7,7,8,8,9,9,10,10,11,11,11-Heptadecafluorundecen-1,2-oxid, 4,4,5,5,6,6,7,7,8,8,9,9,10,10,11,11,12,12,13,13,13-Heneicosafluortridecen-1,2-oxid, Glycidyl-2,2,3,3,4,4,5,5,6,6,7,7-dodecafluorheptylether, Glycidyl-2,2,3,3,4,4,5,5,6,6,7,7,8,8,9,9-hexadecafluornonylether, Glycidyl-2,2,3,3,4,4,5,5,6,6,7,7,8,8,9,9,10,10,11,11-eicosafluorundecylether, die Handelsprodukte E-1830, E-2030, E-3630, E-3830, E-5644, E-5844 der Fa. Daikin Industries, Ltd. oder geeignete Kombination daraus eingesetzt werden. Als besonders bevorzugt sind 4,4,5,5,6,6,7,7,8,8,9,9,9-Tridecafluornonen-1,2-oxid und/oder 4,4,5,5,6,6,7,7,8,8,9,9,10,10,11,11,11-Heptadecafluorundecen-1,2-oxid anzusehen.

Geeignete Epoxyalkylolalkoxysilan-Komponente (N)(i) und/oder andere Epoxysilan-Komponente (N)(ii) sind beispielsweise die Handelsprodukte DYNASILAN^{®} GLYMO ((3-Glycidyloxypropyl)trimethoxysilan), DYNASILAN^{®} GLYEO ((3-Glycidyloxypropyl)triethoxysilan) der Fa. Degussa GmbH, die Handelsprodukte CoatOSil^{®} 1770, Silquest^{®} A-187 Silane, Silquest^{®} A-186 Silane, Silquest^{®} WetLink 78 Silane der Fa. GE Silicones, die Handelsprodukte GENIOSIL^{®} GF 80 ((3-Glycidyloxypropyl)trimethoxysilan), GENIOSIL^{®} GF 82 ((3-Glycidyloxypropyl)triethoxysilan) der Fa. Wacker-Chemie GmbH oder geeignete Kombinationen daraus , wobei 3-Glycidyloxypropyltrimethoxysilan und/oder 3-Glycidyloxypropyltriethoxysilan besonders geeignet sind.

Geeignete Polyamin-Komponenten (O) sind beispielsweise Adipinsäuredihydrazid, Ethylendiamin, Diethylentriamin, Triethylentetramin, Tetraethylenpentamin, Pentaethylenhexamin, Dipropylentriamin, Hexamethylendiamin, Hydrazin(-Hydrat), Isophorondiamin, N-(2-Aminoethyl)-2-aminoethanol, N,N'-Bis-(2-hydroxyethyl)-ethylendiamin oder geeignete Kombinationen daraus, wobei Ethylendiamin als bevorzugt anzusehen ist.

Als geeignete polyhedrale oligomere Polysilasesquioxan-Komponenten (P)(i) und/oder (P)(ii) und/oder (P)(iii) können beispielsweise Polysilasesquioxane mit einer oder mehreren Amino- und/oder Hydroxyl- und/oder Isocyanato- und/oder MercaptoGruppen und einer oder mehreren Perfluoralkyl-Gruppen der allgemeinen Formel

(R⁹ᵤR⁹ᵥR¹⁰_{w}SiO_{1.5})₈

worin 0 < u < 1, 0 < v < 1, 0 < w < 1, u + v + w = 1, R⁸, R⁹, R¹⁰ = unabhängig voneinander beliebiger anorganischer und/oder organischer und ggf. polymerer Rest mit 1 bis 250C-Atomen und 0 bis 50 N- und/oder 1 bis 50 O-
und/oder 3 bis 100 F- und/oder 0 bis 50 Si- und/oder 0 bis 50 S-Atomen,
sowie die Handelsprodukte Creasil^{®} der Fa. Degussa GmbH und die Handelsprodukte POSS^{®} der Fa. Hybrid Plastrics, Inc. oder geeignete Kombinationen daraus eingesetzt werden.

Im Rahmen der vorliegenden Erfindung kommen als Aminoalkohol-Komponente (Q)(i) und/oder andere Aminoalkohol-Komponente (Q)(ii) beispielsweise Ethanolamin, N-Methylethanolamin, Diethanolamin, Diisopropanolamin, 3-((2-Hydroxyethyl)amino)-1-propanol, Trimethylolmethylamin, Aminozucker wie Galactosamin, Glucamin, Glucosamin, Neuraminsäure oder geeignete Kombinationen in Frage, wobei es sich bei Diethanolamin und/oder Diisopropanolamin und/oder Trimethylolmethylamin und/oder Aminozucker um besonders bevorzugte Verbindungen handelt.

Als Katalysator-Komponente (R) sind beispielsweise Dibutylzinnoxid, Dibutylzinndilaurat (DBTL), Triethylamin, Zinn(II)-octoat, 1,4-Diaza-bicyclo[2,2,2]octan (DABCO), 1,4-Diaza-bicyclo[3,2,0]-5-nonen (DBN), 1,5-Diaza-bicyclo[5,4,0]-7-undecen (DBU), Morpholin-Derivate wie z. B. JEFFCAT^{®} Amine Catalysts oder geeignete Kombinationen daraus geeignet.

Hinsichtlich der Lösemittel-Komponente (S)(i) schlägt die vorliegende Erfindung niedrigsiedende Lösemittel, wie Aceton, Butanon, oder hochsiedende Lösemittel, wie N-Methyl-2-pyrrolidon, N-Ethyl-2-pyrrolidon, Dipropylenglykoldimethylether (Proglyde DMM^{®}) oder geeignete Kombinationen daraus, vor. Die Lösemittel-komponente (S)(i) ist gegenüber Isocyanat-Gruppen inert.

Als Lösemittel-Komponente (S)(ii) werden beispielsweise niedrigsiedende Lösemittel und vorzugsweise Ethanol, Methanol, 2-Propanol oder geeignete Kombinationen daraus eingesetzt.

Geeignete Stabilisierung-Komponenten (T) sind beispielsweise anionisch und/oder kationisch und/oder nichtionisch hydrophil modifizierte und silanmodifizierte Umsetzungsprodukte, die üblicherweise durch eine (Poly)additionsreaktion und/oder Additions-/Elimierungsreaktionen hergestellt werden.

Als Säure-Komponente (U)(i) eignen sich insbesondere Acrylsäure, Methacrylsäure, Maleinsäure, Fumarsäure, Itaconsäure, 2-Acrylamido-2-methylpropan-1-sulfonsäure (AMPS^{®}) oder geeignete Kombinationen daraus, wobei Acrylsäure als bevorzugt anzusehen ist.

Als geeignete Säure-Komponente (U)(ii) können beispielsweise Acrylsäureanhydrid, Methacrylsäureanhydrid, Maleinsäureanhydrid, Itaconsäureanhydrid oder geeignete Kombinationen daraus eingesetzt werden, mit Maleinsäureanhydrid als bevorzugtem Vertreter.

Geeignete Säure-Komponenten (U)(iii) sind γ- und/oder δ-Lactone von Zuckersäuren bzw. Polyhydroxy(di)carbonsäuren bzw. Polyhydroxycarbonsäurealdehyden wie D-Glucono-δ-lacton, D-Glucurono-δ-lacton, Ascorbinsäure, Aldonsäure-γ/δ-lactone, Uronsäure-γ/δ-lactone, D-Glucarsäure γ/δ-lactone oder geeignete Kombinationen, wobeiD-Glucono-δ-lacton vorzuziehen ist.

Salzsäure wird als typische Säure-Komponente (U)(v) eingesetzt. Es sind aber auch andere ein- oder mehrbasige organische Säuren wie Ameisensäure, Essigsäure, Oxalsäure, Malonsäure, Citronensäure, ein- oder mehrbasige anorganische Säuren wie Amidosulfonsäure, Schwefelsäure, Phosphorsäure oder geeignete Kombinationen daraus geeignet.

Polyalkylenglykolmodifizierte und silanmodifizierte Umsetzungsprodukte, die durch (Poly)additionsreaktion und/oder Additions-/Elimierungsreaktionen hergestellt werden, sind geeignete hydrophile Silan-Komponenten (V).

Als geeignete Aktivator-Komponente (X) bieten sich beispielsweise wasser- und lösemittelhaltige Säuren an.

Als Formulierungs-Komponente (Y)(i) sind zahlreiche Vertreter geeignet. Erfindungsgemäß geeignet sind (funktionalisierte) anorganische und/oder organische Füllstoffe und/oder Leichtfüllstoffe, (funktionalisierte) anorganische und/oder organische Pigmente, (funktionalisierte) anorganische und/oder organische Trägermaterialien, anorganische und/oder organische Fasern, Graphit, Ruß, Kohlefasern, Carbon Nanotubes (also Kohlenstoff-Nanoröhren), Metallfasern und -pulver, leitfähige organische Polymere, weitere Polymere und/oder redispergierbare Polymer-Pulver, Superabsorber, weitere anorganische und/oder organische Verbindungen, Entschäumer, Entlüfter, Gleit- und Verlaufadditive, Substratnetzadditive, Netz- und Dispergieradditive, Hydrophobierungsmittel, Rheologieadditive, Koaleszenzhilfsmittel, Mattierungsmittel, Haftvermittler, Frostschutzmittel, Antioxidantien, UV-Stabilisatoren, Biozide, Wasser, Lösemittel, Katalysatoren oder geeignete Kombinationen daraus.

Die erfindungsgemäße (reaktive) Nanopartikel-Komponente (Y)(ii) wird beispielsweise durch pyrogene Kieselsäure (SiO₂) wie AEROSIL^{®} pyrogene Kieselsäuren, mit seltenen Erden (RE) dotierte pyrogene Kieselsäuren wie AEROSIL^{®} pyrogene Kieselsäuren/RE dotiert, silberdotierte pyrogene Kieselsäuren wie AEROSIL^{®} pyrogene Kieselsäuren/Ag dotiert, Siliziumdioxid-Aluminiumoxid-Mischung (Mullit) wie AEROSIL^{®} pyrogene Kieselsäuren + Al₂O₃, Siliziumdioxid-Titandioxid-Mischung wie AEROSIL^{®} pyrogene Kieselsäuren + TiO₂, Aluminiumoxid (Al₂O₃) wie AEROXIDE^{®} AluC, Titandioxid (TiO₂) wie AEROXIDE^{®} TiO₂ P25, Zirkondioxid (ZrO₂) VP Zirkonoxid PH, Yttrium-stabilisiertes Zirkondioxid wie VP Zirkonoxid 3YSZ, Cerdioxid (CeO₂) wie AdNano^{®} Ceria, Indiumzinnoxid (ITO, In₂O₃/SnO₂) wie Adnano^{®} ITO, nanoskaliges Eisenoxid (Fe₂O₃) in einer Matrix aus pyrogener Kieselsäure wie AdNano^{®} MagSilica, Zinkoxid (ZnO) wie AdNano^{®} Zinc Oxide der Fa. Degussa GmbH repräsentiert. Bevorzugt werden Siliziumdioxid und/oder Titandioxid und/oder Zinkoxid eingesetzt.

Nanopartikel-Dispersionen können durch Einbringen von Nanopartikeln in Wasser oder in Dispersionen (z. B. in Polymer-Dispersionen) mittels geeigneter Dispergiervorrichtungen und hohem Energieeintag hergestellt werden. Hierfür sind vor allem Dispergiervorrichtungen geeignet, die einen hohen Energieeintrag bewirken, wie Dissolver, Planetenkneter, Rotor-Stator-Maschinen, Ultraschallvorrichtungen oder Hochdruckhomogenisatoren; beispielhaft sind das Nanomizer^{®}- oder Ultimizer^{®}-System genannt.

Mindestens 50 Gew. % der gesamten (reaktiven) Nanopartikel-Komponente (Y)(ii) haben eine Partikelgröße von maximal 500 nm (Norm: DIN 53206-1, Prüfung von Pigmenten; Teilchengrößenanalyse, Grundbegriffe) und die Gesamtheit der Partikel, die diese Partikelgröße von maximal 500 nm aufweisen haben eine spezifische Oberfläche (Norm: DIN 66131, Bestimmung der spezifischen Oberfläche von Feststoffen durch Gasadsorption nach *Brunauer, Emmet und Teller* (BET)) von 10 bis 200 m²/g.

Vorgesehen ist ebenfalls, dass mindestens 70 Gew. % und bevorzugt mindestens 90 Gew. % der gesamten (reaktive) Nanopartikel-Komponente (Y)(ii) eine Partikelgröße von 10 bis 300 nm (Norm: DIN 53206-1, Prüfung von Pigmenten; Teilchengrößenanalyse, Grundbegriffe) haben, die Gesamtheit der Partikel, die diese Partikelgröße von 10 bis 300 nm aufweisen, sollen erfindungsgemäß eine spezifische Oberfläche (Norm: DIN 66131, Bestimmung der spezifischen Oberfläche von Feststoffen durch Gasadsorption nach *Brunauer, Emmet und Teller* (BET)) von 30 bis 100 m²/g haben.

Die Formulierungs-Komponente (Y)(i) und die (reaktive) Nanopartikel-Komponente (Y)(ii) können entsprechend der vorliegenden Erfindung in beschichteter und/oder mikroverkapselter und/oder trägerfixierter und/oder hydrophilierter und/oder lösemittelhaltiger Form vorliegen und ggf. retardiert freigesetzt werden.

Als geeignete Funktionalisierungs-Komponente (Z) können beispielsweise funktionialisierte Silane und/oder Siloxane und Nanopartikel eingesetzt werden.

Ein weiterer Gegenstand der vorliegenden Erfindung betrifft ein Verfahren zur Herstellung der erfindungsgemäßen fluorhaltigen Zusammensetzungen. Dabei wird
a) eine Fluorsilan-Komponente (A)(i) durch Umsetzung der Komponenten
   a₁) (B)(i), (B)(ii), (B)(iii) und (C) und/oder
   a₂) (B)(i), (B)(ii), (B)(iii), (D)(i), (E)(i) und (E)(ii) und/oder
   a₃) (B)(iv), (E)(i) und (E)(ii) und/oder
   a₄) (B)(v), (E)(i) und (E)(ii) und/oder
   a₅) (F)(i), (E)(i) und (E)(ii) und/oder
   a₆) (F)(ii), (E)(i) und (E)(ii) und/oder
   a₇) (B)(i), (B)(ii), (B)(iii), (E)(i), (E)(ii) und (D)(ii) und/oder
   a₈) (B)(i), (B)(ii), (B)(iii), (E)(i), (E)(ii), (G)(i), (G)(ii) und (D)(ii) und/oder
   a₉) (B)(i), (B)(ii), (B)(iii), (E)(i), (E)(ii) und (H) und/oder
   a₁₀) (B)(i), (B)(ii), (B)(iii), (E)(i), (E)(ii), (G)(i), (G)(ii) und (H) und/oder
   a₁₁) (B)(i), (B)(ii), (B)(iii), (E)(i), (E)(ii), (G)(iii), (G)(iv) und (D)(i) und/oder
   a₁₂) (B)(i), (B)(ii), (B)(iii), (E)(i), (E)(ii), (I) und (D)(ii) und/oder
   a₁₃) (B)(i), (B)(ii), (B)(iii), (E)(i), (E)(ii), (J) und (D)(ii) und/oder
   a₁₄) (B)(i), (B)(ii), (B)(iii), (E)(i), (E)(ii) und (K) und/oder
   a₁₅) gemäß a₂) bis a₁₄), wobei die Komponenten (E)(i) und E(ii) durch die Komponenten (L)(i) und (L)(ii) ersetzt werden und/oder
   a₁₆) (M), (E)(i) und (E)(ii) und/oder
   a₁₇) (M), (N)(i), (N)(ii) und (O) und/oder
   a₁₈) (P)(i), (E)(i) und (E)(ii) und/oder
   a₁₉) (P)(ii), (C)(i) und (C)(ii) und/oder
   a₂₀) (P)(iii), (Q)(i) und (Q)(ii)
      hergestellt
      oder es werden alternativ gemäß a₂₁) bis a₂₂) vorgefertigte Fluorsilane (A)(ii) eingesetzt,
      wobei neben der reinen Fluorsilan-Komponente (A) ggf. eine Katalysator-Komponente (R) und ggf. eine Lösemittel-Komponente (S)(i) anwesend sind; anschließend wird
   c_{1.3}) (I), (C)(i) und (C)(ii) und/oder
   c_{1.4}) (I), (E)(i), (E)(ii) und (D)(i) und/oder
   c_{1.5}) (J), (C)(i) und (C)(ii) und/oder
   c_{1.6}) (J), (E)(i), (E)(ii) und (D)(i) und/oder
   c_{1.7}) (E)(i), (E)(ii) und (U)(i) und/oder
   c_{1.8}) (E)(i), (E)(ii) und (U)(ii) und/oder
   c_{1.9}) (E)(i), (E)(ii) und (U)(iii),
      hergestellt,
      wobei neben der reinen Stabilisierungs-Komponente (T) ggf. eine Katalysator-Komponente (R), ggf. eine Lösemittel-Komponente (S)(i) und ggf. eine Lösemittel-Komponente (S)(ii) anwesend sind,
      und eine hydrophile Silan-Komponente (V) durch
   _{c1.10}) Einsatz der Komponente (E)(iii) und/oder Umsetzung der Komponenten
   c_{1.11}) (G)(i), (G)(ii), (G)(iii), (G)(iv), (C)(i) und (C)(ii) und/oder
   c_{1.12}) (G)(i) und (G)(ii) (G)(iii) (G)(iv), (E)(i) (E)(ii) und (D)(i) und/oder
   c_{1.13}) (G)(ii), (G)(iv), (N)(i) und (N)(ii) und/oder
   c_{1.14}) (G)(i), (G)(ii), (E)(i), (E)(ii) und (D)(ii) und/oder
   C_{1.15}) (G)(i), (G)(ii), (E)(i), (E)(ii) und (H),
      hergestellt,
      wobei neben der reinen hydrophilen Silan-Komponente (V) ggf. eine Katalysator-Komponente (R), ggf. eine Lösemittel-Komponente (S)(i) und ggf. eine Lösemittel-Komponente (S)(ii) anwesend sind,
      die Fluorsilan-Komponente (A) aus den Stufen a) oder b), die Stabilisierungs-Komponente (T) und die hydrophile Silan-Komponente (V) aus der Stufe c), wobei die Lösemittel-Komponenten (S)(i) und/oder (S)(ii) vor, während oder nach der Umsetzung bzw. Mischung durch Destillation teilweise oder vollständig entfernt
   e₃) (E)(vi) und/oder
   e₄) (Y)(ii),
      zugesetzt und/oder mit umgesetzt werden.

In einer weiteren Verfahrensvariante können die Komponenten (A)(i) aus Reaktionstufe a) und (V) aus Reaktionsstufe c) simultan hergestellt bzw. abgemischt werden.

Von der vorliegenden Erfindung ist ebenfalls umfasst, die fluorhaltigen Zusammensetzungen bzw. (per)fluoralkylfunktionellen Organosilane gemäß den Reaktionsstufen a) und b) ebenso in einkomponentiger Form einzusetzen, wie die fluorhaltigen Zusammensetzungen bzw. (per)fluoralkylfunktionellen Organopolysiloxan-Prekondensate bzw. (per)fluoralkylfunktionellen Organosiloxan-Kondensate gemäß den Reaktionsstufen c) und d).

Hinsichtlich der Reaktionstemperaturen wird vorgeschlagen, die Reaktionsstufe a) bei einer Temperatur von 40 bis 120 °C, vorzugsweise bei 50 bis 110 °C, und die Reaktionsstufen b) bis e) bei einer Temperatur von 20 bis 120 °C, vorzugsweise bei 50 bis 110 °C, durchzuführen.

Der Festkörpergehalt der fluorhaltigen Zusammensetzungen bestehend aus den Komponenten (A), (Y)(i) und (Z) sollte in den Reaktionsstufen a) und b) auf 5 bis 100 Gew.-%, vorzugsweise auf 100 Gew.-% eingestellt werden. Der Festkörpergehalt der fluorhaltigen Zusammensetzungen bestehend aus den Komponenten (A), (U)(v), (T), (V), (Y)(i) und (Z) wird in Reaktionsstufe d) auf 0,001 bis 10 Gew.-%, vorzugsweise auf 0,005 bis 5 Gew.-% und besonders bevorzugt auf 0,1 bis 1,5 Gew.-% eingestellt.

Für die Reaktionsstufen d) sieht die vorliegende Erfindung pH-Werte der fluorhaltigen Zusammensetzungen vor, die unabhängig voneinander auf 1 bis 14, vorzugsweise auf 2 bis 6 und besonders bevorzugt auf 3 bis 5 eingestellt wurden.

Schließlich betrifft ein weiterer Gegenstand der vorliegenden Erfindung die Verwendung der erfindungsgemäßen fluorhaltigen Zusammensetzungen im Bau- oder Industriebereich zur permanenten öl-, wasser- und schmutzabweisenden Oberflächenbehandlung bzw. -modifizierung von mineralischen und nichtmineralischen Untergründen, wie z. B.
- Anorganische Oberflächen,
   wie z. B. poröse und nichtporöse, saugende und nichtsaugende, raue und polierte Baumaterialien und Bauwerkstoffe aller Art auf Basis von Zement (Beton, Mörtel), Kalk, Gips, Anhydrit, Geopolymeren, Kieselsäure und Silikate, Kunststein, Naturstein (wie z. B. Granit, Marmor, Sandstein, Schiefer, Serpentin), Ton) sowie Emaille, Füllstoffe und Pigmente, Glas und Glasfasern, Keramik, Metalle und Metalllegierungen,
- Organische Oberflächen,
   wie z. B. Gewebe und Textilien, Holz und Holzwerkstoffe, Gummi, Holzfurnier, glasfaserverstärkte Kunststoffe (GFK), Kunststoffe, Leder und Kunstleder, Naturfasern, Papier, Polymere aller Art,
- Verbundmaterialien aller Art, ggf. mit nanoskaligen Bestandteilen.
   Die erfindungsgemäßen fluorhaltigen Zusammensetzungen sind insbesonde auch geeignet zur permanenten öl-, wasser- und schmutzabweisenden Oberflächenbehandlung bzw. -modifizierung und hier vor allem im on-site und/oder off-site-Bereich von Bau und Industrie , wie z. B. für die Anwendungen
- Hydrophobierung und Oleophobierung
- Antigraffiti
- Antisoiling
- Easy-To-Clean
- Low Dirt Pick-Up
- nanostrukturierte Oberflächen mit Lotus-Effekt^{®}
- Bautenschutz
- Korrosionsschutz
- Abdichtungen
- Beschichtungen
- Imprägnierungen
- Versiegelungen.

Außerdem sind die erfindungsgemäßen fluorhaltigen Zusammensetzungen im genannten Bereich von Bau und Industrie (on-site und/oder off-site) für die folgenden Anwendungsgebiete geeignet:
- Additive für Lack- und Beschichtungssysteme
- Automobil- und Kraftfahrzeugindustrie
- Betonfertigteile
- Betonformteile
- Ortbeton
- Spritzbeton
- Transportbeton
- Dachziegel
- Elektro- und Elektronikindustrie
- Farben und Lacke
- Fliesen und Fugen
- Gewebe und Textilien
- Glasfassaden und Glasoberflächen
- Holzbe- und -verarbeitung (Furniere, Imprägnierung)
- Keramik und Sanitärkeramik
- Kleb- und Dichtstoffe
- Korrosionsschutz
- Lärmschutzwände
- Kunststofffolien
- Lederzurichtung
- Oberflächenmodifizierung von Füllstoffen, Pigmenten, Nanopartikeln
- Papier- und Pappebeschichtung
- Putze und Dekorputze
- Wärmedämmverbundsysteme (WDVS) und Wärmedämmsysteme (WDS)
- Zementfaserplatten.
   Hervorzuheben ist in diesem Zusammenhang insbesondere die Eignung der erfindungsgemäßen fluorhaltigen Zusammensetzungen zur Massenhydrophobierung/- oleophobierung von Beton im Bau- oder Industriebereich (on-site und/oder off-site), wie z. B.
- Baustellenbeton
- Betonerzeugnisse (Betonfertigteile, Betonwaren, Betonwerksteine)
- Ortbeton
- Spritzbeton
- Transportbeton.

Die erfindungsgemäßen fluorhaltigen Zusammensetzungen sind weiterhin hervorragend geeignet als Monomere bzw. Makromonomere für Sol-Gel-Systeme.

Die erfindungsgemäßen (per)fluoralkylfunktionellen Organopolysiloxan-Kondensate können somit in hervorragender Weise als Mittel zur Hydrophobierung und/oder Oleophobierung von Oberflächen, als Bautenschutzmittel, als Mittel für die Behandlung von Beton, mineralischer Naturstoffe sowie glasierter und unglasierter keramischer Produkte, als Zusatz in Zubereitungen zur Oberflächenbehandlung, für "Anti-Graffiti"-Anwendungen sowie in Mitteln für "Anti-Graffiti"-Anwendungen, für "Easy-To-Clean"-Anwendungen sowie in Mitteln für "Easy-To-Clean"-Anwendungen, als wasserlöslicher Haftvermittler, als Bestandteil in Beschichtungssystemen sowie in Korrosionsschutzmitteln, für die biozide Ausrüstung von Oberflächen, für die Behandlung von Holz, für die Behandlung von Leder, Lederprodukten und Pelzen, für die Behandlung von Glasoberflächen, für die Behandlung von Flachglas, für die Behandlung von Kunststoffoberflächen, für die Herstellung pharmazeutischer und kosmetischer Produkte, für die Modifizierung von Glas- und Mineraloberflächen sowie Glas- und Mineralfaseroberflächen, für die Herstellung von Kunststeinen, für die Abwasserbehandlung, für die Oberflächenmodifizierung und Behandlung von Pigmenten sowie als Bestandteil in Farben und Lacken verwendet werden.

Die Applikation der (per)fluoralkylfunktionellen Organopolysiloxan-Kondensate gemäß Erfindung kann aus einer 50%igen Lösung oder einer verdünnten Lösung erfolgen,
wobei als Verdünnungsmittel beispielsweise Wasser verwendet werden kann. Grundsätzlich ist es auch möglich, die erfindungsgemäße Zusammensetzung mit einem entsprechenden Alkohol zu verdünnen.

Darüber hinaus bewirken die beanspruchten (per)fluoralkylfunktionellen Organopolysiloxan-Kondensate ein nochmals verbessertes Abperlverhalten einer entsprechend behandelten, mineralischen Oberfläche - sowohl unter Verwendung hydrophiler, als auch hydrophober Standardtestflüssigkeiten (Tests gemäß "Teflon^{®} Specification Test Kit" der Firma DuPont de Nemours). An dieser Stelle wird auf die Beispiele verwiesen.

Die erfindungsgemäßen Zusammensetzungen werden in vorteilhafter Weise in einer Menge von 0,00001 bis 1 kg pro m² der zu beschichtenden Fläche und pro Arbeitsgang eingesetzt.

Generell kann die Applikation der beanspruchten Zusammensetzungen mit den aus der Lacktechnologie bekannten Methoden, wie z. B. Fluten, Gießen, HVLP-Verfahren, Rakeln, Rollen, Spritzen, Streichen, Tauchen und Walzen erfolgen.

Aufgrund ihrer oligomeren Struktur enthalten die erfindungsgemäßen fluorhaltigen Zusammensetzungen bevorzugt eine hohe Konzentration an Silanol-Funktionen, die sie in hervorragender Weise zur Reaktion mit hydroxylgruppenhaltigen Substratoberflächen befähigt. Beschichtungen und Imprägnierungen mit diversen Substraten zeigen ausgezeichnete öl- und gleichzeitig wasserabweisende Eigenschaften, auch nach Temperatur-, Tensid- und UV-Behandlung. In entsprechenden Untersuchungen konnte zudem auf verschiedenen Substraten gezeigt werden, dass auch nach > 6 Monaten keine Verringerung der Wirksamkeit bzw. eine Destabilisierung der erfindungsgemäßen fluorhaltigen Zusammensetzungen erkennbar war. Bei der Anwendung der erfindungsgemäßen fluorhaltigen Zusammensetzungen kann man in einfacher und hervorragender Weise zugleich eine hydrophobierende, oleophobierende, schmutz- und farbabweisende Wirkung auf den unterschiedlichsten Substratoberflächen erzielen.

Die Trocknung und Aushärtung der aus den erfindungsgemäßen Zusammensetzungen hergestellten Beschichtungen erfolgt im Allgemeinen bei normalen (Außen- und Innen-)Temperaturen im Bereich von 0 bis 50 °C, d.h. ohne spezielles Erhitzen der Beschichtungen. Je nach Anwendung kann dies aber durchaus auch bei höheren Temperaturen bis 150 °C erfolgen.

Die nachfolgenden Beispiele sollen die Erfindung näher veranschaulichen.

### Beispiele

### Verwendete Chemikalien:

| | |
|---|---|
| Fluowet^{®} EA 612: | Fluoralkoholgemisch der Fa. Clariant GmbH |
| Fluowet^{®} EA 812 AC: | Fluoralkoholgemisch der Fa. Clariant GmbH |
| Daikin A-1820: | Fluoralkohol der Fa. Daikin Industries, Ltd. |
| Silquest^{®} A-1230 Silane: | polyethermodifiziertes Alkoxysilan der Fa. GE-Silicones |
| HFPO-Oligomermethylester: | monofunktioneller Polyhexafluorpropenoxidcarbonsäure-methylester der Fa. Dyneon GmbH & Co. KG |
| DYNASILAN^{®} AMEO: | 3-Aminopropyltriethoxysilan der Fa. Degussa GmbH |
| DYNASILAN^{®} AMMO: | 3-Aminopropyltrimethoxysilan der Fa. Degussa GmbH |
| DYNASILAN^{®} TRIAMO: | N-[N'-(2-Aminoethyl)-2-aminoethyl]-3-aminopropyltrimethoxysilan der Fa. Degussa GmbH |
| MPEG 300, 500, 1000: | monohydroxyfunktionelles Methyl-polyethylenglykol der Molmasse 300, 500, 1000 g/mol |
| DBTL: | Dibutylzinndilaurat |

### Beispiel 1: Fluorsilan (1)

In einem 500-mL Dreihalsrundkolben mit Innenthermometer, KPG-Rührer und Dimrothkühler wurde ein Gemisch aus 200,00 g (561,96 mmol) Fluowet^{®} EA 612 und 143,31 g (561,98 mmol) 3-(Triethoxysilyl)propylisocyanat vorgelegt. Nach Zugabe von 0,34 g DBTL als Katalysator wurde das Reaktionsgemisch auf 55 °C erhitzt und ca. 2 h bis zur vollständigen Umsetzung bei dieser Temperatur gerührt. Als Produkt wurde eine viskose Flüssigkeit mit partiellem Feststoffanteil und einem Rest-NCO-Gehalt von 0,18 Gew.-% erhalten.

Isocyanat-Gehalt: berechnet: 0 Gew.-%, gefunden: 0,18 Gew.%

### Beispiel 2: Fluorsilan (2)

In einem 100-mL Dreihalsrundkolben mit Innenthermometer, Tropftrichter, Luftkühler und Rührmagnet wurden 44,00 g (84,42 mmol) Fluowet^{®} EA 812 AC vorgelegt und nach Zugabe von 0,07 g DBTL als Katalysator auf 70 °C erhitzt. Bei dieser Temperatur wurden 21,75 g (84,41 mmol) 3-(Triethoxysilyl)propylisocyanat über einen Zeitraum von 1 h zugetropft. Zur Vervollständigung der Reaktion wurde weitere 2 h bei Raumtemperatur nachgerührt. Als Produkt wurde eine viskose Flüssigkeit mit partiellem Feststoffanteil und einem Rest-NCO-Gehalt von 0,08 Gew.-% erhalten.

Isocyanat-Gehalt: berechnet: 0 Gew.-%, gefunden: 0,08 Gew.%

Dieses Fluorsilan wurde nicht weiterverarbeitet.

### Beispiel 3: Fluorsilan (3)

In einem 250 mL Dreihalsrundkolben ausgerüstet mit Tropftrichter, KPG-Rührer und Rückflusskühler wurden 100 g HFPO-Oligomermethylester (Mₙ = 1008 g/mol, 0,099 mol) vorgelegt. Unter Rühren wurden 17,75 g DYNASILAN^{®} AMMO (M = 179,29 g/mol, 0,099 mol) langsam zudosiert und 30 min nachgerührt. Zur Vervollständigung der Reaktion wurde anschließend weitere 3 h bei 60 °C gerührt und der entstandene Hydrolysealkohol im Vakuum abdestilliert. Als Produkt wurde eine farblose, leicht viskose Flüssigkeit erhalten. Dieses Produkt wurde nicht weiterverarbeitet.

### Beispiel 4: Stabilisierungs-Komponente

Die Synthese des verwendeten Polyhydroxylsilans ("Zuckersilan") als hydrophile Stabilisierungs-Komponente erfolgte in Anlehnung an bereits publizierte Herstellungsvorschriften (z. B. PS DE 3600714 C2):
Einer Suspension aus 100,01 g δ-Gluconolacton (M = 178,14 g/mol, 280,7 mmol) in 250 mL absolutem Ethanol wurde eine Lösung aus 62,14 g DYNASILAN^{®} AMEO (M = 221,37 g/mol, 280,7 mmol) in 150 mL absolutem Ethanol unter Rühren zudosiert und kurze Zeit nachgerührt. Zur Vervollständigung der Reaktion wurde die klare Lösung weitere 60 min unter Rückfluss erhitzt. Nach Abdestillieren des Lösemittels am Rotationsverdampfer wurde ein klarer, wasserlöslicher Feststoff als Produkt erhalten.

### Beispiel 5: Hydrophile Silan-Komponente

Als hydrophile Silan-Komponente finden vor allem mit Polyethylenglykol modifizierte Alkoxysilane Verwendung. Als kommerzielle Produkte wurden DYNASILAN^{®} 4140 (4140-A) und Silquest^{®} A-1230 Silane eingesetzt.

### Beispiele 6-12: Zweikomponentige Fluorsilane

Ein Gemisch aus Fluorsilan (aus Beispiel 1), wässriger Salzsäure (1 mol/l), Ethanol, Isopropanol, Silquest^{®} A-1230 Silane, Polyhydroxylsilan (aus Beispiel 4) und Wasser wurde gemäß Tabelle 1 für 1 h bei Raumtemperatur in einem Becherglas gerührt. Als aktivierte Fluorsilan-Mischung wurde eine homogene, farblose Lösung erhalten.

**Tabelle 1: Beispiele 6-12: Zweikomponentige Fluorsilane**

| | **Komponente 1** | | | | **Komponente 2** | | |
|---|---|---|---|---|---|---|---|
| **Bsp_{.}** | **Fluorsilan (Bsp. 1)** | **Ethanol** | **Silquest^{®} A-1230 Silane** | **Polyhydroxylsilan (Bsp. 4)** | **Wasser** | **Salzsäure (1 mol/l)** | **Isopropanol** |
| 6 | 20 g | 980 g | - | | 450 g | 3,4 g | 550 g |
| 7 | 35 g | 965 g | - | | 450 g | 3,4 g | 550 g |
| 8 | 35 g | 965 g | 20,2 g | | 450 g | 3,4 g | 550 g |
| 9 | 35 g | 965 g | 40,8 g | | 450 g | 3,4 g | 550 g |
| 10 | 35 g | 965 g | 20,2 g | 2,02 g | 450 g | 3,4 g | 550 g |
| 11 | 35 g | 965 g | 20,2 g | 4,04 g | 450 g | 3,4 g | 550 g |
| 12 | 25 g | 965 g | 20,2 g | 6,06 g | 450 g | 3,4 g | 550 g |

### Bsp. 13 - 18 Fluorsilane

In einem 500-mL Dreihalsrundkolben mit Innenthermometer, KPG-Rührer und Rückflusskühler wurde ein Gemisch aus Fluowet^{®} EA 612, MPEG und 3-(Triethoxysilyl)propylisocyanat gemäß Tabelle 2 vorgelegt. Nach Zugabe von ca. 0,1 Gew.-% DBTL als Katalysator wurde das Reaktionsgemisch auf 70 °C erhitzt und ca. 2-6 h bis zur vollständigen Umsetzung aller Isocyanatgruppen gerührt. Als Produktgemisch wurden in allen Fällen viskose Flüssigkeiten/Suspensionen mit Rest-NCO-Konzentrationen kleiner 0,2 Gew.-% erhalten. Zur weiteren Stabilisierung wurde dem Gemisch anschließend ein Polyhydroxylsilan gemäß Beispiel 4 zugegeben.

### Beispiel 13 - 18 Fluorsilane

| **Bsp.** | **Silquest^{®} A-Link 25 Silane** | **Daikin A-1820** | **MPEG** | **Polyhydroxylsilan (Bsp. 16)** |
|---|---|---|---|---|
| 13 | 15,14 g (61,2 mmol) | 9,38g (20.2 mmol) | 12,25g MPEG 300 (M= 300 g/mol, 41,0 mmol) | - |
| 14 | 15,14 g (61,2 mmol) | 9,38 g (20.2 mmol) | 12,25 g MPEG 300 (M= 300 g/mol, 41,0 mmol) | 0,37 g (M= 399,51 g/mol, 0,9 mmol) |
| 15 | 15,14 g (61,2 mmol) | 14,20 g (30,6 mmol) | 9,18 g MPEG 300 (M=300 g/mol, 30,6 mmol) | 0,39 g (M= 399,51 g/mol, 1,0 mmol) |
| 16 | 15,14 g(61,2 mmol) | 19,03 g (41,0 mmol) | 6,06 g MPEG 300 (M=300 g/mol, 20,2 mmol) | 0,40 g (M= 399,51 g/mol, 1,0 mmol) |
| 17 | 15,14 g (61,2 mmol) | 19,03 g (41,0 mmol) | 10,1 g MPEG 500 (M=500 g/mol, 20,2 mmol) | 0,89 g (M= 399,51 g/mol, 1,8 mmol) |
| 18 | 15,14 g (61,2 mmol) | 19,03 g (41,0 mmol) | 20,2 g MPEG 1000 (M=1000 g/mol, 20,2 mmol) | 2,72 g (M= 399,51 g/mol, 6,8 mmol) |

### Beispiel 13: Beschichtung

Der Beschichtungsvorgang erfolgte durch Tauchen, Rollen, Pinseln und Einreiben des gereinigten Substrates mit der aktivierten Fluorsilan-Mischung. Nach einer Einwirkzeit von 30 min wurde die Substratoberfläche durch Polieren mit einem weichen Tuch von eingetrockneten Resten gereinigt. Eine gesonderte Nachbehandlung erfolgte nicht.

### Übersicht Komponenten DCO Y

- (A)(i): Fluorsilan-Komponente
- (A)(ii): vorgefertigte Fluorsilan-Komponente
- (B)(i): (Per)fluoralkylalkohol-Komponente
- (B)(ii): (Per)fluoralkylalenaminl-Komponente
- (B)(iii): fluormodifizierte Makromonomere oder Telechele
- (B)(iv): (Per)fluoralkylalkylenisocyanat-Komponente
- (B)(v): (Per)fluoralkylcarbonsäurederivat-Komponente
- (C)(i): Isocyanatoalkylalkoxysilan-Komponente
- (C)(ii): andere Isocyanatosilan-Komponente
- (D)(i): Polyisocyanat-Komponente
- (D)(ii): Polyisocyanat-Komponente
- (E)(i): Aminoalkylalkoxysilan-Komponente
- (E)(ii): andere Aminosilan-Komponente
- (E)(iii): nichtionische Silan-Komponente
- (E)(iv): Aminosilikonöl-Komponente
- (E)(v): niedermolekulare Silan-Komponente
- (E)(vi): hydrophilierte wässrige Silan-Komponente
- (F)(i): monofunktionelle Hexafluorpropenoxid-Komponente
- (F)(ii): difuntionelle Hexafluorpropenoxid-Komponente
- (G)(i): monofunktionelle Polyalkylenglycol-Komponente
- (G)(ii): monofunktionelle Polyalkylenglycol-Komponente
- (G)(iii): polyfunktionelle Polyalkylenglykol-Komponente
- (G)(iv): polyfunktionelle Polyoxyalkylenamin-Komponente
- (H): Triazin-Komponente
- (I): Hydroxycarbonsäure-Komponente
- (J): NCN-Komponente
- (K): Carbonyl-Komponente
- (L)(i): Mercaptoalkylalkoxysilan-Komponente
- (L)(ii): andere Mercaptosilan-Komponente
- (M): (Per)fluoralkylenoxid-Komponente
- (N)(i): Epoxyalkylolalkoxysilan-Komponente
- (N)(ii): andere Epoxysilan-Komponente
- (O): Polyamin-Komponente
- (P)(i): epoxyfunktionelle polyhedrale oligomere Polysilasesquioxan-Komponente
- (P)(ii): aminofunktionelle polyhedrale oligomere Polysilasesquioxan-Komponente
- (P)(iii): (meth)acryloyfunktionelle polyhedrale oligomere Polysilasesquioxan-Komponente
- (Q)(i): Aminoalkohol-Komponente
- (Q)(ii): andere Aminoalkohol-Komponente
- (R): Katalysator-Komponente
- (S)(i): Lösemittel-Komponente
- (S)(ii): Lösemittel-Komponente
- (T): Stabilisierungs-Komponente
- (U)(i): Säure-Komponente
- (U)(ii): Säure-Komponente
- (U)(iii): Säure-Komponente
- (U)(iv): Säure-Komponente
- (V): hydrophile Silan-Komponente
- (W): Neutralisations-Komponente
- (Y)(i): Formulierungs-Komponente
- (Y)(ii): (reaktive) Nanopartikel-Komponente
- (Z): Funktionalisierungs-Komponente

## Patentansprüche

1. Flüssige, fluorhaltige und zweikomponentige Zusammensetzungen mit einem auf das Festharz bezogenen Fluorgehalt von 5 bis 75 Gew.-% für die permanente Oberflächenbehandlung poröser und nicht poröser Substrate, **dadurch** erhältlich, dass man zunächst
a) eine Fluorsilan-Komponente (A)(i) mit einem polymer gebundenen Fluorgehalt von 5 bis 95 Gew.-% und einem polymer gebundenen Siliziumgehalt von 95 bis 5 Gew.-%, **dadurch** herstellt, in dem man
a₁) 5 bis 95 Gew.-% einer (Per)fluoralkylalkohol-Komponente (B)(i) und/oder einer (Per)fluoralkylalkylenamin-Komponente (B)(ii), bestehend aus Perfluoralkylalkoholen mit terminalen Methylen-Gruppen (Kohlenwasserstoff-Spacern) der allgemeinen Formel
CF₃-(CF₂)ₓ-(CH₂)_{y}-O-A_{z}-H
oder
CR₃-(CR₂)ₓ-(CH₂)_{y}-O-A_{z}-H
worin x = 3 - 20, y = 1 - 6, z = 0 - 100, R = unabhängig voneinander H, F, CF₃, A = CRⁱRⁱⁱ-CRⁱⁱⁱR^{iv}-O oder (CRⁱRⁱⁱ)ₐ-O
oder CO-(CRⁱRⁱⁱ)_{b}-O mit Rⁱ, Rⁱⁱ, Rⁱⁱⁱ, R^{iv} = unabhängig
voneinander H, Alkyl, Cycloalkyl, Aryl oder beliebiger organischer Rest mit jeweils1 - 25 C-Atomen, a, b = 3 - 5, wobei
es sich bei der Polyalkylenoxid-Struktureinheit A_{z} um Homopolymere, Copolymere oder Blockcopolymere aus beliebigen Alkylenoxiden oder um Polyoxyalkylenglykole oder um Polylactone handelt,
und/oder
einem Hexafluorpropenoxid (HFPO)-Oligomer-Alkohol der allgemeinen Formel
CF₃-CF₂-CF₂-[O-CF(CF₃)-CF₂]ₓ-O-CF(CF₃)-(CH₂)_{y}-O-A_{z}-H
und/oder
einem fluormodifizierten Makromonomeren oder Telechelen (B)(iii), wie bspw. hydroxyfunktionelle Umsetzungsprodukte der Komponenten (F)(i) und (F)(ii) mit den Komponenten (Q)(i) und (Q)(ii), mit einem polymer gebundenem Fluorgehalt von 1 bis 99 Gew.-%, einer Molekularmasse von 100 bis 10 000 Dalton und jeweils einer oder mehreren reaktiven (cyclo)aliphatischen und/oder aromatischen Hydroxyl-Gruppe(n) und/oder primären und/oder sekundären Amino-Gruppe(n) und/oder MercaptoGruppe(n), enthaltend die in der Hauptkette und/oder Seitenkette intrachenal und/oder lateral und/oder terminal angeordneten Strukturelemente
-(CF₂-CF₂)ₓ-
und/oder
-(CR₂-CR₂)ₓ-
und/oder
-[CF₂-CF(CF₃)-O]ₓ-
und/oder
-(CR₂-CR₂-O)ₓ-
mit 95 bis 5 Gew.-% einer Isocyanatoalkylalkoxysilan-Komponente (C)(i), bestehend aus einem 3-Isocyanatopropyltrialkoxysilan und/oder einem 3-Isocyanatopropylalkoxyalkylsilan und/oder Isocyanatoalkylalkoxysilanen der allgemeinen Formel
OCN-(CR²₂)_{y'}-Si(OR¹)_{3-x'}R²_{x'}
worin x' = 0 - 2, y' = 1 - 3 und R¹, R² = unabhängig voneinander Alkyl, Cycloalkyl, Aryl, beliebiger organischer Rest jeweils mit 1 - 25 C-Atomen
und/oder einer anderen Isocyanatosilan-Komponente (C)(ii) mit einer Molekularmasse von 200 bis 2 000 Dalton und jeweils einer oder mehreren (cyclo-)aliphatischen und/oder aromatischen Isocyanato-Gruppe(n) und einer oder mehreren Alkoxysilan-Gruppe(n), wobei die Umsetzung vorzugsweise im Molverhältnis 1 : 1 in beliebiger Weise durchgeführt wird,
und/oder
a_{2.1}) 5 bis 95 Gew.-% einer (Per)fluoralkylalkohol-Komponente (B)(i) und/oder einer (Per)fluoralkylalkylenamin-Komponente (B)(ii) und/oder von fluormodifizierten Makromonomeren oder Telechelen (B)(iii) mit 75 bis 5 Gew.-% einer Polyisocyanat-Komponente (D)(i), bestehend aus mindestens einem Diisocyanat, Polyisocyanat, Polyisocyanat-Derivat oder Polyisocyanat-Homologen mit zwei oder mehreren (cyclo-)aliphatischen und/oder aromatischen Isocyanat-Gruppen gleicher oder unterschiedlicher Reaktivität umsetzt, wobei die Reaktionsbedingungen und die Selektivitäten der Komponenten (B) und (D) so gewählt werden, dass nur eine Isocyanat-Gruppe der Komponente (D)(i) mit der Komponente (B) reagiert,
a_{2.2}) anschließend das Preaddukt aus Stufe a_{2.1}) mit 75 bis 5 Gew.-% einer Aminoalkylalkoxysilan-Komponente (E)(i), bestehend aus einem 3-Aminopropyltrialkoxysilan und/oder einem (substituierten) 3-Aminopropylalkoxyalkylsilan der allgemeinen Formel
R³₂N―(CR³₂)_{y'}―Si(OR¹)_{3-x'}R²_{x'}
worin x' = 0 - 2, y' = 1 - 6 und R¹, R² = unabhängig voneinander Alkyl, Cycloalkyl, Aryl, beliebiger organischer Rest mit jeweils 1 - 25 C-Atomen, R³ = unabhängig voneinander Alkyl, Cycloalkyl, Aryl, beliebiger organischer Rest mit 1 - 25 C-Atomen, (R¹O)_{3-x'}R²_{x'}Si(CR³₂)_{y'}, R^{3'}₂N―(CR^{3'}₂)_{y'}-[NH―(CR^{3'}₂)_{y'}]_{n'} mit n' = 0 ― 10,
wobei R^{3'} = unabhängig voneinander Alkyl, Cycloalkyl, Aryl, beliebiger organischer Rest mit jeweils 1 - 25 C-Atomen
und/oder einer von (E) (i) verschiedenen Aminosilan-Komponente (E)(ii) mit einer Molekularmasse von 200 bis 2 000 Dalton und jeweils einer oder mehreren primären und/oder sekundären und/oder tertiären Amino-Gruppe(n) und einer oder mehreren Alkoxysilan-Gruppe(n), weiter umsetzt, wobei die Umsetzung vorzugsweise im Molverhältnis 1 : 1 : 1 in beliebiger Weise durchgeführt wird,
und/oder
a₃) 5 bis 95 Gew.-% einer (Per)fluoralkylalkylenisocyanat-Komponente (B)(iv) der allgemeinen Formel
CF₃-(CF₂)ₓ-(CH₂)_{y}-NCO
oder
CR₃-(CR₂)ₓ-(CH₂)_{y}-NCO
mit einer Molekularmasse von 200 bis 2 000 Dalton und einer oder mehreren (cyclo)aliphatischen und/oder aromatischen Isocyanato-Gruppe(n) mit 95 bis 5 Gew.-% einer Aminosilan-Komponente (E)(i) und/oder (E)(ii) umsetzt, wobei ein Addukt der allgemeinen Formel
(B)(iv)-(E)
worin (B)(iv) = protonierte Komponente (B)(iv) und (E) = deprotonierte Komponenten (E)(i) und/oder (E)(i)
erhalten wird, wobei die Umsetzung vorzugsweise im Molverhältnis 1 : 1 in beliebiger Weise durchgeführt wird,
und/oder
a₄) Umsetzungsprodukte mit zwei oder mehreren Hydroxyl-Gruppen aus 5 bis 95 Gew.-% einer (Per)fluoralkylalkancarbonsäure(derivat)-Komponente (B)(v) der allgemeinen Formel
CF₃-(CF₂)ₓ-(CH₂)_{y}-COR⁴
oder
CR₃-(CR₂)ₓ-(CH₂)_{y}-COR⁴
worin R⁴ = F, Cl, Br, I, OH, OMe, OEt
mit einer Molekularmasse von 200 bis 2 000 Dalton und einer oder mehreren Carbonsäure(derivat)-Gruppe(n) mit 95 bis 5 Gew.-% einer Aminosilan-Komponente (E)(i) und/oder (E)(ii),
wobei unter Abspaltung von HR⁴ ein Addukt der allgemeinen Formel
(B)(v)-(E)
worin (B)(v) = Carbonylrest der Komponente (B)(v) und (E) = deprotonierte Komponenten (E)(i) und/oder (E)(i)
erhalten wird und die Umsetzung vorzugsweise im Molverhältnis 1 : 1 in beliebiger Weise durchgeführt wird,
und/oder
a₅) 5 bis 95 Gew.-% einer Hexafluorpropenoxid-Komponente (F)(i), bestehend aus monofunktionellen Hexafluorpropenoxid-Oligomeren der allgemeinen Formel
CF₃-CF₂-CF₂-O-(CF(CF₃)-CF₂-O)ₙ-CF(CF₃)-COR⁴
worin m = 1 - 20
mit 95 bis 5 Gew.-% einer Aminosilan-Komponente (E)(i) und/oder (E)(ii) umsetzt, wobei unter Abspaltung von HR⁴ Addukte der allgemeinen Formel
(F)(i)-(E)
worin (F)(i) = Carbonylrest der Komponente (F)(i)) und (E) = deprotonierte Komponenten (E)(i) und/oder (E)(ii)
erhalten werden und die Umsetzung vorzugsweise im Molverhältnis 1 : 1 in beliebiger Weise durchgeführt wird,
und/oder
a₆) 5 bis 95 Gew.-% einer Hexafluorpropenoxid-Komponente (F)(ii), bestehend aus difunktionellen Hexafluorpropenoxid-Oligomeren der allgemeinen Formel
R⁴OC-CF(CF₃)-(O-CF₂-CF(CF₃))ₙ-O-(CF₂)ₒ-O-
(CF(CF₃)-CF₂-O)ₙ-CF(CF₃)-COR⁴
worin n = 1 - 10, o = 2 - 6
mit 95 bis 5 Gew.-% einer Aminoalkylalkoxysilan-Komponente (E)(i) und/oder einer (E)(ii) umsetzt, wobei unter Abspaltung von HR⁴ Addukte der allgemeinen Formel
(E)-(F)(ii)-(E)
worin (F)(ii) = Carbonylrest der Komponente (F)(i)) und (E) = deprotonierte Komponenten (E)(i) und/oder (E)(ii) erhalten werden und die Umsetzung vorzugsweise im Molverhältnis 1 : 1 in beliebiger Weise durchgeführt wird,
und/oder
a₇) 5 bis 95 Gew.-% einer (Per)fluoralkylalkohol-Komponente (B)(i) und/oder einer (Per)fluoralkylalkylenamin-Komponente (B)(ii) und/oder eines fluormodifizierten Makromonomeren oder Telechelen (B)(iii) mit 75 bis 5 Gew.-% einer Aminoalkylalkoxysilan-Komponente (E)(i) und/oder (E)(ii) und 75 bis 5 Gew.-% einer Polyisocyanat-Komponente (D)(ii), bestehend aus einem Triisocyanat, Polyisocyanat, Polyisocyanat-Derivat oder Polyisocyanat-Homologen mit mindestens drei (cyclo-)aliphatischen und/oder aromatischen Isocyanat-Gruppen gleicher oder unterschiedlicher Reaktivität, umsetzt, wobei die Umsetzung im Falle trifunktioneller Isocyanate vorzugsweise im Molverhältnis 2 : 1 : 1 oder 1 : 2 : 1 in beliebiger Weise durchgeführt wird,
und/oder
a₈) 5 bis 75 Gew.-% einer (Per)fluoralkylalkohol-Komponente (B)(i) und/oder einer (Per)fluoralkylalkylenamin-Komponente (B)(ii) und/oder eines fluormodifizierten Makromonomeren oder Telechelen (B)(iii) mit 50 bis 5 Gew.-% einer Aminoalkylalkoxysilan-Komponente (E)(i) und/oder (E)(ii), 50 bis 5 Gew.-% einer monofunktionellen Polyalkylenglykol-Komponente (G)(i) und/oder einer monofunktionellen Polyoxyalkylenamin-Komponente (G)(ii), bestehend aus monohydroxyfunktionellen Alkyl/Cycloalkyl/Arylpolyethylenglykolen und/oder Alkyl/Cycloalkyl/Aryl-poly-(ethylenoxid-*block*-alkylenoxid) und/oder Alkyl/Cycloalkyl/Aryl-poly-(ethylenoxid-*co*-alkylenoxid) und/oder Alkyl/Cycloalkyl/Aryl-poly-(ethylenoxid-*ran*-alkylenoxid) mit 25 bis 99,9 Gew.-% Ethylenoxid und 0 bis 75 Gew.-% eines weiteren Alkylenoxides mit 3 bis 20 C-Atomen, bestehend aus Propylenoxid, Butylenoxid, Dodecyloxid, Isoamyloxid, Oxetan, substituierten Oxetanen, α-Pinenoxid, Styroloxid, Tetrahydrofuran oder weiteren aliphatischen oder aromatischen Alkylenoxiden mit 4 bis 20 C-Atomen pro Alkylenoxid oder Gemischen daraus, der allgemeinen Formel
R⁵-O-A_{z'}-H
worin z' = 5 - 150, R⁵ = Alkyl, Cycloalkyl, Aryl, beliebiger organischer Rest mit 1 - 25 C-Atomen
und/oder
monoaminofunktionellen Alkyl/Cycloalkyl/Arylpolyethylenglykolen und/oder Alkyl/Cycloalkyl/Aryl-poly-(ethylenoxyid-*block*-alkylenoxid) und/oder Alkyl/Cycloalkyl/Aryl- poly-(ethylenoxid-*co*-alkylenoxid) und/oder Alkyl/Cycloalkyl/Aryl- poly-(ethylenoxid-*ran*-alkylenoxid) mit 25 bis 99,9 Gew.-% Ethylenoxid und 0 bis 75 Gew.-% eines weiteren Alkylenoxides mit 3 bis 20 C-Atomen, bestehend aus Propylenoxid, Butylenoxid, Dodecyloxid, Isoamyloxid, Oxetan, substituierten Oxetanen, α-Pinenoxid, Styroloxid, Tetrahydrofuran oder weiteren aliphatischen oder aromatischen Alkylenoxiden mit 4 bis 20 C-Atomen pro Alkylenoxid oder Gemischen daraus, der allgemeinen Formel
R⁵-O-(CRⁱRⁱⁱ-CRⁱⁱⁱR^{iv}-O)_{z'-1}-CRⁱRⁱⁱ-CRⁱⁱⁱR^{iv}-NH₂
und 50 bis 5 Gew.-% einer Polyisocyanat-Komponente (D)(ii), umsetzt, wobei die Umsetzung im Falle trifunktioneller Isocyanate vorzugsweise im Molverhältnis 1 : 1 : 1 : 1 in beliebiger Weise durchgeführt wird,
und/oder
a₉) 5 bis 95 Gew.-% einer (Per)fluoralkylalkohol-Komponente (B)(i) und/oder einer (Per)fluoralkylalkylenamin-Komponente (B)(ii) und/oder eines fluormodifizierten Makromonomeren oder Telechelen (B)(iii) mit 75 bis 5 Gew.-% einer Aminoalkylalkoxysilan-Komponente (E)(i) und/oder einer (E)(ii) und 75 bis 5 Gew.-% einer Triazin-Komponente (H), bestehend aus Cyanurchlorid bzw. 2,4,6-Trichlor-1,3,5-triazin, umsetzt, wobei die Umsetzung vorzugsweise im Molverhältnis 2 : 1 : 1 oder 1 : 2 : 1 in beliebiger Weise durchgeführt wird,
und/oder
a₁₀) 5 bis 75 Gew.-% einer (Per)fluoralkylalkohol-Komponente (B)(i) und/oder einer (Per)fluoralkylalkylenamin-Komponente (B)(ii) und/oder eines fluormodifizierten Makromonomeren oder Telechelen (B)(iii) mit 50 bis 5 Gew.-% einer Aminoalkylalkoxysilan-Komponente (E)(i) und/oder (E)(ii), 50 bis 5 Gew.-% einer monofunktionellen Polyalkylenglykol-Komponente (G)(i) und/oder einer monofunktionellen Polyoxyalkylenamin-Komponente (G)(ii) und 50 bis 5 Gew.-% einer Triazin-Komponente (H), bestehend aus Cyanurchlorid bzw. 2,4,6-Trichlor-1,3,5-triazin, umsetzt, wobei die Umsetzung vorzugsweise im Molverhältnis 1 : 1 : 1 : 1 in beliebiger Weise durchgeführt wird,
und/oder
a₁₁) 5 bis 75 Gew.-% einer (Per)fluoralkylalkohol-Komponente (B)(i) und/oder einer (Per)fluoralkylalkylenamin-Komponente (B)(ii) und/oder eines fluormodifizierten Makromonomeren oder Telechelen (B)(iii) mit 50 bis 5 Gew.-% einer Aminoalkylalkoxysilan-Komponente (E)(i) und/oder (E)(ii), 50 bis 5 Gew.-% einer polyfunktionellen Polyalkylenglykol-Komponente (G)(iii) und/oder einer polyfunktionellen Polyoxyalkylenamin-Komponente (G)(iv), bestehend aus polyhydroxyfunktionellen Polyethylenglykolen und/oder Poly-(ethylenglykol-*block*-polyalkylenglykol) und/oder Poly-(ethylenglykol-*co*-polyalkylenglykol)) und/oder Poly-(ethylenglykol-*ran*-polyalkylenglykol) mit 25 bis 99,9 Gew.-% Ethylenoxid und 0 bis 75 Gew.-% eines weiteren Alkylenoxides mit 3 bis 20 C-Atomen, bestehend aus Propylenoxid, Butylenoxid, Dodecyloxid, Isoamyloxid, Oxetan, substituierten Oxetanen, α-Pinenoxid, Styroloxid, Tetrahydrofuran oder weiteren aliphatischen oder aromatischen Alkylenoxiden mit 4 bis 20 C-Atomen pro Alkylenoxid oder Gemischen daraus, der allgemeinen Formel
R⁶(-O-A_{z'}-H)_{z"}
worin z" = 2 - 6, R⁶ = Alkyl, Cycloalkyl, Aryl, beliebiger organischer Rest mit 1 - 25 C-Atomen
und/oder
polyaminofunktionellen Polyethylenglykolen und/oder Poly-(ethylenglykol-*block*-polyalkylenglykol) und/oder Poly-(ethylenglykol-*co*-polyalkylenglykol)) und/oder Poly-(ethylenglykol-*ran*-polyalkylenglykol) mit 25 bis 99,9 Gew.-% Ethylenoxid und 0 bis 75 Gew.-% eines weiteren Alkylenoxides mit 3 bis 20 C-Atomen, bestehend aus Propylenoxid, Butylenoxid, Dodecyloxid, Isoamyloxid, Oxetan, substituierten Oxetanen, α-Pinenoxid, Styroloxid, Tetrahydrofuran oder weiteren aliphatischen oder aromatischen Alkylenoxiden mit 4 bis 20 C-Atomen pro Alkylenoxid oder Gemischen daraus, der allgemeinen Formel
R⁶(-O-A_{z'-1}-CRⁱRⁱⁱ-CRⁱⁱⁱR^{iv}-NH₂)_{z"}
und 50 bis 5 Gew.-% einer Polyisocyanat-Komponente (D)(i), wobei die Umsetzung im Falle dihydroxyfunktioneller Glykole vorzugsweise im Molverhältnis 1 : 1 : 1 : 2 in beliebiger Weise durchgeführt wird,
und/oder
a₁₂) 5 bis 75 Gew.-% einer (Per)fluoralkylalkohol-Komponente (B)(i) und/oder einer (Per)fluoralkylalkylenamin-Komponente (B)(ii) und/oder eines fluormodifizierten Makromonomeren oder Telechelen (B)(iii) mit 50 bis 5 Gew.-% einer Aminoalkylalkoxysilan-Komponente (E)(i) und/oder (E)(ii), 50 bis 5 Gew.-% einer Hydroxycarbonsäure-Komponente (I), bestehend aus einer Monohydroxycarbonsäure und/oder einer Dihydroxycarbonsäure mit einer und/oder zwei gegenüber Polyisocyanaten reaktiven Hydroxyl-Gruppe(n) und einer gegenüber Polyisocyanaten inerten Carboxyl-Gruppe, und 50 bis 5 Gew.-% einer Polyisocyanat-Komponente (D)(ii), bestehend aus mindestens einem Triisocyanat, Polyisocyanat, Polyisocyanat-Derivat oder Polyisocyanat-Homologen mit mindestens drei (cyclo)aliphatischen und/oder aromatischen Isocyanat-Gruppen gleicher oder unterschiedlicher Reaktivität, umsetzt, wobei die Umsetzung im Falle trifunktioneller Isocyanate vorzugsweise im Molverhältnis 1 : 1 : 1 : 1 in beliebiger Weise durchgeführt wird,
und/oder
a₁₃) 5 bis 75 Gew.-% einer (Per)fluoralkylalkohol-Komponente (B)(i) und/oder einer (Per)fluoralkylalkylenamin-Komponente (B)(ii) und/oder eines fluormodifizierten Makromonomeren oder Telechelen (B)(iii) mit 50 bis 5 Gew.-% einer Aminoalkylalkoxysilan-Komponente (E)(i) und/oder (E)(ii), 50 bis 5 Gew.-% einer NCN-Komponente (J), bestehend aus Cyanamid mit einer gegenüber Polyisocyanaten reaktiven und NH-aciden Amino-Gruppe, und 50 bis 5 Gew.-% einer Polyisocyanat-Komponente (D)(ii), bestehend aus mindestens einem Triisocyanat, Polyisocyanat, Polyisocyanat-Derivat oder Polyisocyanat-Homologen mit mindestens drei (cyclo)aliphatischen und/oder aromatischen Isocyanat-Gruppen gleicher oder unterschiedlicher Reaktivität, umsetzt, wobei die Umsetzung im Falle trifunktioneller Isocyanate vorzugsweise im Molverhältnis 1 : 1 : 1 : 1 in beliebiger Weise durchgeführt wird,
und/oder
a₁₄) 5 bis 95 Gew.-% einer (Per)fluoralkylalkohol-Komponente (B)(i) und/oder einer (Per)fluoralkylalkylenamin-Komponente (B)(ii) und/oder einer fluormodifizierten Makromonomeren- oder Telechelen-Komponente (B)(iii), 75 bis 5 Gew.-% einer Carbonyl-Komponente (K) der allgemeinen Formel
X-CO-Y
worin X, Y = unabhängig voneinander F, Cl, Br, I, CCl₃, R⁷, OR⁷ mit R⁷ = Alkyl, Cycloalkyl, Aryl, beliebiger organischer Rest mit 1 - 25 C-Atomen, 0 - 10 N-Atomen und 0 - 10 O-Atomen
mit 75 bis 5 Gew.-% einer Aminoalkylalkoxysilan-Komponente (E)(i) und/oder (E)(ii) umsetzt, wobei in der ersten Stufe unter Abspaltung von HX und/oder HY ein Addukt der allgemeinen Formel
(B)-CO-Y und/oder X-CO-(B)
oder
(E)-CO-Y und/oder X-CO-(E)
worin (B) = deprotonierte Komponenten (B)(i) und/oder (B)(ii) und/oder (B)(iii), (E) = deprotonierte Komponenten (E)(i) und/oder
(E)(ii)
und in der zweiten Stufe unter Abspaltung von HX und/oder HY ein Addukt der allgemeinen Formel
(B)-CO-(E)
erhalten wird und die Umsetzung vorzugsweise im Molverhältnis 1 : 1 : 1 in beliebiger Weise durchgeführt wird,
oder
5 bis 95 Gew.-% eines vorgefertigten Addukts der allgemeinen Formel
(B)-CO-Y und/oder X-CO-(B)
mit 95 bis 5 Gew.-% einer Aminoalkylalkoxysilan-Komponente (E)(i) und/oder (E)(ii) umsetzt, wobei wobei unter Abspaltung von HX und/oder HY ein Addukt der allgemeinen Formel
(B)-CO-(E)
erhalten wird und die Umsetzung vorzugsweise im Molverhältnis 1 : 1 in beliebiger Weise durchgeführt wird,
oder
5 bis 95 Gew.-% eines vorgefertigten Addukts der allgemeinen Formel
(E)-CO-Y und/oder X-CO-(E)
mit 95 bis 5 Gew.-% (Per)fluoralkylalkohol-Komponente (B)(i) und/oder einer (Per)fluoralkylalkylenamin-Komponente (B)(ii) und/oder einer fluormodifizierten Makromonomeren- oder Telechelen-Komponente (B)(iii) umsetzt, wobei unter Abspaltung von HX und/oder HY ein Addukt der allgemeinen Formel
(B)-CO-(E)
erhalten wird und die Umsetzung vorzugsweise im Molverhältnis 1 : 1 in beliebiger Weise durchgeführt wird,
und/oder
a₁₅) bei den Umsetzungsprodukten gemäß a₂) bis a₁₄) die Aminoalkylalkoxysilan-Komponente (E)(i) und/oder die Aminosilan-Komponente (E)(ii) durch eine Mercaptooalkylalkoxysilan-Komponente (L)(i) bestehend aus einem 3-Mercaptopropyltrialkoxysilan der allgemeinen Formel
HS-(CR³₂)_{y'}-Si(OR¹)_{3-x'}R²_{x'}
und/oder durch eine andere Mercaptosilan-Komponente (L)(ii) einer Molekularmasse von 200 bis 2 000 Dalton mit einer oder mehreren Mercapto-Gruppe(n) und einer oder mehreren Alkoxysilan-Gruppe(n) ersetzt
und/oder
a₁₆) 5 bis 95 Gew.-% einer (Per)fluoralkylalkylenoxid-Komponente (M) der allgemeinen Formel
CF₃-(CF₂)ₓ-(CH₂)_{y}-CHOCH₂
oder
CR₃-(CR₂)ₓ-(CH₂)_{y}-CHOCH₂
oder
CR₃-(CR₂)ₓ-(CH₂)_{y}-O-CH₂-CHOCH₂
einer Molekularmasse von 200 bis 2 000 Dalton und einer oder mehreren Epoxy-Gruppe(n) mit 95 bis 5 Gew.-% einer Aminosilan-Komponente (E)(i) und/oder (E)(ii) umsetzt, wobei die Umsetzung vorzugsweise im Molverhältnis 1 : 1 oder 1 : 2 in beliebiger Weise durchgeführt wird,
und/oder
a₁₇) 5 bis 95 Gew.-% einer (Per)fluoralkylalkylenoxid-Komponente (M), 75 bis 5 Gew.-% einer Epoxyalkylolalkoxysilan-Komponente (N)(i) und/oder einer von (N) (i) verschiedenen Komponente (N)(ii), bestehend aus einem (substituiertem) 3-Glycidyloxypropyltrialkoxysilan der allgemeinen Formel
CH₂OCH-CH₂-O-(CR³₂)_{y'}-Si(OR¹)_{3-x'}R²_{x'}
mit einer Molekularmasse von 200 bis 2 000 Dalton und einer oder mehreren Epoxy-Gruppe(n) mit 75 bis 5 Gew.-% einer Polyamin-Komponente (O) mit einer Molekularmasse von 60 bis 5000 Dalton und einer oder mehreren gegenüber Epoxid-Gruppen reaktiven (cyclo)aliphatischen und/oder aromatischen primären und/oder sekundären Amino-Gruppe(n) und ggf. einer oder mehreren Hydroxyl-Gruppe(n) umsetzt, wobei die Umsetzung vorzugsweise im Molverhältnis 1 : 1 : 1 oder 2 : 2 : 1 in beliebiger Weise durchgeführt wird,
und/oder
a₁₈) 5 bis 95 Gew.-% einer epoxyfunktionellen polyhedralen oligomeren Polysilasesquioxan-Komponente (POSS) (P)(i) mit einer oder mehreren Epoxy-Gruppen und einer oder mehreren Perfluoralkyl-Gruppen der allgemeinen Formel
(R⁸ᵤR⁹ᵥR¹⁰_{w}SiO_{1.5})ₚ
worin 0 < u < 1, 0 < v < 1, 0 < w < 1, u + v + w = 1, p = 4, 6, 8, 10, 12 und R⁸, R⁹, R¹⁰ = unabhängig voneinander beliebiger anorganischer und/oder organischer und ggf. polymerer Rest mit 1 bis 250 C-Atomen und 0 bis 50 N-und/oder 1 bis 50 O- und/oder 3 bis 100 F- und/oder 0 bis 50 Si- und/oder 0 bis 50 S-Atomen
mit 95 bis 5 Gew.-% einer Aminosilan-Komponente (E)(i) und/oder (E)(ii) umsetzt, wobei die Umsetzung vorzugsweise im Molverhältnis 1 : (>) 1 in beliebiger Weise durchgeführt wird,
und/oder
a₁₉) 5 bis 95 Gew.-% einer aminofunktionellen polyhedralen oligomeren Polysilasesquioxan-Komponente (POSS) (P)(ii) mit einer oder mehreren Amino-Gruppen und einer oder mehreren Perfluoralkyl-Gruppen der allgemeinen Formel
(R⁸ᵤR⁹ᵥR¹⁰_{w}SiO_{1.5})ₚ
mit 95 bis 5 Gew.-% einer Isocyanatoalkylalkoxysilan-Komponente (C)(i) und/oder einer von (C) (i) verschiedenen Komponente (C)(ii) umsetzt, wobei die Umsetzung vorzugsweise im Molverhältnis 1 : (>) 1 in beliebiger Weise durchgeführt wird,
und/oder
a₂₀) 5 bis 95 Gew.-% einer (meth)acryloylfunktionellen polyhedralen oligomeren Polysilasesquioxan-Komponente (POSS) (P)(iii) mit einer oder mehreren (Meth)acryloyl-Gruppen und einer oder mehreren Perfluoralkyl-Gruppen der allgemeinen Formel
(R⁸ᵤR⁹ᵥR¹⁰_{w}SiO_{1.5})ₚ
mit 95 bis 5 Gew.-% einer Aminoalkohol-Komponente (Q)(i) mit einer oder mehreren gegenüber Epoxid-Gruppen reaktiven (cyclo-)aliphatischen und/oder aromatischen primären und/oder sekundären Amino-Gruppe(n) und einer oder mehreren Hydroxyl-Gruppe(n) mit einer Molekularmasse von 60 bis 5000 Dalton und/oder einer anderen Aminoalkohol-Komponente (Q)(ii) umsetzt, wobei die Umsetzung vorzugsweise im Molverhältnis 1 : (>) 1 in beliebiger Weise durchgeführt wird,
oder vorgefertigte Fluorsilane (A)(ii) wie
a₂₁) (Per)fluoralkylalkoxysilane der allgemeinen Formel
CF₃-(CF₂)ₓ-(CH₂)_{y}-Si(OR¹)_{3-x'}R²_{x'}
oder
CR₃-(CR₂)ₓ-(CH₂)_{y}-Si(OR¹)_{3-x'}R²_{x'}
und/oder
a₂₂) andere Umsetzungsprodukte, enthaltend die Strukturelemente
-(CF₂-CF₂)ₓ-
und/oder
-(CR₂-CR₂)ₓ-
und/oder
-[CF₂-CF(CF₃)-O]ₓ-
und/oder
-(CR₂-CR₂-O)ₓ-
sowie
-Si(OR¹)_{3-x'}R²_{x'}
einsetzt,
und 0,1 bis 100 Gewichtsteilen einer Stabilisierungs-Komponente (T), bestehend aus den
C_{1.1}) Umsetzungsprodukten aus 5 bis 95 Gew.-% einer Aminoalkohol-Komponente (Q)(i) und/oder einer anderen Aminoalkohol-Komponente (Q)(ii) und 95 bis 5 Gew.-% einer Isocyanatosilan-Komponente (C)(i) und/oder (C)(ii), wobei die Umsetzung vorzugsweise im Molverhältnis 1 : 1 in beliebiger Weise durchgeführt wird,
und/oder
c_{1.2}) Umsetzungsprodukten aus 5 bis 75 Gew.-% einer Aminoalkohol-Komponente (Q)(i) und/oder einer anderen Aminoalkohol-Komponente (Q)(ii), 75 bis 5 Gew.-% einer Aminosilan-Komponente (E)(i) und/oder (E)(ii) und 75 bis 5 Gew.-% einer Polyisocyanat-Komponente (D)(i), wobei die Umsetzung vorzugsweise im Molverhältnis 1 : 1 : 1 in beliebiger Weise durchgeführt wird,
und/oder
c_{1.3}) Umsetzungsprodukten aus 5 bis 95 Gew.-% einer Hydroxycarbonsäure-Komponente (1) und 95 bis 5 Gew.-% einer Isocyanatosilan-Komponente (C)(i) und/oder (C)(ii), wobei die Umsetzung vorzugsweise im Molverhältnis 1 : 1 in beliebiger Weise durchgeführt wird,
und/oder
c_{1.4}) Umsetzungsprodukten aus 5 bis 75 Gew.-% einer Hydroxycarbonsäure-Komponente (I), 75 bis 5 Gew.-% einer Aminosilan-Komponente (E)(i) und/oder (E)(ii) und 75 bis 5 Gew.-% einer Polyisocyanat-Komponente (D)(i), wobei die Umsetzung vorzugsweise im Molverhältnis 1 : 1 : 1 in beliebiger Weise durchgeführt wird,
und/oder
c_{1.5}) Umsetzungsprodukten aus 5 bis 95 Gew.-% einer NCN-Komponente (J) und 95 bis 5 Gew.-% einer Isocyanatosilan-Komponente (C)(i) und/oder (C)(ii), wobei die Umsetzung vorzugsweise im Molverhältnis 1 : 1 in beliebiger Weise durchgeführt wird,
und/oder
c_{1.6}) Umsetzungsprodukten aus 5 bis 75 Gew.-% einer NCN-Komponente (J), 75 bis 5 Gew.-% einer Aminosilan-Komponente (E)(i) und/oder (E)(ii) und 75 bis 5 Gew.-% einer Polyisocyanat-Komponente (D)(i), wobei die Umsetzung vorzugsweise im Molverhältnis 1 : 1 : 1 in beliebiger Weise durchgeführt wird,
und/der
c_{1.7}) Umsetzungsprodukten aus 5 bis 95 Gew.-% einer Aminosilan-Komponente (E)(i) und/oder (E)(ii) und 95 bis 5 Gew.-% einer Säure-Komponente (U)(i), bestehend aus ungesättigten Carbonsäuren, wobei die Umsetzung vorzugsweise im Molverhältnis 1 : > 1 in beliebiger Weise durchgeführt wird,
und/oder
c_{1.8}) Umsetzungsprodukten aus 5 bis 95 Gew.-% einer Aminosilan-Komponente (E)(i) und/oder (E)(ii) und 95 bis 5 Gew.-% einer Säure-Kompoente (U)(ii), bestehend aus ungesättigten Carbonsäureanhydriden, wobei die Umsetzung vorzugsweise im Molverhältnis 1 : >1 in beliebiger Weise durchgeführt wird,
und/oder
c_{1.9}) Umsetzungsprodukten aus 5 bis 95 Gew.-% einer Aminosilan-Komponente (E)(i) und/oder (E)(ii) und 95 bis 5 Gew.-% einer Säure-Komponente (U)(iii), bestehend aus γ- und/oder δ-Lactonen von Onsäuren bzw. Zuckersäuren bzw. Polyhydroxy(di)carbonsäuren bzw. Polyhydroxycarbonsäurealdehyden, wobei die Umsetzung im Falle von Monolactonen vorzugsweise im Molverhältnis 1 : 1 und im Falle von Dilactonen vorzugsweise im Molverhältnis 2 : 1 in beliebiger Weise durchgeführt wird und hydrophile Silane der allgemeinen Formel
(E)-CO-[CH(OH)₄]-CH₂OH
und/oder
(E)-CO-[CH(OH)₄]-CHO
und/oder
(E)-CO-[CH(OH)₄]-CO-(E)
erhalten werden,
wobei die Umsetzungsprodukte gemäß c_{1.1}) bis c_{1.9}) 0 bis 10 Gewichtsteile einer Katalysator-Komponente (R), 0 bis 250 Gewichtsteile einer Lösemittel-Komponente (S)(i) und 0 bis 250 Gewichtsteile einer Lösemittel-Komponente (S)(ii) enthalten,
und 0,1 bis 100 Gewichtsteilen einer hydrophilen Silan-Komponente (V), bestehend aus
c_{1.10}) einer nichtionischen Silan-Komponente (E)(iii) der allgemeinen Formel
R¹¹-O-A_{z'}-(CH₂)_{y'}-Si(OR¹)_{3-x'}R²_{x'}
und/oder
HO-A_{z'}-(CH₂)_{y'}-Si(OR¹)_{3-x'}R²_{x'}
worin R¹¹ = Alkyl, Cycloalkyl, Aryl, beliebiger organischer Rest mit jeweils 1 - 25 C-Atomen darstellt
und/oder
c_{1.11}) den Umsetzungsprodukten aus 5 bis 95 Gew.-% einer monofunktionellen Polyalkylenglykol-Komponente (G)(i) und/oder einer monofunktionellen Polyoxyalkylenamin-Komponente (G)(ii) und/oder einer polyfunktionellen Polyalkylenglykol-Komponente (G)(iii) und/oder einer polyfunktionellen Polyoxyalkylenamin-Komponente (G)(iv) und 95 bis 5 Gew.-% einer Isocyanatosilan-Komponente (C)(i) und/oder (C)(ii), wobei die Umsetzung im Falle monohydroxy- oder monoaminofunktioneller Glykole vorzugsweise im Molverhältnis 1 : 1 in beliebiger Weise durchgeführt wird,
und/oder
c_{1.12}) den Umsetzungsprodukten aus 5 bis 75 Gew.-% einer monofunktionellen Polyalkylenglykol-Komponente (G)(i) und/oder einer monofunktionellen Polyoxyalkylenamin-Komponente (G)(ii) und/oder einer polyfunktionellen Polyalkylenglykol-Komponente (G)(iii) und/oder einer polyfunktionellen Polyoxyalkylenamin-Komponente (G)(iv), 75 bis 5 Gew.-% einer Aminosilan-Komponente (E)(i) und/oder (E)(ii) und 75 bis 5 Gew.-% einer Polyisocyanat-Komponente (D)(i), wobei die Umsetzung im Falle monohydroxy- oder monoaminofunktioneller Glykole vorzugsweise im Molverhältnis 1 : 1 : 1 in beliebiger Weise durchgeführt wird,
und/oder
c_{1.13}) den Umsetzungsprodukten aus 5 bis 95 Gew.-% einer Polyoxyalkylenamin-Komponente (G)(ii) und/oder einer polyfunktionellen Polyoxyalkylenamin-Komponente (G)(iv) und 95 bis 5 Gew.-% einer Epoxyalkylolalkoxysilan-Komponente (N)(i) und/oder einer von (N) (i) verschiedenen Epoxysilan-Komponente (N)(ii), wobei die Umsetzung im Falle monoaminofunktioneller Glykole vorzugsweise im Molverhältnis 1 : 1 oder 1 : 2 in beliebiger Weise durchgeführt wird,
und/oder
c_{1.14}) den Umsetzungsprodukten aus 5 bis 75 Gew.-% einer monofunktionellen Polyalkylenglykol-Komponente (G)(i) und/oder einer monofunktionellen Polyoxyalkylenamin-Komponente (G)(ii), 50 bis 5 Gew.-% einer Aminosilan-Komponente (E)(i) und/oder (E)(ii) und 50 bis 5 Gew.-% einer Polyisocyanat-Komponente (D)(ii), wobei die Umsetzung im Falle trifunktioneller Isocyanate vorzugsweise im Molverhältnis 1 : 2 : 1 oder 2 : 1 : 1 in beliebiger Weise durchgeführt wird,
und/oder
c_{1.15}) den Umsetzungsprodukten aus 5 bis 75 Gew.-% einer monofunktionellen Polyalkylenglykol-Komponente (G)(i) und/oder einer monofunktionellen Polyoxyalkylenamin-Komponente (G)(ii), 50 bis 5 Gew.-% einer Aminosilan-Komponente (E)(i) und/oder (E)(ii) und 50 bis 5 Gew.-% einer Triazin-Komponente (H), bestehend aus Cyanurchlorid bzw. 2,4,6-Trichlor-1,3,5-triazin, wobei die Umsetzung vorzugsweise im Molverhältnis 1 : 2 : 1 oder 2 : 1 : 1 in beliebiger Weise durchgeführt wird,
wobei die Umsetzungsprodukte gemäß c_{1.10}) bis c_{1.15}) 0 bis 10 Gewichtsteile einer Katalysator-Komponente (R), 0 bis 250 Gewichtsteile einer Lösemittel-Komponente (S)(i) und 0 bis 250 Gewichtsteile einer Lösemittel-Komponente (S)(ii) enthalten,
mit 0,25 bis 25 Gewichtsteilen Wasser (partiell) hydrolysiert bzw. silanolisiert,
c₂) ggf. das (aminofunktionelle) Addukt mit 0 bis 75 Gewichtsteilen einer Säure-Komponente (U)(iv) oder mit 0 bis 75 Gewichtsteilen einer anderen Neutralisations-Komponente (W) teilweise oder vollständig neutralisiert,
c₃) ggf. den freigesetzten Alkohol und/oder die Lösemittel-Komponenten (S)(i) und/oder (S)(ii) vor, während oder nach der Umsetzung durch Destillation teilweise oder vollständig entfernt,
d) 50 bis 950 Gewichtsteile einer Mischung aus 0,1 bis 300 Gewichtsteilen der Fluorsilan-Komponente (A) aus den Stufen a) oder b), ggf. 0,004 bis 120 Gewichtsteile der Stabilisierungs-Komponente (T) aus der Stufe c), ggf. 0,004 bis 120 Gewichtsteile der hydrophilen Silan-Komponente (V) aus Stufe c), wobei die Lösemittel-Komponenten (S)(i) und/oder (S)(i) vor, während oder nach der Umsetzung bzw. Mischung durch Desillation teilweise oder vollständig entfernt und ggf. die Katalysator-Komponente (R) vor, während oder nach der Umsetzung bzw. Mischung durch geeignete Absorbtionsmaterialien oder andere Maßnahmen teilweise oder vollständig entfernt werden, so dass maximal 0 bis 1,2 Gewichtsteile einer Katalysator-Komponente (R), 0 bis 50 Gewichtsteile einer Lösemittel-Komponente (S)(i) und 999,892 bis 288,8 Gewichtsteile einer Lösemittel-Komponente (S)(ii) anwesend sind, mit 950 bis 50 Gewichtsteilen einer Aktivator-Komponente (X), enthaltend 0,01 bis 10 Gew.-% einer Säure-Komponente (U)(v), 0 bis 99,999 Gew.-% eine Lösemittelkomponente (S)(ii) und/oder 0 bis 99,99 Gew.-% Wasser, umsetzt,
e) wobei ggf. während oder nach den Stufen a) und/oder b) und/oder c) und/oder d) in beliebiger Weise 0 bis 50 Gewichtsteile bzw. 0 bis 60 Gewichtsteile einer Formulierungs-Komponente (Y)(i) zugesetzt und/oder 0 bis 50 Gewichtsteile bzw. 0 bis 60 Gewichtsteile einer Funktionalisierungs-Komponente (Z), bestehend aus
e₁) einer Aminosilikonöl-Komponente (E)(iv) der allgemeinen Formel
HO-[Si(CH₃)₂-O]_{c}-Si(CH₃)[(CH₂)₃NH(CH₂)₂NH₂]-
O-[Si(CH₃)₂-O]_{c}-H
oder
R'O-[Si(CH₃)₂-O]_{c}-Si(CH₃)[(CH₂)₃NH(CH₂)₂NH₂]-
O-[Si(CH₃)₂-O]_{c}-R'
oder
(H₃CO)₂Si[(CH₂)₃NH(CH₂)₂NH₂]-[Si(CH₃)₂-O]_{c}-
Si[(CH₂)₃NH(CH₂)₂NH₂](OCH₃)₂
worin c = 1 - 100 und R' = H, Me, Et
und/oder
e₂) einer niedermolekularen Silan-Komponente (E)(v) der allgemeinen Formel
R¹²-Si(OR¹)_{3-x'}R²_{x'}
worin R¹² = OR¹, R², unabhängig voneinander Alkyl, Cycloalkyl, Aryl, beliebiger organischer Rest mit 1 - 25 C-Atomen
und/oder
e₃) einer hydrophilierten wässrige Silan-Komponente (E)(vi) bestehend aus (alkoholfreien) Aminosilan-Hydrolysaten und/oder (di/tri)amino/alkylfunktionellen Siloxan-Co-Oligomeren und/oder amino/vinylfunktionellen Siloxan-Co-Oligomeren und/oder epoxyfunktionellen Siloxan-Co-Oligomeren
und/oder
e₄) einer (reaktiven) Nanopartikel-Komponente (Y)(ii), bestehend aus anorganischen und/oder organischen Nanopartikeln oder Nanokompositen in Form von Primärteilchen und/oder Aggregaten und/oder Agglomeraten, wobei die Nanopartikel ggf. hydrophobiert und/oder dotiert und/oder gecoatet und zusätzlich mit reaktiven Amino- und/oder Hydroxyl- und/oder Mercapto- und/oder Isocyanato- und/oder Epoxy- und/oder Methacryloyl- und/oder Silan-Gruppen der allgemeinen Formel -Si(OR¹)_{3-x'}R²_{x'} oberflächenmodifiziert sein können,
zugesetzt und/oder mit umgesetzt werden.

2. Zusammensetzungen nach Anspruch 1, **dadurch gekennzeichnet, dass** als Komponente (C)(i)
3-Isocyanatopropyltrimethoxysilan und/oder
3-Isocyanatopropyltriethoxysilan eingesetzt wird.

3. Zusammensetzungen nach einem der Ansprüche 1 oder 2, **dadurch gekennzeichnet, dass** als Komponente (D)(i) Isophorondiisocyanat und/oder Toluendiisocyanat eingesetzt wird.

4. Zusammensetzungen nach einem der Ansprüche 1 bis 3, **dadurch gekennzeichnet, dass** als Komponente (D)(ii) ein ggf. hydrophil modifiziertes Trimer von 1,6-Diisocyanatohexan eingesetzt wird.

5. Zusammensetzungen nach einem der Ansprüche 1 bis 4, **dadurch gekennzeichnet, dass** als Komponente (E)(i) 3-Aminopropyltrimethoxysilan und/oder 3-Aminopropyltriethoxysilan und/oder N-(2-Aminoethyl)-3-aminopropyltrimethoxysilan und/oder N-(2-Aminoethyl)-3-aminopropyltriethoxysilan und/oderN-[N'-(2-Aminoethyl)-2-aminoethyl]-3-aminopropyltrimethoxysilan und als Komponente (E)(iii) Silane der allgemeinen Formel
H₃C-O-(CH₂CH₂-O)_{z'}-(CH₂)₃-Si(OR¹)₃
worin z' = 5 -15 und R¹ = Me, Et
eingesetzt werden.

6. Zusammensetzungen nach einem der Ansprüche 1 bis 5, **dadurch gekennzeichnet, dass** als Komponente (I) Citronensäure und/oder Hydroxypivalinsäure und/oder Dimethylolpropionsäure eingesetzt wird.

7. Zusammensetzungen nach einem der Ansprüche 1 bis 6, **dadurch gekennzeichnet, dass** als Komponente (K) Phosgen und/oder Chlorameisensäureethylester und/oder Diethylcarbonat und/oder Chloroformiate bzw. Phosgen-Derivate der Komponenten (B)(i) und/oder (B)(ii) und/oder (B)(iii) und/oder Carbamate der Komponenten (E)(i) und/oder (E)(ii) eingesetzt werden.

8. Zusammensetzungen nach einem der Ansprüche 1 bis 7, **dadurch gekennzeichnet, dass** als Komponente (L)(i) 3-Mercaptopropyltrimethoxysilan und/oder 3-Mercaptopropyltriethoxysilan eingesetzt wird.

9. Zusammensetzungen nach einem der Ansprüche 1 bis 8, **dadurch gekennzeichnet, dass** als Komponente (M) 4,4,5,5,6,6,7,7,8,8,9,9,9-Tridecafluornonen-1,2-oxid und/oder 4,4,5,5,6,6,7,7,8,8,9,9,10,10,11,11,11-Heptadecafluorundecen-1,2-oxid eingesetzt wird.

10. Zusammensetzungen nach einem der Ansprüche 1 bis 9, **dadurch gekennzeichnet, dass** als Komponente (N)(i) 3-Glycidyloxypropyltrimethoxysilan und/oder 3-Glycidyloxypropyltriethoxysilan eingesetzt wird.

11. Zusammensetzungen nach einem der Ansprüche 1 bis 10, **dadurch gekennzeichnet, dass** als Komponente (O) Ethylendiamin eingesetzt wird.

12. Zusammensetzungen nach einem der Ansprüche 1 bis 11, **dadurch gekennzeichnet, dass** als Komponente (Q) Diethanolamin und/oder Diisopropanolamin und/oder Trimethylolmethylamin und/oder Aminozucker eingesetzt wird.

13. Zusammensetzungen nach einem der Ansprüche 1 bis 12, **dadurch gekennzeichnet, dass** als Komponente (R) Dibutylzinnoxid und/oder Dibutylzinndilaurat (DBTL) und/oder Triethylamin und/oder Zinn(II)-octoat und/oder 1,4-Diaza-bicyclo[2,2,2]octan (DABCO) und/oder 1,4-Diazabicyclo[3,2,0]-5-nonen (DBN) und/oder 1,5-Diaza-bicyclo[5,4,0]-7-undecen (DBU) und/oder Morpholin-Derivate wie z. B. JEFFCAT^{®} Amine Catalysts eingesetzt werden.

14. Zusammensetzungen nach einem der Ansprüche 1 bis 13, **dadurch gekennzeichnet, dass** als Komponente (S)(i) Aceton und/oder Butanon und/oder N-Methyl-2-pyrrolidon und/oder N-Ethyl-2-pyrrolidon und/oder Dipropylenglykoldimethylether (Proglyde DMM^{®}) eingesetzt werden.

15. Zusammensetzungen nach einem der Ansprüche 1 bis 14, **dadurch gekennzeichnet, dass** als Komponente (S)(ii) Methanol und/oder Ethanol und/oder 2-Propanol eingesetzt werden.

16. Zusammensetzungen nach einem der Ansprüche 1 bis 15 **dadurch gekennzeichnet, dass** als Komponente (U)(i) Acrylsäure eingesetzt wird.

17. Zusammensetzungen nach einem der Ansprüche 1 bis 16 **dadurch gekennzeichnet, dass** als Komponente (U)(ii) Maleinsäureanhydrid eingesetzt wird.

18. Zusammensetzungen nach einem der Ansprüche 1 bis 17 **dadurch gekennzeichnet, dass** als Komponente (U)(ii) D-Gluconolacton eingesetzt wird.

19. Zusammensetzungen nach einem der Ansprüche 1 bis 18 **dadurch gekennzeichnet, dass** als Komponente (U)(iv) Ameisensäure eingesetzt wird-.

20. Zusammensetzungen nach einem der Ansprüche 1 bis 18 **dadurch gekennzeichnet, dass** als Komponente (U)(v) Salzsäure eingesetzt wird.

21. Zusammensetzungen nach einem der Ansprüche 1 bis 20 **dadurch gekennzeichnet, dass** als Komponente (W) Triethylamin eingesetzt wird.

22. Zusammensetzungen nach einem der Ansprüche 1 bis 21 **dadurch gekennzeichnet, dass** als Komponente (Y)(i) (funktionalisierte) anorganische und/oder organische Füllstoffe und/oder Leichtfüllstoffe, (funktionalisierte) anorganische und/oder organische Pigmente, (funktionalisierte) anorganische und/oder organische Trägermaterialien, anorganische und/oder organische Fasern, Graphit, Ruß, Kohlefasern, Kohlenstoff-Nanoröhren (Carbon Nanotubes), Metallfasern und -pulver, leitfähige organische Polymere, weitere Polymere und/oder redispergierbare Polymer-Pulver, Superabsorber, weitere anorganische und/oder organische Verbindungen, Entschäumer, Entlüfter, Gleit- und Verlaufadditive, Substratnetzadditive, Netz- und Dispergieradditive, Hydrophobierungsmittel, Rheologieadditive, Koaleszenzhilfsmittel, Mattierungsmittel, Haftvermittler, Frostschutzmittel, Antioxidantien, UV-Stabilisatoren, Biozide, Wasser, Lösemittel, Katalysatoren eingesetzt werden.

23. Zusammensetzungen nach einem der Ansprüche 1 bis 22 **dadurch gekennzeichnet, dass** als Komponente (Y)(ii) (reaktive) Nanopartikel auf Basis von Siliziumdioxid und/oder Titandioxid und/oder Zinkoxid eingesetzt werden, wobei die Nanopartikel in fester Form und/oder in Form von Dispersionen und/oder Pasten vorliegen.

24. Zusammensetzungen nach einem der Ansprüche 1 bis 23 **dadurch gekennzeichnet, dass** mindestens 50 Gew. % der gesamten Komponente (Y)(ii) eine Partikelgröße von maximal 500 nm (Norm: DIN 53206-1, Prüfung von Pigmenten; Teilchengrößenanalyse, Grundbegriffe) haben und die Gesamtheit der Partikel, die diese Partikelgröße von maximal 500 nm aufweisen eine spezifische Oberfläche (Norm: DIN 66131, Bestimmung der spezifischen Oberfläche von Feststoffen durch Gasadsorption nach *Brunauer, Emmet und Teller* (BET)) von 10 bis 200 m²/g haben.

25. Zusammensetzungen nach einem der Ansprüche 1 bis 24 **dadurch gekennzeichnet, dass** mindestens 70 Gew. %, bevorzugt mindestens 90 Gew. % der gesamten Komponente (Y)(ii) eine Partikelgröße von 10 bis 300 nm (Norm: DIN 53206-1, Prüfung von Pigmenten; Teilchengrößenanalyse, Grundbegriffe) haben und die Gesamtheit der Partikel, die diese Partikelgröße von 10 bis 300 nm aufweisen, eine spezifische Oberfläche (Norm: DIN 66131, Bestimmung der spezifischen Oberfläche von Feststoffen durch Gasadsorption nach *Brunauer, Emmet und Teller* (BET)) von 30 bis 100 m²/g haben.

26. Zusammensetzungen nach einem der Ansprüche 1 bis 25, **dadurch gekennzeichnet, dass** die Komponenten (Y)(i) und (Y)(ii) in beschichteter und/oder mikroverkapselter und/oder trägerfixierter und/oder hydrophilierter und/oder lösemittelhaltiger Form vorliegen und ggf. retardiert freigesetzt werden.

27. Verfahren zur Herstellung von fluorhaltigen Zusammensetzungen nach einem der Ansprüche 1 bis 26, **dadurch gekennzeichnet, dass** man
a) eine Fluorsilan-Komponente (A)(i) durch Umsetzung der Komponenten
a₁) (B)(i), (B)(ii), (B)(iii) und (C) und/oder
a₂) (B)(i), (B)(ii), (B)(iii), (D)(i), (E)(i) und (E)(ii) und/oder
a₃) (B)(iv), (E)(i) und (E)(ii) und/oder
a₄) (B)(v), (E)(i) und (E)(ii) und/oder
a₅) (F)(i), (E)(i) und (E)(ii) und/oder
a₆) (F)(ii), (E)(i) und (E)(ii) und/oder
a₇) (B)(i), (B)(ii), (B)(iii), (E)(i), (E)(ii) und (D)(ii) und/oder
a₈) (B)(i), (B)(ii), (B)(iii), (E)(i), (E)(ii), (G)(i), (G)(ii) und (D)(ii) und/oder
a₉) (B)(i), (B)(ii), (B)(iii), (E)(i), (E)(ii) und (H) und/oder
a₁₀) (B)(i), (B)(ii), (B)(iii), (E)(i), (E)(ii), (G)(i), (G)(ii) und (H) und/oder
a₁₁) (B)(i), (B)(ii), (B)(iii), (E)(i), (E)(ii), (G)(iii), (G)(iv) und (D)(i) und/oder
a₁₂) (B)(i), (B)(ii), (B)(iii), (E)(i), (E)(ii), (I) und (D)(ii) und/oder
a₁₃) (B)(i), (B)(ii), (B)(iii), (E)(i), (E)(ii), (J) und (D)(ii) und/oder
a₁₄) (B)(i), (B)(ii), (B)(iii), (E)(i), (E)(ii) und (K) und/oder
a₁₅) gemäß a₂) bis a₁₄), wobei die Komponenten (E)(i) und E(ii) durch die Komponenten (L)(i) und (L)(ii) ersetzt werden und/oder
a₁₆) (M), (E)(i) und (E)(ii) und/oder
a₁₇) (M), (N)(i), (N)(ii) und (O) und/oder
a₁₈) (P)(i), (E)(i) und (E)(ii) und/oder
a₁₉) (P)(ii), (C)(i) und (C)(ii) und/oder
a₂₀) (P)(iii), (Q)(i) und (Q)(ii)
herstellt
oder gemäß a₂₁) bis a₂₂) vorgefertigte Fluorsilane (A)(ii) einsetzt,
wobei neben der reinen Fluorsilan-Komponente (A) ggf. eine Katalysator-Komponente (R) und ggf. eine Lösemittel-Komponente (S)(i) anwesend sind, anschließend
c_{1.9}) (E)(i), (E)(ii) und (U)(iii),
herstellt,
wobei neben der reinen Stabilisierungs-Komponente (T) ggf. eine Katalysator-Komponente (R), ggf. eine Lösemittel-Komponente (S)(i) und ggf. eine Lösemittel-Komponente (S)(ii) anwesend sind,
und einer hydrophilen Silan-Komponente (V), bestehend ausdurch
c_{1.10}) (E)(iii) und/oder Umsetzungsprodukten der Komponenten
c_{1.11}) (G)(i), (G)(ii), (G)(iii), (G)(iv), (C)(i) und (C)(ii) und/oder
c_{1.12}) (G)(i) und (G)(ii) (G)(iii) (G)(iv), (E)(i) (E)(ii) und (D)(i) und/oder
c_{1.13} (G)(ii), (G)(iv), (N)(i) und (N)(ii) und/oder
c_{1.14}) (G)(i), (G)(ii), (E)(i), (E)(ii) und (D)(ii) und/oder
c_{1.15}) (G)(i), (G)(ii), (E)(i), (E)(ii) und (H),
herstellt,
wobei neben der reinen hydrophilen Silan-Komponente (V) ggf. eine Katalysator-Komponente (R), ggf. eine Lösemittel-Komponente (S)(i) und ggf. eine Lösemittel-Komponente (S)(ii) anwesend sind,
mit Wasser (partiell) hydrolysiert bzw. silanolisiert,
c₂) das (aminofunktionelle) Addukt mit einer Säure-Komponente (U)(iv) oder mit einer anderen Neutralisations-Komponente (W) teilweise oder vollständig neutralisiert,
c₃) ggf. den freigesetzten Alkohol und/oder die Lösemittel-Komponenten (S)(i) und/oder (S)(ii) vor, während oder nach der Umsetzung durch Destillation teilweise oder vollständig entfernt,
d) die Fluorsilan-Komponente (A) aus den Stufen a) oder b), die Stabilisierungs-Komponente(T) und die hydrophile Silan-Komponente (V) aus der Stufe c), wobei die Lösemittel-Komponente (S)(i) und/oder (S)(ii) vor, während oder nach der Umsetzung bzw. Mischung durch Destillation teilweise oder vollständig entfernt und ggf. die Katalysator-Komponente (R) aus der Stufe c) vor, während oder nach der Umsetzung bzw. Mischung durch geeignete Absorbtionsmaterialien oder andere Maßnahmen teilweise oder vollständig entfernt werden, so dass maximal 0 bis 1,2 Gewichtsteile einer Katalysator-Komponente (R), 0 bis 50 Gewichtsteile einer Lösemittel-Komponente (S)(i) und 999,892 bis 288,8 Gewichtsteile einer Lösemittel-Komponente (S)(ii) anwesend sind, mit einer Aktivator-Komponente (X), enthaltend eine Säure-Komponente (U)(v), ggf. eine Lösemittel-Komponente (S)(ii) und/oder Wasser, umsetzt,
e) wobei ggf. während oder nach den Stufen a) und/oder b) und/oder c) und/oder d) eine Formulierungs-Komponente (Y)(i) zugesetzt und/oder eine Funktionalisierungs-Komponente (Z), bestehend aus den Komponenten
e₁) (E)(iv) und/oder
e₂) (E)(v) und/oder
e₃) (E)(vi) und/oder
e₄) (Y)(ii),
zugesetzt und/oder mit umgesetzt werden.

28. Verfahren nach Anspruch 27, **dadurch gekennzeichnet, dass** man die Komponenten (A)(i) aus Reaktionstufe a) und (V) aus Reaktionsstufe c) simultan herstellt bzw. abmischt.

29. Verfahren nach Anspruch 28, **dadurch gekennzeichnet, dass** man die Reaktionsstufen c) und d) oder b), c) und d) in beliebiger Weise und Abfolge kombiniert.

30. Verfahren nach einem der Ansprüche 27 bis 29, **dadurch gekennzeichnet, dass** man in Stufe b₃) zusätzlich eine (partielle) Umesterung der Alkoxysilan-Gruppen der Fluorsilan-Komponente (A) mit einer alkoholischen Lösemittel-Komponente (S)(ii) durchführt.

31. Verfahren nach einem der Ansprüch 27 bis 30, **dadurch gekennzeichnet, dass** man den freigesetzten Alkohol und/oder die Lösemittel-Komponenten (S)(i) und/oder (S)(ii) in der Stufe c₃) durch, ggf. azeotrope, Destillation entfernt anschließend oder gleichzeitig wieder zugibt.

32. Verfahren nach einem der Ansprüche 27 bis 31, **dadurch gekennzeichnet, dass** man die Säure-Komponente (U)(iv) in der Stufe c) zusammen mit dem Wasser vorlegt.

33. Verfahren nach einem der Ansprüche 27 bis 32, **dadurch gekennzeichnet, dass** die fluorhaltigen Zusammensetzungen bzw. (per)fluoralkylfunktionellen Organosilane gemäß den Reaktionsstufen a) und b) in einkomponentiger Form eingesetzt werden.

34. Verfahren nach einem der Ansprüche 27 bis 33, **dadurch gekennzeichnet, dass** die fluorhaltigen Zusammensetzungen bzw. (per)fluoralkylfunktionellen Organosiloxan-Prekondensate bzw. (per)fluoralkylfunktionellen Organosiloxan-Kondensate gemäß den Reaktionsstufen c) und d) in einkomponentiger Form eingesetzt werden.

35. Verfahren nach einem der Ansprüche 27 bis 34, **dadurch gekennzeichnet, dass** die fluorhaltigen Zusammensetzungen bzw. (per)fluoralkylfunktionellen Organosilane gemäß der Reaktionsstufe e) in zweikomponentiger Form eingesetzt werden.

36. Verfahren nach einem der Ansprüche 27 bis 35 **dadurch gekennzeichnet, dass** man die Reaktionsstufe a) bei einer Temperatur von 40 bis 120 °C, vorzugsweise bei 50 bis 110 °C durchführt.

37. Verfahren nach einem der Ansprüche 27 bis 36, **dadurch gekennzeichnet, dass** man die Reaktionsstufen b) bis e) bei einer Temperatur von 20 bis 120 °C, vorzugsweise bei 50 bis 110 °C durchführt.

38. Verfahren nach einem der Ansprüche 27 bis 37, **dadurch gekennzeichnet, dass** man das Equivalentverhältnis von Fluoratomen und Stickstoffatomen in den Umsetzungsprodukten der Stufen c) und d) auf 1 : 50 bis 50 : 1, vorzugsweise auf 1 : 25 bis 25 : 1 und besonders bevorzugt auf 1 : 12,5 bis 12,5 : 1 einstellt.

39. Verfahren nach einem der Ansprüche 27 bis 38, **dadurch gekennzeichnet, dass** man das Equivalentverhältnis von Alkoxysilan-Gruppen und Wasser in Stufe c) auf 1 : 10 bis 10 : 1, vorzugsweise auf 1 : 5 bis 5 : 1 einstellt.

40. Verfahren nach einem der Ansprüche 27 bis 39, **dadurch gekennzeichnet, dass** man das Molverhältnis von Siliziumatomen und Wasser in Stufe c) auf 1 : 10 bis 10 : 1, vorzugsweise auf 1 : 5 bis 5 : 1 und besonders bevorzugt auf 1 : 1,5, einstellt.

41. Verfahren nach einem der Ansprüche 27 bis 40, **dadurch gekennzeichnet, dass** der Festkörpergehalt der fluorhaltigen Zusammensetzungen bestehend aus den Komponenten (A), (Y)(i) und (Z) in den Reaktionsstufen a) und b) auf 5 bis 100 Gew.-%, vorzugsweise auf 100 Gew.-% eingestellt wird.

42. Verfahren nach einem der Ansprüche 27 bis 41 **dadurch gekennzeichnet, dass** der Festkörpergehalt der fluorhaltigen Zusammensetzungen bestehend aus den Komponenten (A), (E), (U)(iv), (T), (V), (Y)(i) und (Z) in Reaktionsstufe c) auf 25 bis 100 Gew.-%, vorzugsweise auf 50 bis 100 Gew.-% eingestellt wird.

43. Verfahren nach einem der Ansprüche 27 bis 42 **dadurch gekennzeichnet, dass** der Festkörpergehalt der fluorhaltigen Zusammensetzungen bestehend aus den Komponenten (A), (E), (U)(iv), (T), (V), (Y)(i) und (Z) in Reaktionsstufe d) auf 0,001 bis 100 Gew.-%, vorzugsweise auf 0,5 bis 50 Gew.-% und besonders bevorzugt auf 1 bis 15 Gew.-% eingestellt wird.

44. Verfahren nach einem der Ansprüche 27 bis 43, **dadurch gekennzeichnet, dass** der pH-Wert der fluorhaltigen Zusammensetzungen in den Reaktionsstufen c) und d) auf 1 bis 14, vorzugsweise auf 2 bis 6 und besonders bevorzugt auf 3 bis 5 eingestellt wird.

45. Verfahren nach einem der Ansprüche 27 bis 44 **dadurch gekennzeichnet, dass** die Viskosität (Brookfield) der fluorhaltigen Zusammensetzungen in den Reaktionsstufen c) und d) auf 1 bis 100 mPa·s eingestellt wird.

46. Verwendung der fluorhaltigen Zusammensetzungen nach einem der Ansprüche 1 bis 45 im Bau- oder Industriebereich zur permanenten öl-, wasser- und schmutzabweisenden Oberflächenbehandlung bzw. - modifizierung von Untergründen und insbesondere mineralischen und nichtmineralischen Untergründen, wie z. B.
• Anorganische Oberflächen,
wie z. B. poröse und nichtporöse, saugende und nichtsaugende, raue und polierte Baumaterialien und Bauwerkstoffe aller Art auf Basis von Zement (Beton, Mörtel), Kalk, Gips, Anhydrit, Geopolymeren, Kieselsäure und Silikaten, Kunststein (wie z. B. Granit, Marmor, Sandstein, Schiefer, Serpentin), Naturstein, Ton, Zement sowie Emaille, Füllstoffe und Pigmente, Glas und Glasfasern, Keramik, Metalle und Metalllegierungen,
• Organische Oberflächen,
wie z. B. Gewebe und Textilien, Holz und Holzwerkstoffe, Gummi, Holzfurnier, glasfaserverstärkte Kunststoffe (GFK), Kunststoffe, Leder und Kunstleder, Naturfasern, Papier, Polymere aller Art,
• Verbundmaterialien aller Art, ggf. mit nanoskaligen Bestandteilen.

47. Verwendung nach Anspruch 46 im on-site und/oder off-site-Bereich von Bau und Industrie, wie z. B. für die Anwendungen
• Hydrophobierung und Oleophobierung
• Antigraffiti
• Antisoiling
• Easy-To-Clean
• Low Dirt Pick-Up
• nanostrukturierte Oberflächen mit Lotus-Effect®
• Bautenschutz
• Korrosionsschutz
• Abdichtungen
• Beschichtungen
• Imprägnierungen
• Versiegelungen, insbesondere zur permanenten öl-, wasser- und schmutzabweisenden Oberflächenbehandlung oder- modifizierung.

48. Verwendung der nach Anspruch 46 für die Anwendungsgebiete
• Additive für Lack- und Beschichtungssysteme
• Automobil- und Kraftfahrzeugindustrie
• Betonfertigteile
• Betonformteile
• Ortbeton
• Spritzbeton
• Transportbeton
• Dachziegel
• Elektro- und Elektronikindustrie
• Farben und Lacke
• Fliesen und Fugen
• Gewebe und Textilien
• Glasfassaden und Glasoberflächen
• Holzbe- und verarbeitung (Furniere, Imprägnierung).
• Keramik und Sanitärkeramik
• Kleb- und Dichtstoffe
• Korrosionsschutz
• Kunststofffolien
• Lärmschutzwände
• Lederzurichtung
• Oberflächenmodifizierung von Füllstoffen, Pigmenten, Nanopartikeln
• Papier- und Pappebeschichtung
• Putze und Dekorputze
• Wärmedämmverbundsysteme (WDVS) und Wärmedämmsysteme (WDS)
• Zementfaserplatten

49. Verwendung nach Anspruch 46 zur Massenhydrophobierung/- oleophobierung von Betonmassen und Betonerzeugnissen, wie z. B.
• Baustellenbeton
• Betonerzeugnisse (Betonfertigteile, Betonwaren, Betonwerksteine)
• Ortbeton
• Spritzbeton
• Transportbeton.

50. Verwendung nach Anspruch 46 als Monomere bzw. Makromonomere für Sol-Gel-Systeme.

51. Verwendung nach einem der Ansprüche 46 bis 50, **dadurch gekennzeichnet, dass** das Beschichtungssystem in einer Menge von 0,00001 bis 1 kg pro m² der zu beschichtenden Fläche und pro Arbeitsgang eingesetzt wird.

52. Verwendung nach einem der Ansprüche 46 bis 51, **dadurch gekennzeichnet, dass** die (per-)fluoralkylfunktionellen Organosiloxan-Prekondensate bzw. (per-)fluoralkylfunktionellen Organosiloxan-Kondensate gemäß den Reaktionsstufen c) und d) mit HVLP-Technologie appliziert werden.
